(19) Europäisches Patentamt
European Patent Office
Office européen des brevets

(11) EP 1 719 635 A1

(12) **EUROPEAN PATENT APPLICATION**
published in accordance with Art. 158(3) EPC

(43) Date of publication:
**08.11.2006 Bulletin 2006/45**

(21) Application number: **05710740.1**

(22) Date of filing: **25.02.2005**

(51) Int Cl.:
***B41M 5/26*** (2006.01) ***C09B 67/22*** (2006.01)

(86) International application number:
**PCT/JP2005/003190**

(87) International publication number:
**WO 2005/082637 (09.09.2005 Gazette 2005/36)**

(84) Designated Contracting States:
**DE GB**

(30) Priority: **26.02.2004 JP 2004052421**

(71) Applicants:
- **MITSUBISHI CHEMICAL CORPORATION Tokyo 108-0014 (JP)**
- **Mitsubishi Kagaku Media Co., Ltd. Tokyo 108-0014 (JP)**

(72) Inventors:
- **MIYAZAWA, Takashi, Mitsubishi Kagaku Media Co.Ltd. Tokyo 108-0014 (JP)**
- **KUBO, Hideyuki, Mitsubishi Kagaku Media Co., Ltd. Tokyo 108-0014 (JP)**
- **NAGANO, Hideki, Hitachi Maxell, Ltd. Ibaraki-shi, Osaka 567-8567 (JP)**
- **OTA, Hironori, Hitachi Maxell, Ltd. Ibaraki-shi, Osaka 567-8567 (JP)**

(74) Representative: **HOFFMANN EITLE Patent- und Rechtsanwälte Arabellastrasse 4 81925 München (DE)**

# (54) OPTICAL RECORDING MATERIAL AND OPTICAL RECORDING MEDIUM

(57) The present invention provides a high level optical recording material which is capable of recording and reading by a blue laser with a short wavelength. An optical recording material comprises an organic dye compound A whose absorption maximum wavelength (λmax) is not less than 340 nm and not more than 440 nm and a metal-complex compound B whose absorption maximum wavelength (λmax) is not less than 500 nm and not more than 900 nm, the content of the organic dye compound A is higher than the content of the metal-complex compound B, and light resistance x determined by a predetermined method is not less than 30%.

EP 1 719 635 A1

## Description

Technical Field

The present invention relates to an optical recording material and so on, more specifically an optical recording material and so on usable with blue laser.

Background Art

Presently, various optical recording media such as CD-R/RW, DVD-R/RW, MO, which can store large volumes of information and allow easy random access, are widely recognized and spread as external storage for information processor such as a computer. Among these, organic-dye optical recording media typically represented by CD-R and DVD-R are considered to have an advantage in respect of low cost and easiness of production.
In addition, increase in recording density of a medium is desired due to multiplication of the volume of information to be handled. In late years, high-density recordable and playable optical recording media using a laser beam having a short emission wavelength (herein below referred to as short wavelength) remarkable in development such as blue laser has been proposed.

However, generally in the case of optical recording media marketed as CD-R, DVD-R or the like, for example, CD-R is designed to be suitable for recording and reading by a laser beam of wavelength around 780 nm, and DVD-R to be suitable for recording and reading by laser beam of wavelength around 600 nm to 700 nm. Such optical recording media suitable for optical recording and reading with a laser beam of a comparatively long wavelength have a problem that the reflectance is too low to allow recording and reading when recording and reading are performed with a laser beam with a shorter wavelength.

Therefore, as for organic dye compounds used for the recording layer of the optical recording medium suitable for recording and reading by laser beam with such a short wavelength, dyes having absorption properties at a shorter wavelength than that of the laser beams which has been conventionally used has been studied and optical recording medium which uses such a dye for the recording layer has been reported (see Patent Document 1). In addition, there is a report on an optical recording medium in which a carbostyryl compound of a specific molecular structure is contained in the recording layer (see Patent Document 2, Patent Document 3).

Patent Document 1: Japanese Patent Laid-Open No. 2001-096918 Patent Document 2: Japanese Patent Laid-Open No. 2001-287466 Patent Document 3: Japanese Patent Laid-Open No. 2003-127542

Disclosure of the Invention

Problems to be Solved by the Invention

In the meantime, as for the ability demanded for a dye for recording used in optical recording media utilizing blue laser, various abilities such as recording sensitivity, film coating properties when applied on a substrate, storage stability, light resistance are demanded not to mention recording properties when formed into a disc in addition to the above-mentioned reflectance. However, a dye for recording by blue laser satisfying these properties at the same time has not been realized.

Methods of mixing an additive having a property to supplement properties in an arbitrary ratio with a dye are studied in CD-R, DVD-R or the like in order to improve the recording properties of such a recording layer.

However, the most suitable additive and the addition amount for improving recording properties without damaging the recording sensitivity of an organic dye compound used for the recording layer of an optical recording medium which is suitable for recording and reading by laser beam with a short wavelength have not been found, and organic-dye optical recording media satisfying film coating properties when coated on a substrate, preservation stability, light resistance and so on at a high level has not been realized.

The present invention has been made in order to solve the problems in developing optical recording materials used for such an optical recording medium and the like which utilize a blue laser. In particular, the present invention has been made to achieve light resistance of 30% or more even in case where many conventional dyes for recording by a blue laser have, for example, a light resistance under 30% by itself.

That is, an object of the present invention is to provide a high level optical recording material which is capable of recording and reading by a short wavelength such as the blue laser.
Another object of the present invention is to provide an optical recording medium which is capable of recording and reading by a short wavelength such as the blue laser.

Means for Solving the Problems

The present inventors have performed intensive studies and consequently found that an optical recording material which satisfies light resistance and so on at a high level can be obtained by combining a compound having a high sensitivity to blue laser and absorption maximum in a wavelength from 340 nm to 440 nm with a specific metallic complex, and achieved the present invention based on this finding.
That is, according to the present invention, an optical recording material comprising an organic dye compound A whose absorption maximum wavelength (λmax) is not less than 340 nm and not more than 440 nm and a metal-complex compound B whose absorption maximum wavelength (λmax) is not less than 500 nm and not more than 900 nm, the content of the organic dye compound A is higher than the content of the metal-complex compound B, and a light resistance x calculated by the following formula is 30% or more can be provided.

$$\text{Light resistance } x = \{(I_1/I_0) \times 100\}$$

wherein, $I_0$ is the absorbance at the absorption maximum present in the wavelength range from 340 nm to 440 nm in the absorption spectrum of a film of a mixture of the organic dye compound A and the metal-complex compound B measured by a spectrophotometer; and $I_1$ is the absorbance at the absorption maximum present in the wavelength range from 340 nm to 440 nm in the absorption spectrum, measured by the spectrophotometer, of the film of the mixture of the organic dye compound A and the metal-complex compound B after a light irradiation treatment.
As for the above-mentioned the organic dye compound A in the optical recording material to which the present invention is applied, when the light resistance x = { $(I_{A1}/I_{A0}) \times 100$} calculated with the absorbance ($I_{A0}$) of the absorption maximum present in the wavelength range from 340 nm to 440 nm in the absorption spectrum of the film measured by the spectrophotometer and the absorbance ($I_{A1}$) of the absorption maximum present in the wavelength range from 340 nm to 440 nm in the absorption spectrum, measured by the spectrophotometer, of the film of the organic dye compound A after a light irradiation treatment is less than 30%, the effect of the present invention is more definitely exhibited.
Here, the above-mentioned light resistance x is preferably calculated by the following operation steps:
(Operation steps)
(Step 1) Spin-coating a transparent substrate with a solution containing the organic dye compound A and the metal-complex compound B, then drying to prepare a dye coated disc;
(Step 2) Measuring the absorption spectrum of the dye coated disc prepared in the (Step 1) at the wavelength of 300 nm to 900 nm with the spectrophotometer, and determining $I_0$ as the absorbance at the absorption maximum present in the wavelength range from 340 nm to 440 nm;
(Step 3) Subjecting the dye coated disc prepared in the (Step 1) to a light irradiation treatment of irradiating with a xenon lamp at 250 W/m$^2$ for 8 hours, then measuring the absorption spectrum under the same condition as in (Step 2), and determining $I_1$ as the absorbance at the absorption maximum present in the wavelength range from 340 nm to 440 nm; and (Step 4) Calculating $\{(I_1/I_0) \times 100\}$ based on the ($I_0$) at the (Step 2) and the ($I_1$) at the (Step 3).
Here, the "solution" at Step 1 means solid contents of the organic dye compound A and the metal-complex compound B dissolved in a dye solution whose absorbance of absorption maximum is 0.1 to 1.0.
It is enabled in the optical recording material to which the present invention is applied that the weakness of light resistance of the organic dye compound A is supplemented by containing the metal-complex compound B in the organic dye compound A having the absorption maximum wavelength (λmax) in not less than 340 nm and not more than 440 nm. This may be given by the factors that there is a case where the light resistance is improved by coordination of a metal as compared with the case without the coordination and that, in the first place, the light resistance of the metal-complex compound B is strong.
In addition, it is considered, in particular in a short wavelength region of the present invention, that the metal-complex compound B has a weak absorption band around the absorption maximum wavelength (λmax) of the organic dye compound A and the absorption band shields or masks the light deterioration of the absorption band of the organic dye compound A. The "weak absorption band" is considered to be a weak absorption which is derived from a metal ion and has a small interaction with ligands and a weak absorption band of ligands. If the absorption band is optically or thermally stable, it is still preferable.
In addition, for example, it is considered that even if the organic dye compound A has a structure which is easy to crystallize when it is used alone, the metal-complex compound B takes a more bulky steric structure than the organic dye compound A and therefore it can be improved in film coating properties by making the film in amorphous state by the appropriately dispersed organic dye compound B.
It is preferable that such the metal-complex compound B is an azo metal-complex compound or an indoaniline metal-complex compound from the viewpoints of light resistance or film coating properties.

In the optical recording material to which the present invention is applied, when the azo metal-complex compound is characterized in that it is a metal-complex compound with an azo compound represented by the following general formula (I) and a metal ion, recording properties such as film coating properties when applied on a substrate, preservation stability, light resistance and recording sensitivity can be improved.

[Chem. 1]

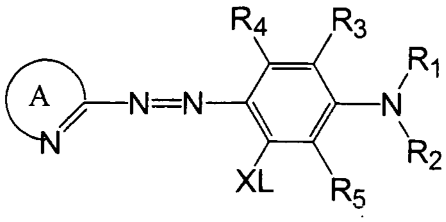

······( I )

(In the formula (I), ring A is a nitrogen-containing heterocyclic aromatic ring formed with a carbon atom and a nitrogen atom, and XL represent a substituent in which X becomes an anion and capable of coordinating to a metal ion when L is eliminated; $R_1$ and $R_2$ each independently represent a hydrogen atom, a linear or branched alkyl group, a cyclic alkyl group, an aralkyl group or an alkenyl group, or each may form a condensed ring with an adjacent substituent group or with each other; $R_3$, $R_4$ and $R_5$ each independently represent a hydrogen atom or a linear or branched alkyl group having 1 to 12 carbon atoms, a cyclic alkyl group having 3 to 12 carbon atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, a monocyclic saturated heterocyclic group, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfinyl group represented by $-SOR_{44}$, a sulfamoyl group represented by $-SO_2NR_{45}R_{46}$, a sulfonic acid ester group represented by $-SO_3R_{47}$ or a sulfonamide group represented by $-NHSO_2R_{48}$ (wherein $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group)).

In the azo compound represented by the above-mentioned general formula (I), those in which ring A represents a 5-or 6-membered monocyclic or bicyclic fused nitrogen-containing heterocyclic aromatic ring, XL represents a hydroxy group, a sulfonate group, acylamino group, sulfonamide group, mercapto group, a carboxyl group, $R_1$ and $R_2$ each independently represent a linear or branched alkyl group having 1 to 12 carbon atoms, a cyclic alkyl group having 3 to 12 carbon atoms, an aralkyl group having 7 to 12 carbon atoms, or each may form a saturated condensed ring with an adjacent substituent group or with each other, $R_3$, $R_4$ and $R_5$ each independently represent a hydrogen atom or a linear or branched alkyl group having 1 to 8 carbon atoms, an aralkyl group having 7 to 12 carbon atoms, a linear or branched alkoxy group having 1 to 8 carbon atoms, a linear or branched alkylthio group having 1 to 8 carbon atoms, a monocyclic 5-or 6-membered-ring saturated heterocyclic group, a halogen atom, a nitro group, a cyano group, a mercapto group, a hydroxy group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfamoyl group represented by $-SO_2NR_{45}R_{46}$ or a sulfonamide group represented by $-NHSO_2R_{48}$.

In addition, in the optical recording material to which the present invention is applied, it is preferable that the indoaniline metal-complex compound is a metal-complex compound comprising a compound represented by the following general formula (II) and a metal ion and an arbitrary anion.

[Chem. 2]

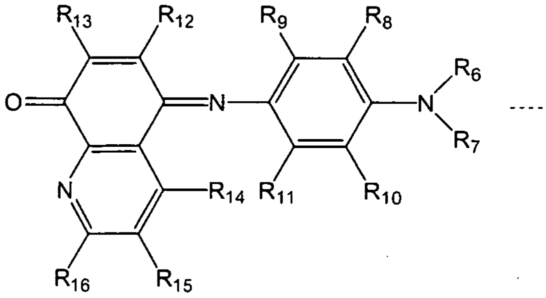

------ (II)

(In the formula (II), $R_6$ and $R_7$ each independently represent a hydrogen atom, a linear or branched alkyl group, a cyclic alkyl group, an aralkyl group, an alkenyl group, or each may form a condensed ring with an adjacent substituent group or with each other; $R_8$ to $R_{16}$ each independently represent a hydrogen atom or a linear or branched alkyl group having 1 to 12 carbon atoms, a cyclic alkyl group having 3 to 12 carbon atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, a saturated or unsaturated heterocyclic group, an aryl group having 6 to 18 carbon atoms, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, sulfinyl group represented by $-SOR_{44}$, a sulfamoyl group represented by $-SO_2NR_{45}R_{46}$, a sulfonic acid ester group represented by $-SO_3R_{47}$ or a sulfonamide group represented by $-NHSO_2R_{48}$ (wherein $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group)).

It is preferable that arbitrary anion to be used in the optical recording material to which the present invention is applied is a monovalent monodentate ligand.

In addition, it is preferable that the metal-complex compound B is a metal-complex compound having a divalent or trivalent transition metal ion. Furthermore, it is preferable that such a transition metal is selected from the group consisting of nickel, cobalt, copper, iron, zinc, platinum, palladium and manganese.

Next, it mentioned that the organic dye compound A in the optical recording material to which the present invention is applied is a compound selected from a γ-pyrone organic dye, a γ-thiopyrone organic dye, a γ-1,1-dioxothiopyrone organic dye, a γ-pyridone organic dye, a coumalin organic dye, a carbostyryl organic dye and a 1-thiocoumarin organic dye.

Examples of the γ-pyrone organic dye in the optical recording material to which the present invention is applied include organic dyes selected from compounds represented by the following general formulae (III) and (IV) (generally in the following general formulae (III) and (IV), one in which Z = O is referred to as pyrone, one in which Z = S is referred to as thiopyrone, one in which Z = $SO_2$ is referred to as dioxothiopyrone, one in which Z = N is referred to as pyridone.).

[Chem. 3]

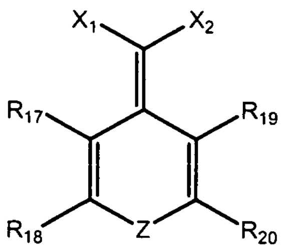

(III)

[Chem. 4]

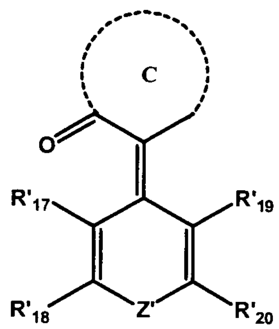

(IV)

(In the formula (III) or (IV), $R_{17}$ to $R_{20}$ and $R_{17'}$ to $R_{20'}$ each independently represent a hydrogen atom or a linear or branched alkyl group having 1 to 12 carbon atoms, a cyclic alkyl group having 3 to 12 carbon atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, a saturated or unsaturated heterocyclic group, an aryl group having 6 to 18 carbon atoms, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfinyl group represented by $-SOR_{44}$, a sulfamoyl group represented by $-SO_2NR_{45}R_{46}$, a sulfonic acid ester group represented by $-SO_3R_{47}$ or a sulfonamide group represented by $-NHSO_2R_{48}$ (wherein $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group.

Here, $R_{17}$ and $R_{18}$, $R_{19}$ and $R_{20}$, $R_{17}$ and $R_{18}$', $R_{19}$' and $R_{20}$' may be condensed with each other to form a hydrocarbon ring or a heterocyclic structure and the hydrocarbon ring and the heterocycles may have substituent), $X_1$ is an electron-withdrawing group, and $X_2$ is a hydrogen atom or -Q-Y (Q is a direct bond, an alkylene group having 1 or 2 carbon atoms, an arylene group or a heteroarylene group, and Y is an electron-withdrawing group, and the alkylene group, the arylene group, the heteroarylene group may have arbitrary substituent groups besides Y), ring C is a carbocyclic ketone ring or a heterocyclic ketone ring which may have a substituent group along with C = O; Z and Z' each represent -O-, -S-, $-SO_2-$, $-NR_{21}-$ (wherein $R_{21}$ is a hydrogen atom, a hydrocarbon group which may be substituted, a heterocyclic group which may be substituted, a cyano group, a hydroxy group), an amino group represented by $-NR_{22}R_{23}$ (wherein $R_{22}$ and $R_{23}$ each independently represent a hydrogen atom, a hydrocarbon group or a heterocyclic group) or an acyl group represented by $-COR_{24}$ ($R_{24}$ is a hydrocarbon group or a heterocyclic group) or $-COR_{25}$ ($R_{25}$ is a hydrocarbon group or a heterocyclic group).

In addition, in the optical recording material to which the present invention is applied, coumalin organic dye (X = O in the following structure formula), carbostyryl organic dye (X = $NR_{33}$ in the following structure formula), 1-thiocoumarin organic dye (X = S in the following structure formula) include compounds represented by the following general formula (V).

[Chem. 5]

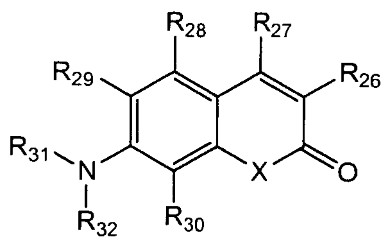

--- [V]

(In the formula (V), X represents -O -, -S -, $-NR_{33}-$; $R_{26}$, $R_{27}$, $R_{28}$, $R_{29}$, and $R_{30}$ each independently represent

a hydrogen atom or a linear or branched alkyl group having 1 to 12 carbon atoms, a cyclic alkyl group having 3 to 12 carbon atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, an aryl group having 6 to 18 carbon atoms, a saturated or unsaturated heterocyclic group, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfinyl group represented by $-SOR_{44}$, a sulfamoyl group represented by $-SO_2R_{45}R_{46}$, or a sulfonamide group represented by $-NHSO_2R_{47}$.

$R_{31}$, $R_{32}$ $R_{33}$ each independently represent a hydrogen atom, a linear or branched alkyl group, a cyclic alkyl group, an aralkyl group, a linear or branched alkenyl group, an acyl group, two adjacent among $R_{26}$ to $R_{33}$ may be linked to form a saturated hydrocarbon ring or a saturated heterocycle.) (wherein $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group.).

It is preferable in the above-mentioned general formula (V) that X is -O-, $-NR_{33}-$, and $R_{26}$, $R_{27}$, $R_{28}$, $R_{29}$, $R_{30}$ each independently represent a hydrogen atom or a linear or branched alkyl group having 1 to 8 carbon atoms, a cyclic alkyl group having 3 to 8 carbon atoms, an aralkyl group having 7 to 12 carbon atoms, a linear or branched alkoxy group having 1 to 8 carbon atoms, a linear or branched alkylthio group having 1 to 8 carbon atoms, an aryl group having 6 to 12 carbon atoms, a saturated or unsaturated heterocyclic monocyclic or bicyclic fused ring group, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, or a sulfonamide group represented by $-NHSO_2R_{48}$.

Among the above-mentioned general formula (V), those having the structure in which $R_{31}$, $R_{32}$, $R_{33}$ each independently represent a linear or branched alkyl group having 1 to 12 carbon atoms, a cyclic alkyl group having 3 to 12 carbon atoms, or an aralkyl group having 7 to 18 carbon atoms, and one or both of $R_{29}$ and $R_{31}$ and $R_{30}$ and $R_{32}$ may form a saturated hydrocarbon ring or a saturated heterocycle are preferable.

In addition, it is preferable in the optical recording material to which the present invention is applied that the metal-complex compound B is a compound which prevents crystallization of the organic dye compound A.

Furthermore, it is preferable that the decomposition starting temperature of the metal-complex compound B is not more than the decomposition starting temperature of the organic dye compound A.

Next, according to the present invention, an optical recording medium characterized in that it has a substrate and a recording layer provided on the substrate and capable of recording or reading by light irradiation, and in that the recording layer contains the optical recording material mentioned above is provided.

It is preferable that the light used for recording or reading of the information in the optical recording medium is a laser beam with wavelength of 350 nm to 530 nm.

In addition, it is preferable that measurement of the film thickness of the recording layer and control of the film thickness are performed by measuring absorption intensity of the metal-complex compound B of optical recording material contained in the recording layer.

The "absorption maximum wavelength" (λmax) in the optical recording material to which the present invention is applied refers to the wavelength of the absorption maximum measured in a chloroform solution or a methanol solution, and it suffices that the absorption maximum wavelength (λmax) in either of the solutions is in the range not less than 340 nm and not more than 440 nm or not less than 500 nm and not more than 900 nm. It is considered that the absorption maximum of the optical recording material in case where it is a spin-coated film varies by around -10 nm to 10 nm from the value measured in a chloroform solution or a methanol solution.

In addition, the "absorption maximum" mentioned in the testing method of the present invention means an absorption maximum when the optical recording material is formed into the film as stated above. The "absorption spectrum" in the present invention means the "absorption spectrum which is measured when a sample has been formed into a film". The method of "forming a sample into a film" includes, for example, a method of preparing a "dye coated disc" in the operation steps to calculate light resistance x mentioned above.

## Advantages of the Invention

Thus, according to the present invention, a high level optical recording material which is capable of recording and reading by a blue laser with a short wavelength is provided. Best Mode for Carrying Out the Invention

The best mode for carrying out the present invention (herein below referred to as embodiment (s) of the invention.) is described in detail below. The present invention, however, is not limited to the following embodiments of

the invention and can be modified in various ways and carried out within the scope of the gist thereof. In addition, the drawings are used to explain the embodiments of the invention and do not express the real dimension.
The optical recording material to which embodiments of the invention is applied contains the organic dye compound A whose absorption maximum wavelength (λmax) is not less than 340 nm and not more than 440 nm and the metal-complex compound B whose absorption maximum wavelength (λmax) is not less than 500 nm and not more than 900 nm, the content of the organic dye compound A is higher than the content of the metal-complex compound B, and such content is adjusted to make light resistance x calculated by the following formula 30% or more.
$$\text{Light resistance } x = \{(I_1/I_0) \times 100\}$$

wherein, $I_0$ is the absorbance at the absorption maximum present in the wavelength range from 340 nm to 440 nm in the absorption spectrum of a film of a mixture of the organic dye compound A and the metal-complex compound B measured by a spectrophotometer; and $I_1$ is the absorbance at the absorption maximum present in the wavelength range from 340 nm to 440 nm in the absorption spectrum, measured by the spectrophotometer, of the film of the mixture of the organic dye compound A and the metal-complex compound B to a light irradiation treatment.
Here, the above-mentioned light resistance x can be calculated by the following operation steps:
(Operation steps)
(Step 1) Spin-coating a transparent substrate with a solution containing the organic dye compound A and the metal-complex compound B, then drying to prepare a dye coated disc;
(Step 2) Measuring absorption spectrum of the dye coated disc prepared in the (Step 1) at the wavelength of 300 nm to 900 nm by the spectrophotometer, and determining $I_0$ as the absorbance at the absorption maximum present in the wavelength range from 340 nm to 440 nm;
(Step 3) Subjecting the dye coated disc prepared in (Step 1) to a light irradiation treatment of irradiating with a xenon lamp at 250 $W/m^2$ for 8 hours, then measuring the absorption spectrum under the same condition as in (Step 2), and determining $I_1$ as the absorbance at the absorption maximum present in the wavelength range from 340 nm to 440 nm; and (Step 4) Calculating $\{(I_1/I_0) \times 100\}$ based on the ($I_0$) at the (Step 2) and the ($I_1$) at the (Step 3).
Such procedure as above enables (a) to improve recording properties such as recording sensitivity, (b) to improve light resistance and further (c) to improve film coating properties when coated on a substrate of the optical recording medium.
In addition, if the absorption maximum wavelength (λmax) of the organic dye compound A is not less than 340 nm and not more than 440 nm, it has appropriate absorption in the wavelength region of a blue laser. On this account an optical recording medium having a recording sensitivity usable with a blue laser can be obtained by using the organic dye compound A. If the absorption maximum wavelength (λmax) of the organic dye compound A exceeds this range, there may arise problems that the absorption is too little to perform sufficient recording, or the absorption is too large to obtain sufficient reflectivity.
With regard to (a), the metal-complex compound B to be used in the embodiment of the invention needs to have absorption maximum wavelength (λmax) in visible light to near infrared regions such as usually 500 nm or more, preferably 550 nm or more, preferably 620 nm or more, more preferably 680 nm or more, and usually 900 nm or less, preferably 850 nm or less, more preferably 800 nm or less so as not to affect the absorption spectrum of the organic dye compound A which directly participates in recording and reading. In addition, as for the dye content weight ratio, it should be that the organic dye compound A > the metal-complex compound B. Otherwise ingredients of different wavelengths will affect recording properties, and recording properties may be poor. The content of the metal-complex compound B is 40% or less by weight, preferably 35% or less by weight, and still more preferably 30% or less by weight assuming the total amount of the organic dye compound A and the metal-complex compound B as 100% by weight in total.
In addition, it is considered that if the metal-complex compound B has absorption in such a visible light region, the light of this region is absorbed by the metal-complex compound B and optical damages to the organic dye compound A is reduced, and the purpose of (b) can be achieved.
As above, the metal-complex compound B is made contained at first to reduce the optical damages of the organic dye compound A. Specifically, the metal-complex compound B is made contained so that light resistance x measured by the above testing method may be 30% or more. Therefore, each content of the organic dye compound A and the metal-complex compound B can be decided in consideration of the light resistance by the organic dye compound A alone and the light resistance by the metal-complex compound B alone.
In other words, the organic dye compound A is the materials whose light resistance x is less than 30% when the organic dye compound A is used alone. Therefore, in the case where the light resistance x of the organic dye compound A alone is a relatively high value in the range of less than 30%, the content of the metal-complex compound

B can be comparatively reduced. On the other hand, it is necessary to comparatively increase the content of the metal-complex compound B in the case where the light resistance x of the organic dye compound A alone is a relatively low value in the range of less than 30%. In this way, the content of the metal-complex compound B can be determined in accordance with the degree of the light resistance x of the organic dye compound A alone.
Meanwhile, the content of the metal-complex compound B can be determined in accordance with the degree of the light resistance x of the metal-complex compound B when used alone. In other words, the higher the light resistance x of the metal-complex compound B alone, the less content of the metal-complex compound B is enough to obtain the light resistance x as 30% or more of the optical recording material.

The present inventors suppose that there are the following relationships between the light resistance x of the optical recording material and the metal-complex compound B. That is, it is considered that it is preferable to utilize a "weak absorption band" of the metal-complex compound B around the wavelength from 300 nm to 400 nm to improve the light resistance x of the optical recording material. This "weak absorption band" is assigned to be an absorption band which is derived from a metal ion origin and whose interaction with the ligands is small or to a weak absorption band which is derived from the ligands. It is considered that the "weak absorption band" has an effect of shielding or masking the optical deterioration of absorption maximum wavelength (λmax) of the organic dye compound A. It is often the case that this "weak absorption band" links with the absorption maximum wavelength (λmax) of the metal-complex compound B.

Concretely, this "weak absorption band" can be observed on the shorter side of wavelength in case where the absorption maximum wavelength (λmax) of the metal-complex compound B is on the shorter side of wavelength. Studies by the present inventors have revealed that the metal-complex compound B having this "weak absorption band" around 350 nm to 500 nm, particularly around 400 nm which is considered to be the most relevant to a light fastness of a dye by light resistance test has the absorption maximum wavelength (λmax) on the longer side of wavelength 620 nm or more, more specifically 680 nm or more (see Figure 7). The "weak absorption band" is at a wavelength shorter than 350 nm in the metal-complex compound B having the absorption maximum wavelength (λmax) in the range from 500 nm to 620 nm, and the absorbance around 400 nm tends to be very small (see Figure 8).

Therefore, it is considered that the content of the metal-complex compound B can be reduced in case where using the metal-complex compound B having a "weak absorption band" around 400 nm and having the absorption maximum wavelength (λmax) 680 nm or more. On the other hand, it is considered that the metal-complex compound B having the absorption maximum wavelength (λmax) not less than 500 nm and not more than 620 nm has a smaller effect on enhancing the light resistance of the organic dye compound A and therefore a larger amount of the metal-complex compound B is needed to secure desired light resistance.

The content weight ratio of the metal-complex compound B for securing a practical light resistance varies depending on the absorption maximum wavelength (λmax) of the metal-complex compound B and the light resistance of the organic dye compound A itself as described above in the embodiment of the invention, and the weight ratio cannot be expressed uniquely by numeric values. Therefore, the organic dye compound A and the metal-complex compound B may be contained in the embodiment of the invention so that the predetermined light resistance may be not less than 30%.

It is preferable for the above reason that the content of the metal-complex compound B is not less than 20% by weight and not more than 40% by weight when the absorption maximum wavelength (λmax) of the metal-complex compound B is 500 nm to 620 nm assuming the total amount of the organic dye compound A and the metal-complex compound B as 100% by weight. The content of the metal-complex compound B having a wavelength range other than that is preferably not less than 5% by weight and more preferably not less than 10% by weight. The upper limit is not more than 40% by weight.

When the absorption maximum wavelength (λmax) of the metal-complex compound B is not less than 680 nm and not more than 900 nm, a "weak absorption band" will be located around 400 nm, and therefore desired light resistance can be secured with less amount.

In addition, for the above reasons, the difference between the absorption maximum wavelength (λmax) of the metal-complex compound B and the absorption maximum wavelength (λmax) of the organic dye compound A is preferably not less than 100 nm, preferably not less than 150 nm, more preferably not less than 200 nm, and still more preferably not less than 300 nm (see Figure 10), and the upper limit is 500 nm, preferably 450 nm and more preferably 400 nm.

In addition, the cause of (c) improvement of the film coating characteristics (film formation characteristics) when coating is considered that the metal-complex compound B has a much bulky steric structure as compared with the organic dye compound A and therefore, for example, even when the structure tends to crystallize only with the organic dye compound A, it is dispersed appropriately by the metal-complex compound B and made amorphous and thus the crystallization is prevented.

Further, enhancement of recording properties such as film coating characteristics when coating, preservation stability, light resistance are not observed if the content of metal-complex compound of the metal-complex compound B in the optical recording material is too small. In addition, if the content is too large, the content of the organic dye

compound A decreases and sufficient recording cannot be performed.

Actually, any of the light resistance x can be used as long as it is not 0%. However, from a viewpoint of preventing deleterious change when adhering using an ultraviolet cure resin, forming a cover layer or a protective coating layer, and repeatedly reading the recording region, the light resistance x is preferably not less than 30%, more preferably not less than 50%, still more preferably not less than 80% and further more preferably not less than 90%.

As for the sources of light to be used for estimating the light resistance x, that is to say, the light irradiation treatment, methods such as exposure to the solar light, xenon lamp light irradiation are known (see ISO-105-B02). For example, measurement may be performed by measuring ($I_1/I_0$) by irradiating a light having an almost similar distribution of the wavelength to the solar light (natural daylight) (Xenon lamp is a common example.) which is equivalent to the irradiation of the test such as Wool-Scale 5 grade (or European Reference #5). The light is usually irradiated from the dye film side.

The light resistance x in the embodiment of the invention is determined by operating the following (1) - (4) more specifically.

(1) Having the organic dye compound A and the metal-complex compound B contained in an organic solvent, and after spin-coating a transparent substrate with the solution, drying to prepare a dye coated disc.

(2) Measuring absorption spectrum of the dye coated disc prepared in (1) at the wavelength of 300 nm to 900 nm with an ultraviolet/visible light spectrophotometer, and determining $I_0$ as the absorbance at the absorption maximum present in the wavelength range from 340 nm to 440 nm.

(3) After subjecting the dye coated disc prepared in (1) to a light resistance testing machine for irradiating with a xenon lamp at 250W/m$^2$ for 8 hours, measuring the absorption spectrum under the same condition as in (2), and determining $I_1$ as the absorbance at the absorption maximum present in the wavelength range from 340 nm to 440 nm.

(4) Calculating $\{(I_1/I_0) \times 100\}$ and determining it as the light resistance x.

Hereinafter, operations in (1) to (4) are described in more detail.

Operation of (1)

The organic solvent is not particularly limited unless it dissolves the organic dye compound A and the metal-complex compound B in such a degree that a spectrophotometer can detect the absorption thereof when they are contained and unless it dissolves the substrate material. Examples of such a solvent include alcoholic solvent. More specific examples include tetrafluoropropanol, octafluoropentanol, etc. Tetrafluoropropanol was used in the embodiment of the invention. Upon containing the above-mentioned compounds in the organic solvent, it is preferably subjected to an ultrasonic disperser to dissolve the solid contents (the organic dye compound A and the metal-complex compound B) in the above-mentioned organic solvent (hereinbelow referred to as solution.) as well as possible. The above-mentioned solid contents are removed by filtration as much as possible. This is because when there are solid contents in the film, they may cause crystallization of the film serving as nuclei.

Then the solution which contains the organic dye compound A and the metal-complex compound B (the total amount of the organic dye compound A and the metal-complex compound B was 0.6% by weight of the solution weight in the embodiment of the invention.) is coated on the substrate. The density of this solution is decided considering the solubility of the organic dye compound A and the metal-complex compound B.

The substrate may be any one for which transparency for visible light can be selected. Examples of the substrate include glass substrate and resin substrate and it is preferable to use a resin substrate in that it allows to form a good film resulted from a good balance with surface tension of the above-mentioned solution. More preferably, polycarbonate substrate practically used in CD and DVD is used. When a polycarbonate substrate is to be used, for example, those having thickness of 0.6 mm or 1.2 mm may be used.

Coating the substrate is not particularly limited, and spin coating can be mentioned as a method used universally for coating a recording layer of a light recording medium. As a specific method used for spin coating, a method can be mentioned which comprises rotating a discal polycarbonate substrate having a thickness of 0.6 mm/diameter of 120 mm in 800 rpm and dripping a solution containing the organic dye compound A and the metal-complex compound B at or around the center of the disc. The density of the solution, rotation speed of the spin coating at this time are not particularly limited as long as the absorption can be detected, but absorbance of absorption maximum is preferably not less than 0.1, more preferably not less than 0.2 and still more preferably not less than 0.3. The upper limit is about 1.0. The above-mentioned density and rotation speed are preferably set in certain conditions so that the film thickness may be suitable for recording and reading.

After coating, the coated film is dried to remove organic solvent from the coated film. The drying temperature is not particularly limited within the temperature where the organic solvent can be evaporated, and is preferably from 60°C to 100°C.

Operation of (2)

The absorption spectrum from 300 nm to 900 nm of the dye coated disc obtained in (1) is measured by an ultraviolet/visible light spectrophotometer. Well-known equipments can be use as an ultraviolet/visible light spectrophotometer.

For example, U-3300 manufactured by Hitachi, Ltd. can be mentioned for such an equipment. And absorbance $I_0$ at the wavelength showing the largest absorbance (absorption maximum wavelength) within a wavelength range from 340 nm to 440 nm in the absorption spectrum from 300 nm to 900 nm is determined.

Operation of (3)

A xenon lamp is irradiated on the dye coated disc obtained in (1) at 250W/m$^2$ for 8 hours. Irradiation of xenon lamp can be performed, for example, with a light resistance testing machine. Then, the absorption spectrum from 300 nm to 900 nm of the dye coated disc is measured by the ultraviolet/visible light spectrophotometer as in the above (2), and absorbance $I_1$ at the wavelength showing the largest absorbance within a wavelength range from 340 nm to 440 nm is determined.

Operation of (4)

$(I_0/I_1) \times 100$ is calculated using $I_0$ and $I_1$ obtained in the above (2) and (3) and the light resistance x is determined as this. When the light resistance x of the organic dye compound A alone or the metal-complex compound B alone is to be determined, the organic dye compound A alone or the metal-complex compound B alone for which the light resistance x is desired to be determined can be used instead of the combination of the above-mentioned organic dye compound A and metal-complex compound B.

Examples of the metal-complex compound B to be used in the embodiment of the invention include azo metal-complex compounds or indoaniline metal-complex compounds. These azo metal-complex compounds or indoaniline metal-complex compounds are preferably poorly soluble in water in consideration of the application of optical recording materials. Hereinbelow, specific examples of these azo metal-complex compounds or indoaniline metal-complex compounds are described.

The metal-complex compound B to be used in the embodiment of the invention includes an azo metal-complex compound comprising an azo dye represented by the general formula (I) and a metal ion, and a metal-complex compound comprising a compound represented by the general formula (II), a metal ion and an arbitrary anion. The metal-complex compound is not limited to the same kind and a plurality of kinds of metal-complex compounds may be used as well.

[Chem. 6]

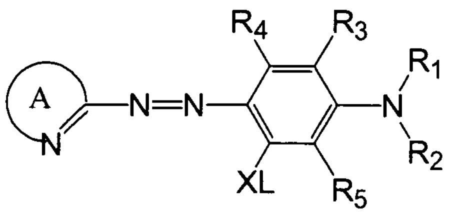

-----( I )

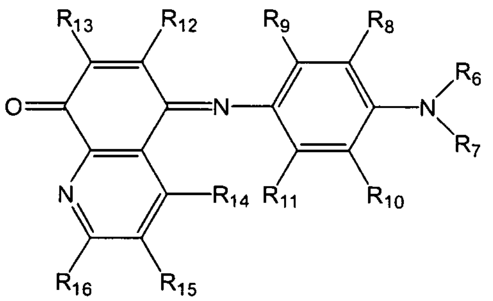

------ ( II )

Metal-complex compounds are formed through chelate bonding of a compound represented by the general formula (I) and a metal. The molecular weight of azo compound expressed by the general formula (I) is usually not more than 2000, and preferably not more than 1500.

Metals constituting the metal-complex compound B to be used in the embodiment of the invention are not particularly limited and either transition element or typical element can be used, and its oxidation number is not limited as long as they have capability of coordination formation with the general formula (I). The ratio of the metal to the azo compound in the complex does not particularly matter, but the structure in which the coordination ratio of the azo compound to the transition metal in a ratio of 2 to 1 is preferable. Transition metals having divalent or trivalent ion are preferable to take a stable complex structure. In particular it is preferable to be selected from the group consisting of nickel, cobalt, copper, iron, zinc, platinum, palladium, manganese.

In the compounds expressed by the general formula (I), ring A represents a nitrogen-containing heterocyclic

aromatic ring formed with the carbon atom and nitrogen atom that ring A is connected. The structure of the aromatic ring may be either monocycle or condensed ring as long as it has a nitrogen atom in the location where coordination is possible, and examples thereof include the aromatic rings exemplified below.

[Chem. 7]

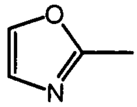
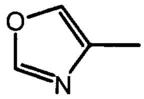
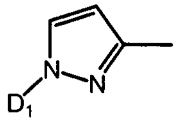
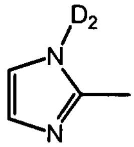
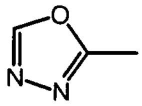

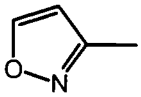
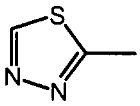
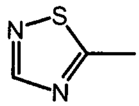
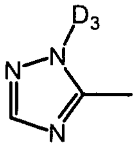
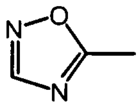

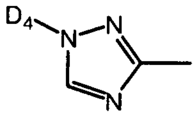
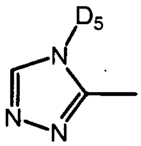
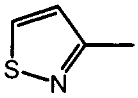
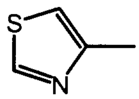
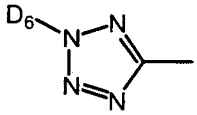

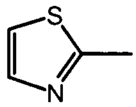
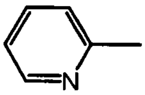
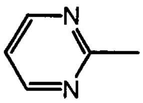
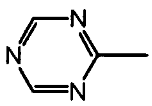

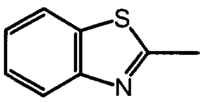
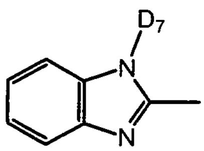
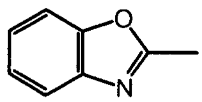
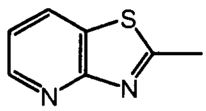

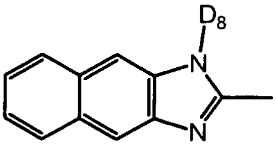
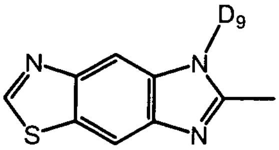
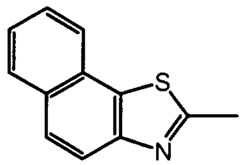
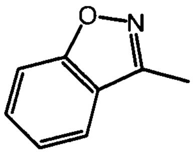

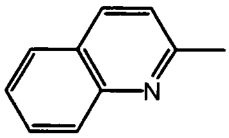
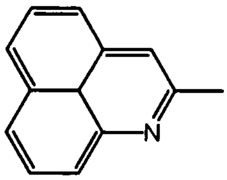
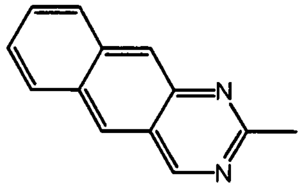

Here, $D_1$ to $D_9$ represent either one of a hydrogen atom, an alkyl group which may be substituted or an acyl group. In addition, the aromatic ring may have an arbitrary substituent besides hydrogen atom, and neither the number nor the location of the substituent is particularly limited. Among these, the structure that is preferable as ring A is monocycle of 5- or 6-membered ring and 2-condensed ring, and, above all, benzothiazole ring, benzoxazole ring, benzimidazole ring, imidazole ring, thiazole ring, thiadiazole ring, triazole ring, oxazole ring, pyridine ring, pyrazole ring, isoxazole ring are preferable from easiness of synthesis and solubility. The bonding in which the azo compound represented by the general formula (I) and a metal make a chelate bond includes, for example, various configurations such as a and a', b and b' below. Here, M represents the central metal.

[Chem. 8]

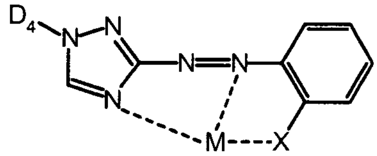
(a)

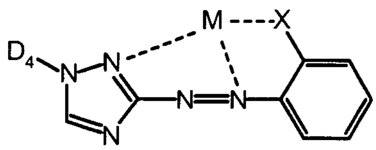
(a')

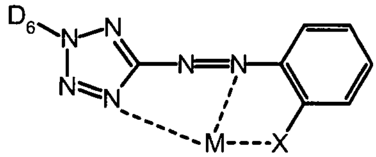
(b)

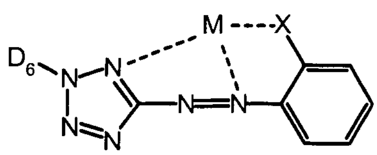
(b')

Hereinbelow, $R_1$ to $R_5$ in the general formula (I) are described.
In the general formula (I), $R_1$ and $R_2$ each independently represent a hydrogen atom, a linear or branched alkyl group such as a methyl group, an ethyl group, a n-propyl group, an isopropyl group, a n-butyl group, an isobutyl group, a sec-butyl group, and a tert-butyl group; a cyclic alkyl groups such as a cyclopropyl group, a cyclopentyl group, a cyclohexyl group; an aralkyl group such as a benzyl group, a phenethyl group; an alkenyl group such as a vinyl group, a propenyl group and a hexenyl group.

If the structures represented by $R_1$ and $R_2$ have increased number of carbon atoms in the alkyl chain moiety

or take below-mentioned condensed ring structure, λmax generally shifts to a longer wavelength, but excessive number of carbon atoms do not show a significant effect on the wavelength, and may, on the contrary, arise problems that absorption intensity per gram decreases and the product does not solidify.

Therefore, $R_1$ and $R_2$ are preferably a linear or branched alkyl group having 1 to 12 carbon atoms, a cyclic alkyl group having 3 to 12 carbon atoms, an aralkyl group (the aromatic ring moiety thereof may have an arbitrary substituent) having 7 to 20 carbon atoms, and particularly preferably they are a linear or branched alkyl group having 1 to 8 carbon atoms, a cyclic alkyl group having 3 to 8 carbon atoms, an aralkyl group having 7 to 12 carbon atoms.

In addition, either one or both of $R_1$ and $R_2$ may bond to $R_3$ or $R_5$ of the adjacent benzene ring and may form a saturated carbon ring (condensed ring) and $R_3$ and $R_5$ each independently may have a hetero atom such as an oxygen atom, a sulfur atom, a nitrogen atom and may be condensed with $R_1$, $R_2$ at the end and may form a saturated heterocycle (condensed ring). Furthermore, $R_1$ and $R_2$ may form a saturated heterocycle (condensed ring) by linking with each other. They may form a saturated heterocycle (condensed ring) including one or more other hetero atoms besides carbon atoms. The thus formed ring (condensed ring) is preferably a 5- to 7-membered ring, and more preferably a 5- or 6-membered ring at this time. In addition, a substituent may be bonded to the ring (condensed ring) formed by linking the $R_1$ and $R_2$, and the ring formed by linking $R_1$, $R_2$ to a benzene ring.

Here, examples of those in which ($-NR_1R_2$) is a ring structure include the following.

[Chem. 9]

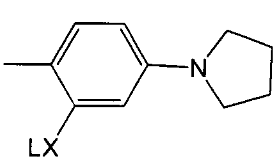
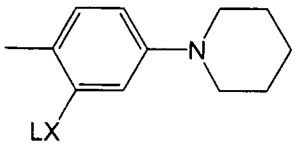
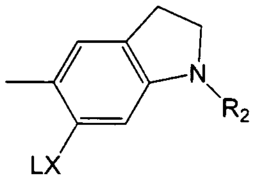
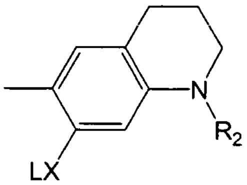
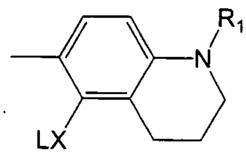
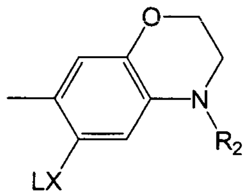
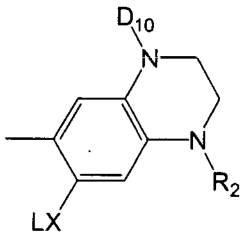
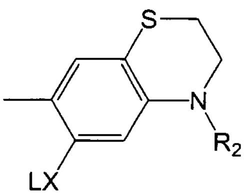
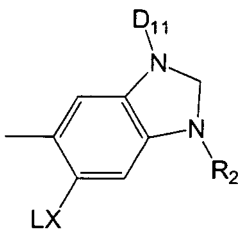
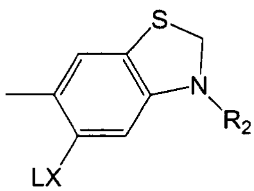
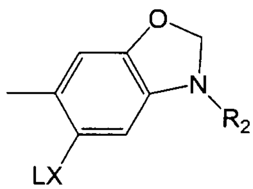
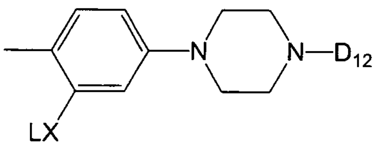
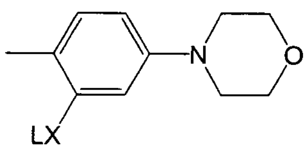
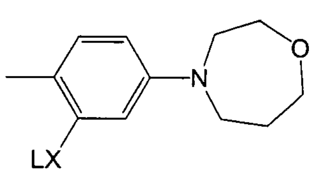
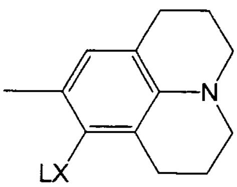
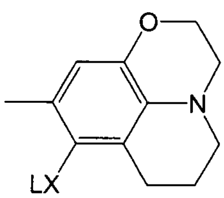
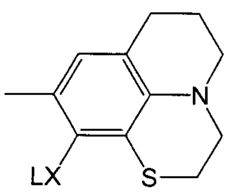

Here, $D_{10}$ to $D_{12}$ represent either one of a hydrogen atom, an alkyl group which may be substituted or an acyl group. In addition, the aromatic ring may have an arbitrary substituent, and neither the number nor the location of the substituent is particularly limited as long as it is within the scope of the gist of the present invention.

$R_3$, $R_4$ and $R_5$ represent a hydrogen atom or a linear or branched alkyl group having 1 to 12 carbon atoms such as a methyl group, an ethyl group, a propyl group, an isopropyl group, a n-butyl group, a sec-butyl group, a tert-butyl group and a n-heptyl group; a cyclic alkyl groups having 3 to 12 carbon atoms such as a cyclopropyl group, a cyclopentyl group, a cyclohexyl group and an adamanthyl group; a linear or branched alkenyl group having 2 to 12 carbon atoms such as a vinyl group, a propenyl group and a hexenyl group; an aralkyl group having 7 to 18 carbon atoms such as a benzyl group, a phenethyl group; a linear or branched alkoxy group having 1 to 12 carbon atoms such as a methoxy group, an ethoxy group, a n-propoxy group, an isopropoxy group, a n-butoxy group, a sec-butoxy group, a tert-butoxy group; a linear or branched alkylthio group having 1 to 12 carbon atoms such as a methylthio group, an ethylthio group, a n-propylthio group, a n-butylthio group, a sec-butylthio group, a tert-butylthio group; a saturated heterocyclic group of monocycle such as a 4-piperidyl group, a morpholino group; a halogen atom such as a fluorine atom, a chlorine atom, a bromine atom; a nitro group; a cyano group; a mercapto group; a hydroxy group; a formyl group; an acyl group represented by $-COR_{34}$ ; an amino group represented by $-NR_{35}R_{36}$; an acylamino group represented by $-NHCOR_{37}$; a carbamate group represented by $-NHCOOR_{38}$; a carboxylic acid ester group represented by $-COOR_{39}$; an acyloxy group represented by $-OCOR_{40}$ ; a carbamoyl group represented by $-CONR_{41}R_{42}$; a sulfonyl group represented by $-SO_2R_{43}$; a sulfinyl group represented by $-SOR_{44}$; a sulfamoyl group represented by $-SO_2NR_{45}R_{46}$ ; a sulfonic acid ester group represented by $-SO_3R_{47}$; a sulfonamide group represented by $-NHSO_2R_{48}$ .

Here, $R_{34}$, $R_{37}$, $R_{38}$, $R_{39}$, $R_{40}$, $R_{43}$, $R_{44}$, $R_{47}$ and $R_{48}$ represent a hydrocarbon group or a heterocyclic group, and $R_{35}$, $R_{36}$, $R_{41}$, $R_{42}$, $R_{45}$ and $R_{46}$ represent either one of a hydrogen atom, a hydrocarbon group or a heterocyclic group.

The hydrocarbon group represented by $R_{34}$ to $R_{48}$ represents a linear or branched alkyl group having 1 to 18 carbon atoms such as a methyl group, an ethyl group, a propyl group, an isopropyl group, a n-butyl group, a sec-butyl group, a tert-butyl group and a n-heptyl group; a cyclic alkyl groups having 3 to 18 carbon atoms such as a cyclopropyl group, a cyclopentyl group, a cyclohexyl group and an adamanthyl group; a linear or branched alkenyl group having 2 to 18 carbon atoms such as a vinyl group, a propenyl group and a hexenyl group; a cyclic alkenyl group having 3 to 18 carbon atoms such as a cyclopentenyl group and a cyclohexenyl group; an aralkyl group having 7 to 20 carbon atoms such as a benzyl group, a phenethyl group; an aryl group having 6 to 18 carbon atoms such as a phenyl group, a tolyl group, a xylyl group, a mesityl group. The alkyl chain moiety and the aryl group moiety of these groups may be further substituted with a substituent which an alkyl chain moiety can have as mentioned below.

In addition, the heterocyclic group represented by $R_{34}$ to $R_{48}$ may be a saturated heterocycle such as a 4-piperidyl group, a morpholino group, a 2-morpholinyl group, a piperazyl group, or an aromatic heterocycle such as a 2-furyl group, a 2-pyridyl group, a 2-thiazolyl group, a 2-quinolyl group. These may contain a plurality of hetero atoms, and further may contain substituent groups, and the bonding location is not limited. The structure preferable as heterocycle is a saturated heterocycle of 5- or 6-membered ring, a monocycle of 5- or 6-membered ring and an aromatic heterocycle of 2-condensed ring thereof.

Specific examples of an acyl group represented by $-COR_{34}$; an amino group represented by $-NR_{35}R_{36}$ ; an acylamino group represented by $-NHCOR_{37}$; a carbamate group represented by $-NHCOOR_{38}$; a carboxylic acid ester group represented by $-COOR_{39}$; an acyloxy group represented by $-OCOR_{40}$; a carbamoyl group represented by $-CONR_{41}R_{42}$; a sulfonyl group represented by $-SO_2R_{43}$; a sulfinyl group represented by $-SOR_{44}$; a sulfamoyl group represented by $-SO_2NR_{45}R_{46}$; a sulfonic acid ester group represented by $-SO_3R_{47}$; a sulfonamide group represented by $-NHSO_2R_{48}$ include the following.

The acyl group ($-COR_{34}$) includes the substituents of the following structure.

[Chem. 10]

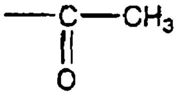 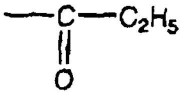 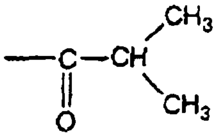 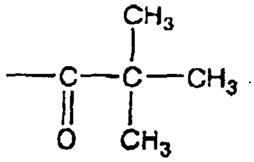

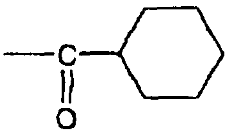 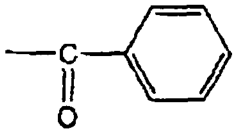 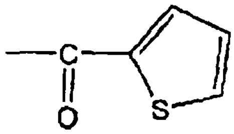 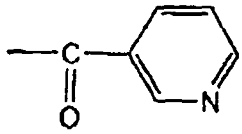

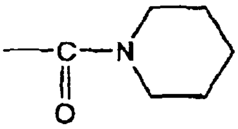 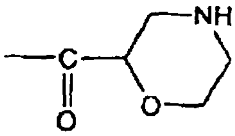 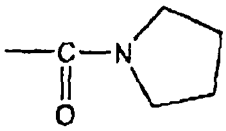 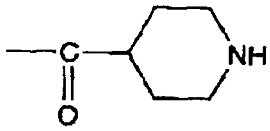

The amino group ($-NR_{35}R_{36}$) includes the substituents of the following structure.

[Chem. 11]

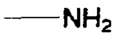 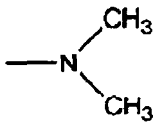 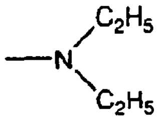 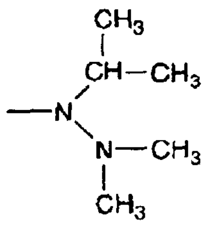

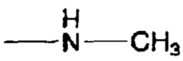 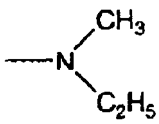 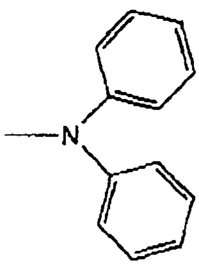

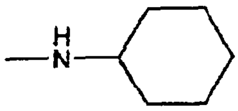 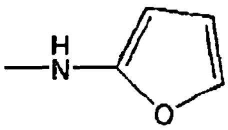 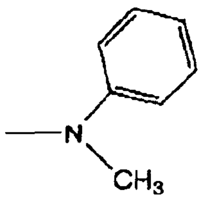

The acylamino group ($-NHCOR_{37}$) includes the substituents of the following structure.

[Chem. 12]

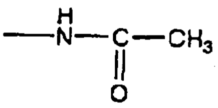 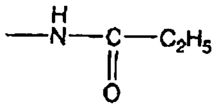 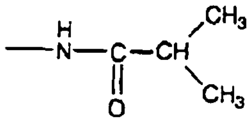 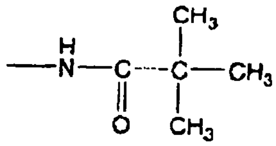

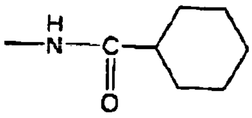 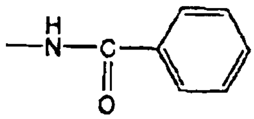 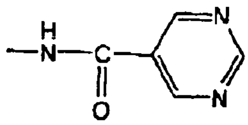 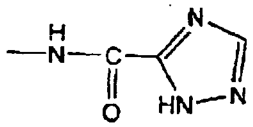

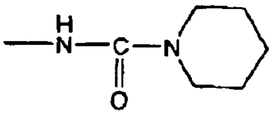 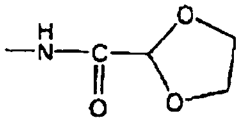 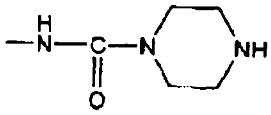

The carbamate group ($-NHCOOR_{38}$) includes the substituents of the following structure.

[Chem. 13]

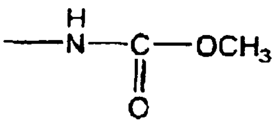 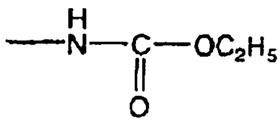 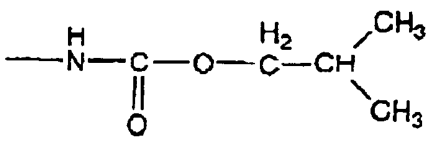

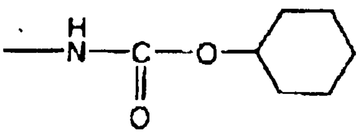 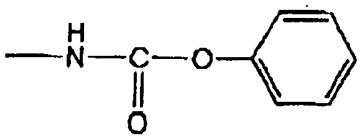 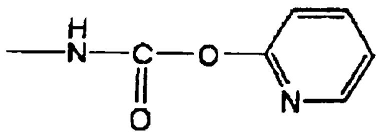

The carboxylic acid ester group ($-COOR_{39}$) includes the substituents of the following structure.

[Chem. 14]

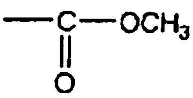 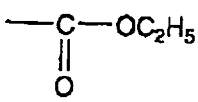 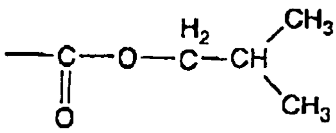

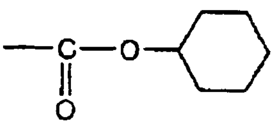 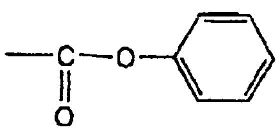 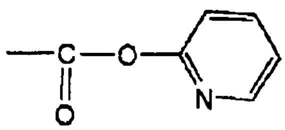

The acyloxy group ($-OCOR_{40}$) includes the substituents of the following structure.

[Chem. 15]

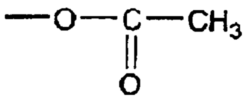
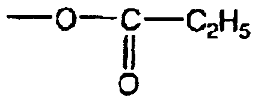
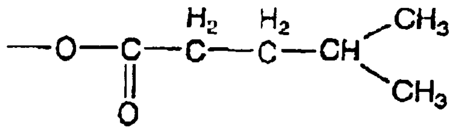
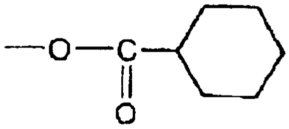
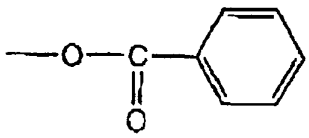
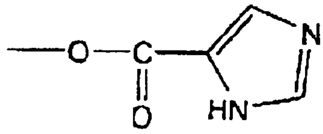
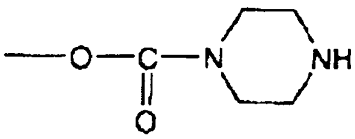
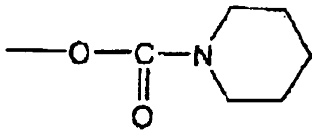
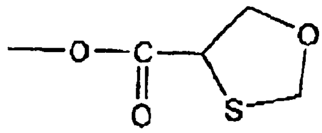

The carbamoyl group ($-CONR_{41}R_{42}$) includes the substituents of the following structure.

[Chem. 16]

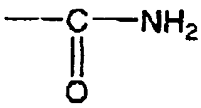
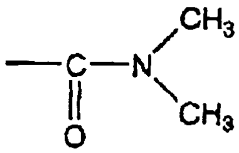
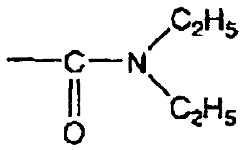
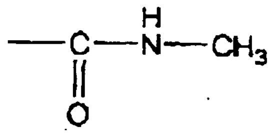
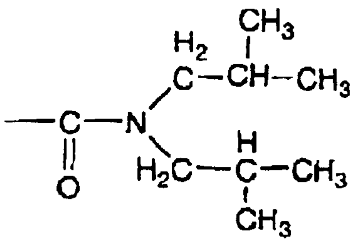
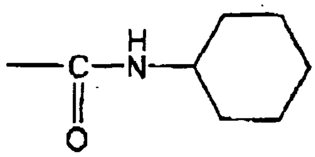
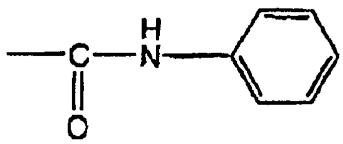
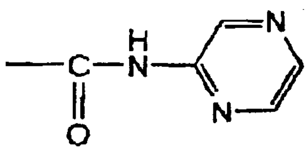
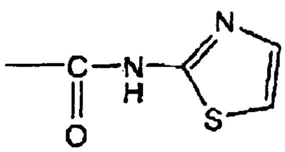
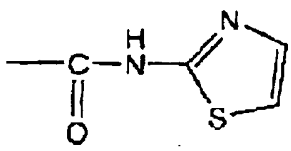

The sulfonyl group ($-SO_2R_{43}$) includes the substituents of the following structure.

[Chem. 17]

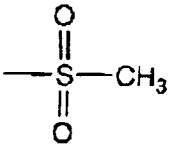
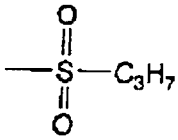
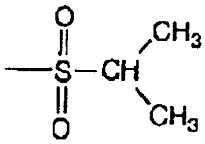
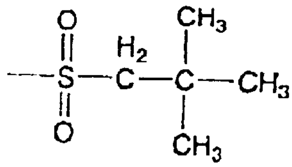
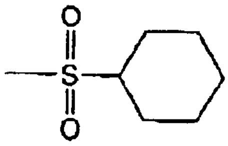
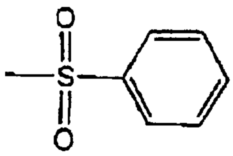
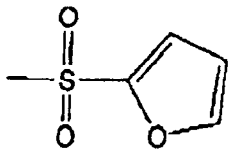
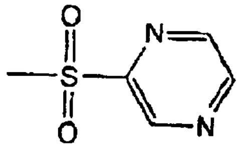
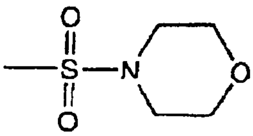
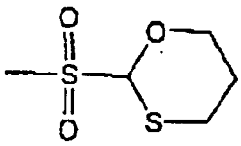
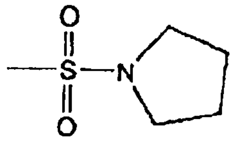
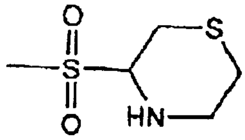

The sulfinyl group ($-SOR_{44}$) includes the substituents of the following structure.

[Chem. 18]

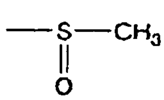
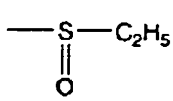
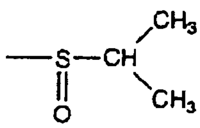
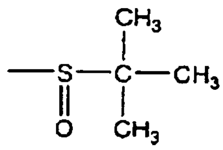
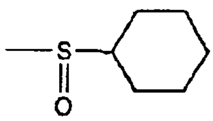
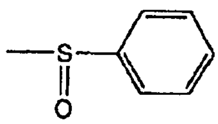
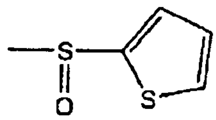
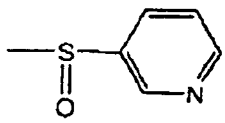
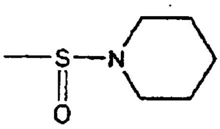
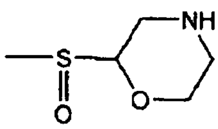

The sulfamoyl group ($-SO_2NR_{45}R_{46}$) includes the substituents of the following structure.

[Chem. 19]

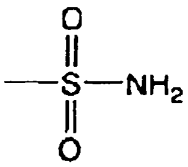
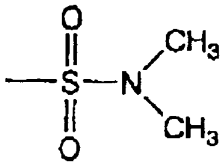
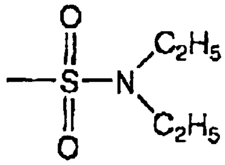
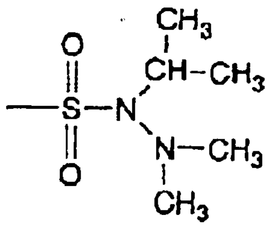
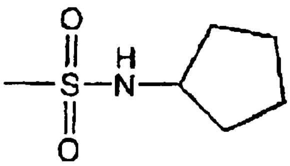
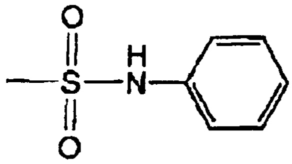
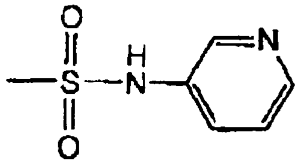
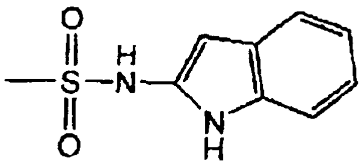
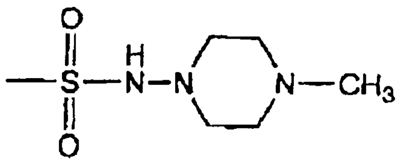

The sulfonic acid ester group ($-SO_3R_{47}$) includes the substituents of the following structure.

[Chem. 20]

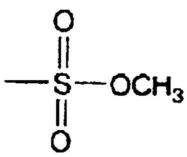
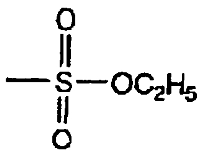
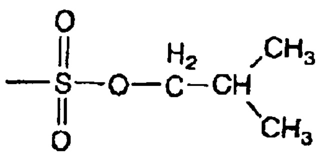
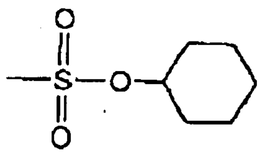
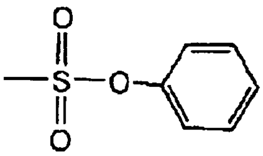
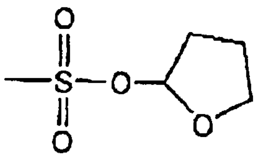
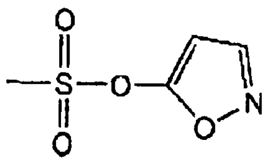

The sulfonamide group ($-NHSO_2R_{48}$) includes the substituents of the following structure.

[Chem. 21]

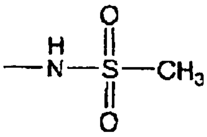
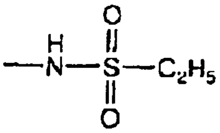
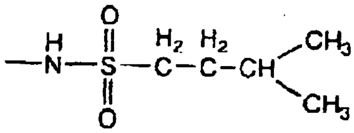
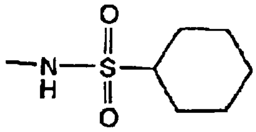

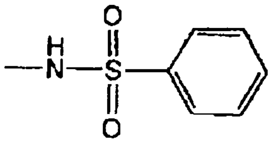
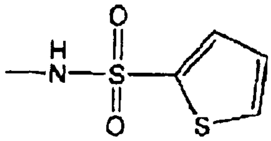
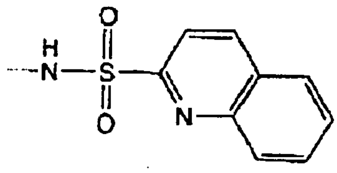

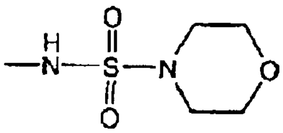
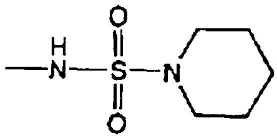
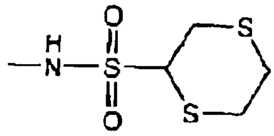

Those preferred as $R_3$, $R_4$ and $R_5$ are a hydrogen atom or a linear or branched alkyl group having 1 to 8 carbon atoms; an aralkyl group having 7 to 12 carbon atoms; a linear or branched alkoxy group having 1 to 8 carbon atoms; a linear or branched alkylthio group having 1 to 8 carbon atoms; a saturated heterocyclic group of 5- or 6-membered monocycle; a halogen atom; a nitro group; a cyano group; a mercapto group; a hydroxy group; an acyl group represented by $-COR_{34}$; an amino group represented by $-NR_{35}R_{36}$; an acylamino group represented by $-NHCOR_{37}$; a carbamate group represented by $-NHCOOR_{38}$; a carboxylic acid ester group represented by $-COOR_{39}$; an acyloxy group represented by $-OCOR_{40}$; a carbamoyl group represented by $-CONR_{41}R_{42}$; a sulfonyl group represented by $-SO_2R_{43}$; a sulfamoyl group represented by $-SO_2NR_{45}R_{46}$; a sulfonamide group represented by $-NHSO_2R_{48}$.

In the general formula (I), XL represents a substituent which becomes capable of coordinating to a metal when a leaving group L is eliminated. Specifically, the substituent represented by XL includes a hydroxy group ($-O^-$; X, $H^+$, L), a sulfonic acid group ($-SO_3H^-$; X, $H^+$; L), an amino group (-N-H; X, $H^+$;L), an acylamino group ($-N-COR_{37}$, $H^+$;L), a sulfonamide group ($-N-SO_2R_{48}$, $H^+$; L), a mercapto group ($-S^-$ ; X, $H^+$;L), a carboxyl group ($-COO^-$;X, $H^+$; L).

Preferable structure of the azo compound represented by the general formula (I) can be shown in the following (1) - (48-2).

[Chem. 22]

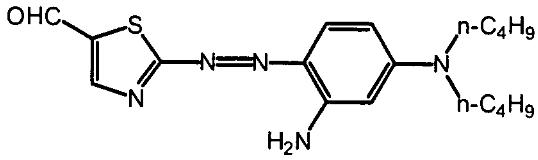
(1)

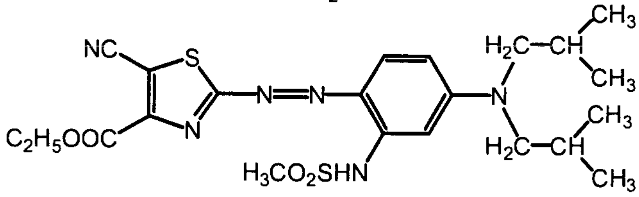
(2)

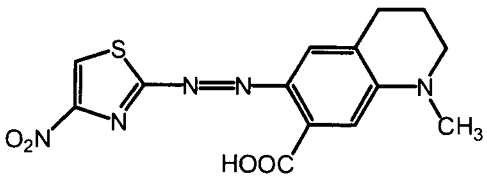
(3)

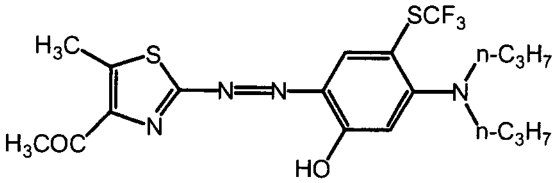
(4)

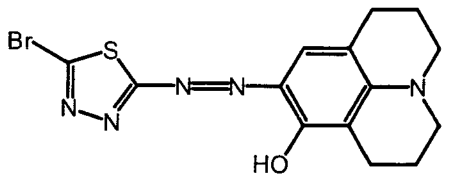
(5)

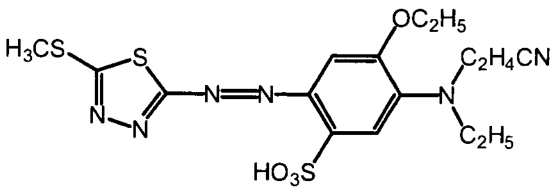
(6)

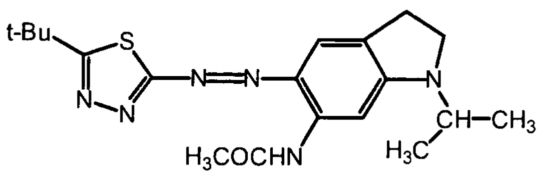
(7)

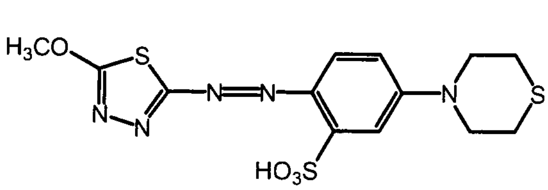
(8)

[Chem. 23]

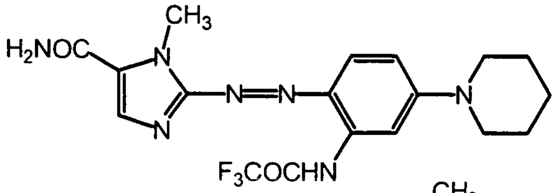

(9)

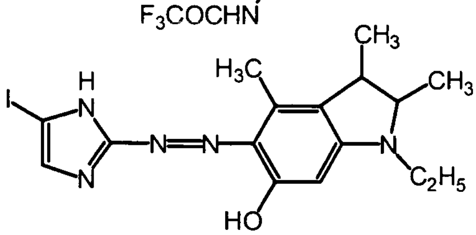

(10)

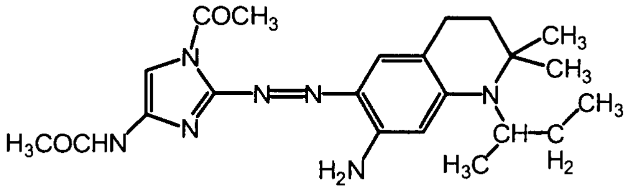

(11)

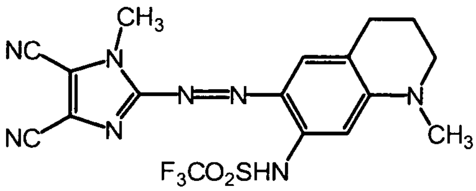

(12)

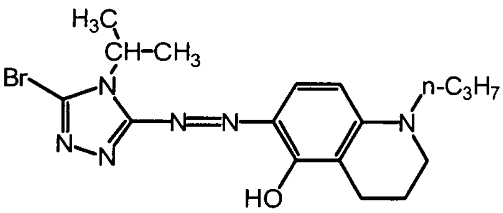

(13)

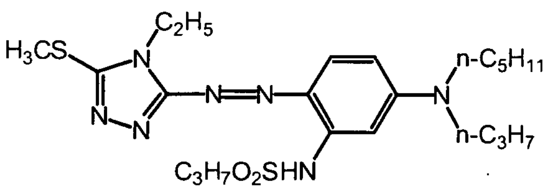

(14)

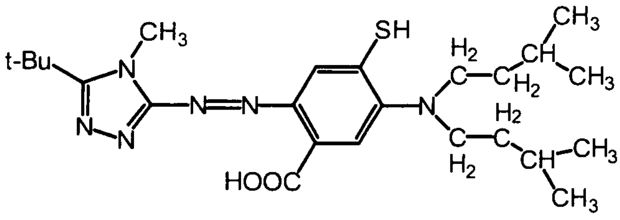

(15)

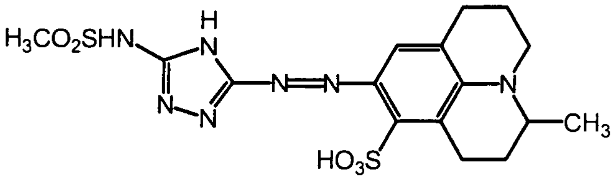

(16)

[Chem. 24]

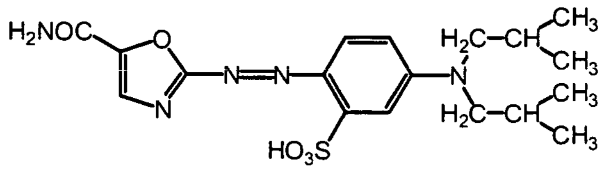

(17)

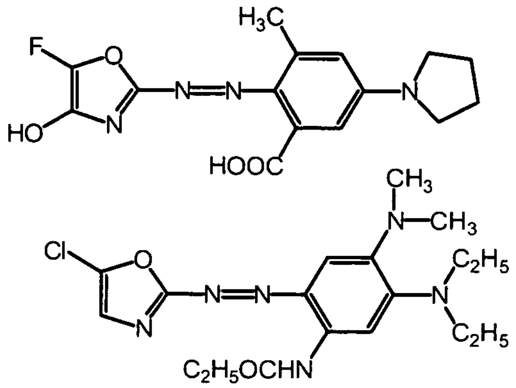

(18)

(19)

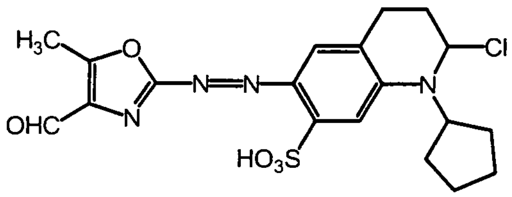

(20)

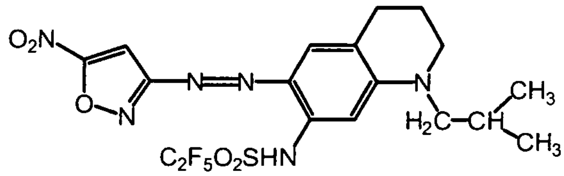

(21)

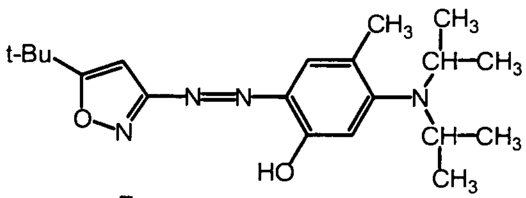

(22)

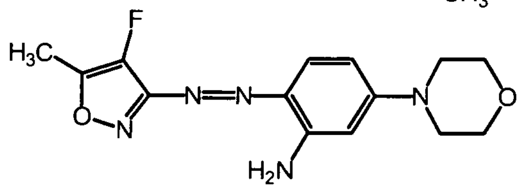

(23)

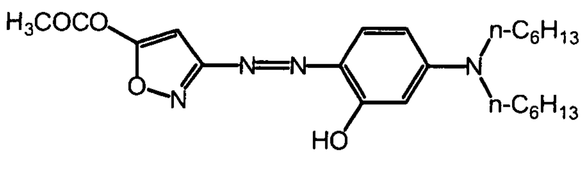

(24)

[Chem. 25]

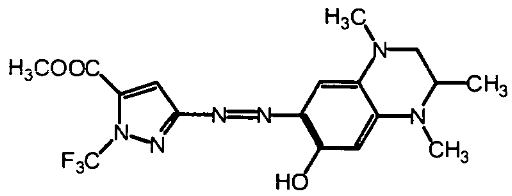
(25)

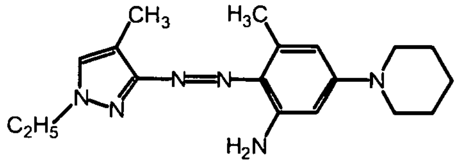
(26)

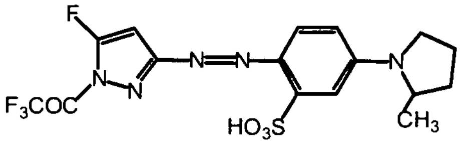
(27)

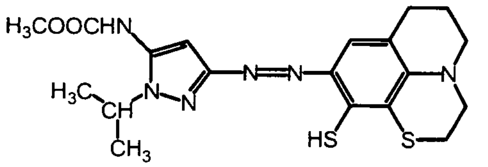
(28)

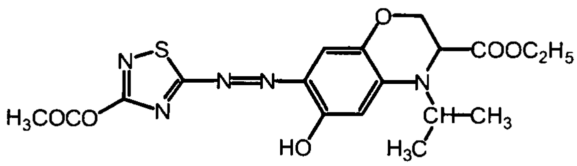
(29)

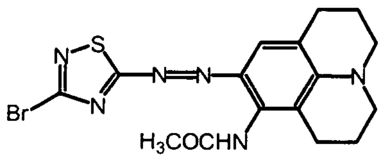
(30)

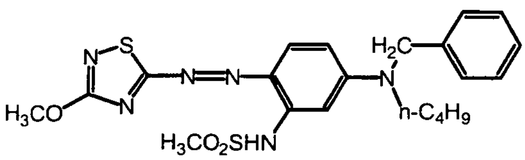
(31)

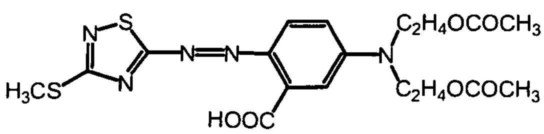
(32)

[Chem. 26]

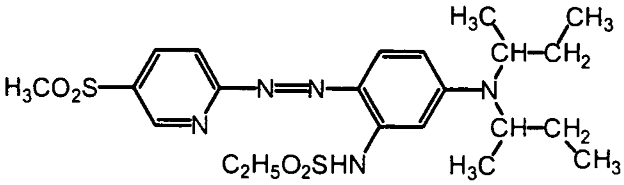

(33)

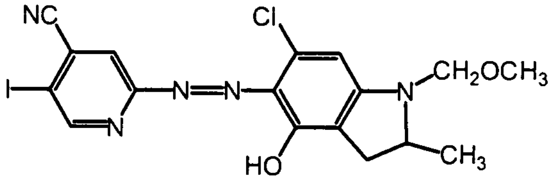

(34)

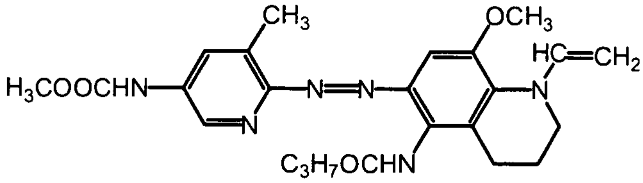

(35)

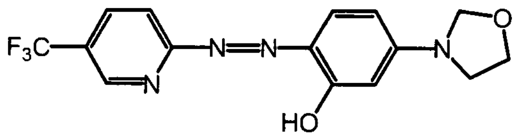

(36)

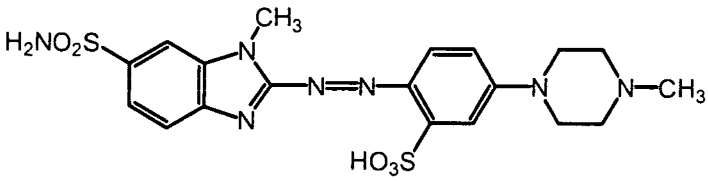

(37)

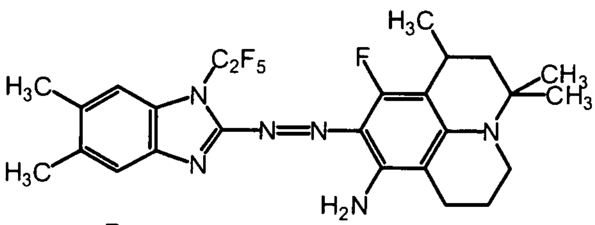

(38)

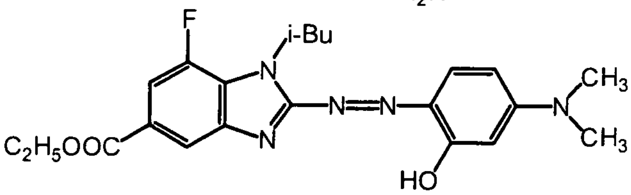

(39)

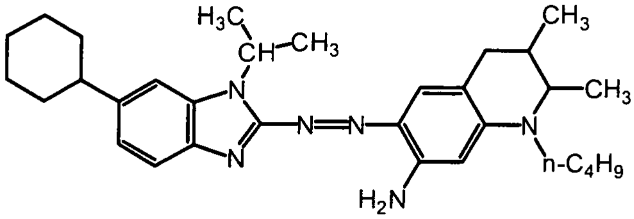

(40)

[Chem. 27]

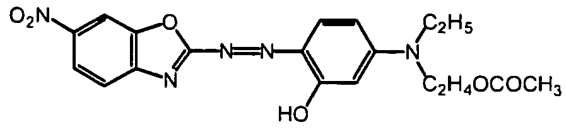
(41)

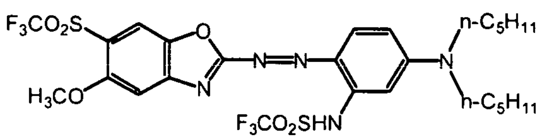
(42)

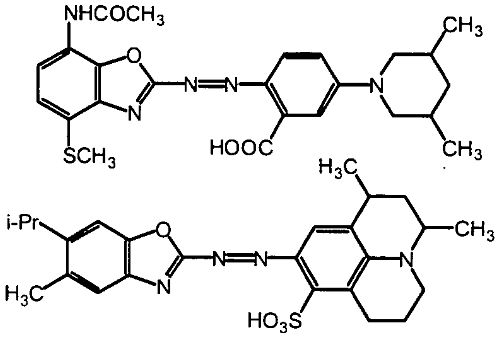
(43)

(44)

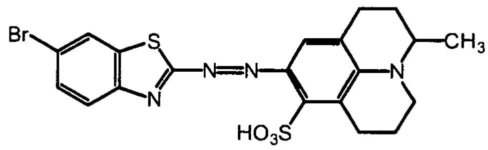
(45)

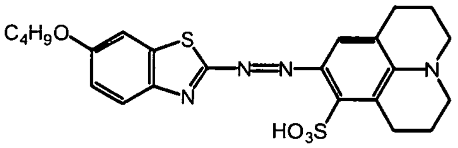
(46)

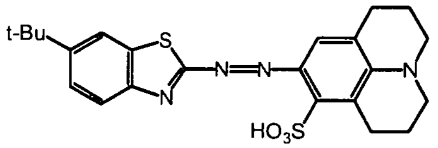
(47)

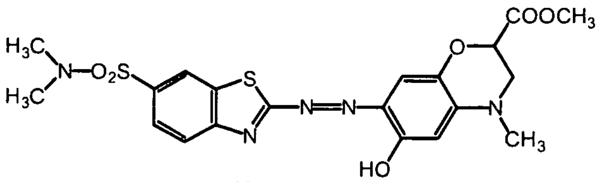
(48)

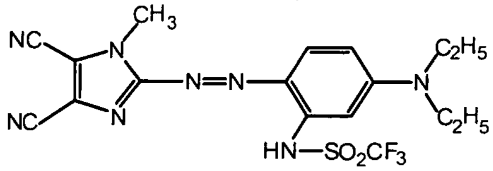
(48-1)

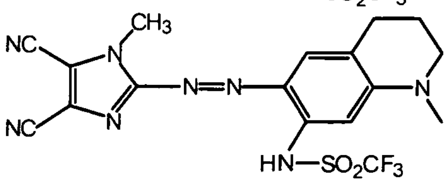
(48-2)

For the metal-complex compound B of the optical recording material to which embodiment of the invention is applied, an indoaniline metal-complex compound formed by linking a compound represented by the general formula (II), a metal ion and an anion can be used. The molecular weight of the compound expressed by the general formula (II) depends on the coordinate structure with ligands and metal, but it is usually not more than 4500, and preferably not more than 3000.

[Chem. 28]

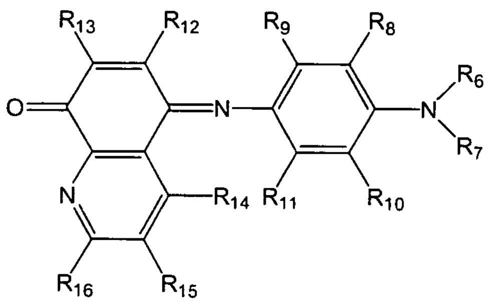

------ (II)

In the compound represented by the above-mentioned general formula (II), $R_6$ and $R_7$ represents a hydrogen atom, a linear or branched alkyl group, a cyclic alkyl group, an aralkyl group, a linear or branched alkenyl group. The structure represented by $R_6$ and $R_7$ are preferably a linear or branched alkyl group having 1 to 12 carbon atoms, a cyclic alkyl group having 3 to 12 carbon atoms, an aralkyl group (the aromatic ring moiety may have an arbitrary substituent) having 7 to 20 carbon atoms, and particularly preferably they are a linear or branched alkyl group having 1 to 8 carbon atoms, a cyclic alkyl group having 3 to 8 carbon atoms, an aralkyl group having 7 to 12 carbon atoms for the reasons similar to the above-mentioned $R_1$, $R_2$.

In addition, either one or both of $R_6$ and $R_7$ may be condensed with $R_8$ or $R_{10}$ of the adjacent benzene ring and may form a saturated carbon ring (condensed ring) and $R_8$ and $R_{10}$ each independently may have a hetero atom such as an oxygen atom, a sulfur atom, a nitrogen atom and may be condensed with $R_6$, $R_7$ at the end and may form a saturated heterocycle (condensed ring). Furthermore, $R_6$ and $R_7$ may form a saturated heterocycle (condensed ring) by condensing with each other. $R_6$ and $R_7$ may also form a saturated heterocycle including one or more other hetero atoms besides carbon atoms at this time. The thus formed ring is preferably a 5- to 7-membered ring, and more preferably a 5- or 6-membered ring. In addition, a substituent may be bonded to the ring formed by linking the $R_6$ and $R_7$, and the ring formed by linking $R_6$, $R_7$ to a benzene ring.

For examples of such a structure, similar structures shown for examples of the case where the above-mentioned ($-NR_1R_2$) is a ring structure can be used.

In the general formula (II), $R_8$ to $R_{16}$ represents a hydrogen atom, a linear or branched alkyl group having 1 to 12 carbon atoms; a cyclic alkyl groups having 3 to 12 carbon atoms; a linear or branched alkenyl group having 2 to 12 carbon atoms; an aralkyl group having 7 to 18 carbon atoms; a linear or branched alkoxy group having 1 to 12 carbon atoms; a linear or branched alkylthio group having 1 to 12 carbon atoms; a saturated heterocyclic group of monocycle; an aryl group having 6 to 18 carbon atoms; a halogen atom; a nitro group; a cyano group; a mercapto group; a hydroxy group; a formyl group; an acyl group represented by $-COR_{34}$; an amino group represented by $-NR_{35}R_{36}$; an acylamino group represented by $-NHCOR_{37}$; a carbamate group represented by $-NHCOOR_{38}$; a carboxylic acid ester group represented by $-COOR_{39}$; an acyloxy group represented by $-OCOR_{40}$; a carbamoyl group represented by $-CONR_{41}R_{42}$; a sulfonyl group represented by $-SO_2R_{43}$ ; a sulfinyl group represented by $-SOR_{44}$; a sulfamoyl group represented by $-SO_2NR_{45}R_{46}$ ; a sulfonic acid ester group represented by $-SO_3R_{47}$ ; a sulfonamide group represented by $-NHSO_2R_{48}$ (wherein $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent either one of a hydrogen atom, a hydrocarbon group or a heterocyclic group.)

Preferably, $R_8$ to $R_{16}$ are a linear or branched alkyl group having 1 to 12 carbon atoms; an aralkyl group having 7 to 18 carbon atoms; a linear or branched alkoxy group having 1 to 12 carbon atoms; a linear or branched alkylthio group having 1 to 12 carbon atoms; an aryl group having 6 to 18 carbon atoms; a saturated or unsaturated heterocyclic group of monocycle or 2-condensed ring; a halogen atom; a nitro group; a cyano group; a mercapto group; a hydroxy group; an acyl group represented by $-COR_{34}$; an amino group represented by $-NR_{35}R_{36}$; an acylamino group represented by $-NHCOR_{37}$; a carbamate group represented by $-NHCOOR_{38}$; a carboxylic acid ester group represented by $-COOR_{39}$; an acyloxy group represented by $-OCOR_{40}$; a carbamoyl group represented by $-CONR_{41}R_{42}$; a sulfonyl group represented

by $-SO_2R_{43}$; a sulfamoyl group represented by $-SO_2NR_{45}R_{46}$; a sulfonamide group represented by $-NHSO_2R_{48}$.

The metals constituting the metal-complex compound B to be used in the embodiment of the invention are not particularly limited and either transition element or typical element can be used, and the oxidation number is not limited as long as they have capability of coordination formation with the general formula (II). The ratio of the metal to the azo compound in the complex does not particularly matter, but the structure in which the azo compound coordinates to the transition metal in a ratio of 2 to 1 is preferable. Transition metals having divalent or trivalent ion are preferable to take a stable complex structure. In particular it is preferable to be selected from the group consisting of nickel, cobalt, copper, iron, zinc, platinum, palladium, manganese.

As for the anion forming a complex with an indoaniline compound with the above-mentioned metal ion, arbitrary anion can be used as long as the electrical charge of the whole complex is neutral. Examples thereof include those having a monovalent electrical charge such as a halogen atom, a nitrate ion, a chlorate ion, a perchlorate ion. Furthermore, these anions include those having a divalent electrical charge such as an oxalate ion, a sulfate ion, a carbonate ion. These anions may also have more electrical charges. In addition, the number of the coordination may be a monodentate ligand, or a multidentate ligand having a plurality of ligand atoms such as bidentate ligand, terdentate ligand. Preferably the anion is a monovalent monodentate ligand. When the anion is a monovalent monodentate ligand, it is preferable because it is easy to synthesize a compound of single component. Since it can be comparatively easily synthesized because the valence is monovalent, it is preferable. In addition, the anion may direct coordinate to the metal atom as a ligand or may be present in a separate form as an ion.

Examples of these ligands include the following.

[Chem. 29]

$F^-$ $Cl^-$ $Br^-$ $I^-$ $OH^-$ $CN^-$ $SCN^-$ $OCN^-$

$(NO_2)^-$ $(NO_3)^-$ $(CO_3)^{2-}$ $(HCO_3)^-$ $(SO_3)^{2-}$ $(SO_4)^{2-}$

$(ClO)^-$ $(ClO_2)^-$ $(ClO_3)^-$ $(ClO_4)^-$ $(PF_6)^-$ $(PCl_6)^-$

$(BrO)^-$ $(BrO_2)^-$ $(BrO_3)^-$ $(BrO_4)^-$ $(PO_4)^{3-}$ $I_3^-$

$(IO)^-$ $(IO_2)^-$ $(IO_3)^-$ $(IO_4)^-$ $(NH_2)^-$ $(BF_4)^-$

$B^-(Ph)_4$ $CH_3SO_4^-$ $(SiF_6)^{2-}$ $(TiF_6)^{2-}$ $(HSO_4)^-$

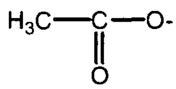 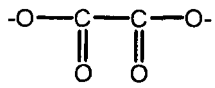 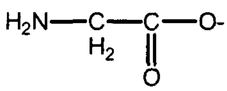 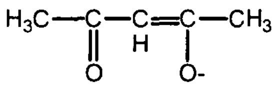

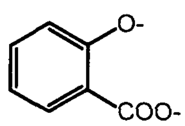 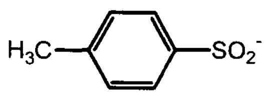 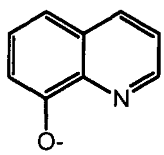 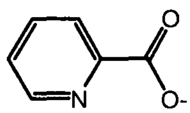

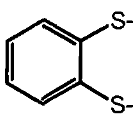 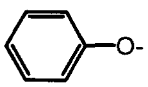 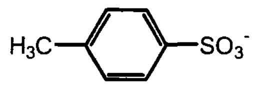 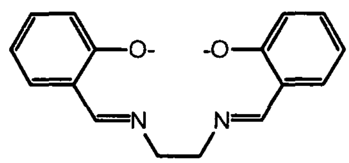

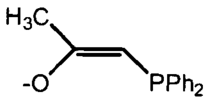 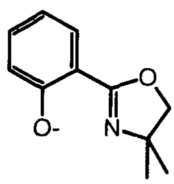 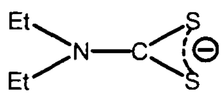

The ratio of the compound represented by the general formula (II), the metal ion and the anion is not particularly limited, and may variously change depending on the electrical charge of the metal ion, coordinate structure of the metal-complex compound. But the structure in which the compound represented by the general formula (II) coordinates to the metal ion in a ratio of 2 or 3 to 1 is preferable. A compound of such a structure is easy to form the complexes shown below. M represents a metal ion and X represents an anion in the following structure formula.

[Chem. 30]

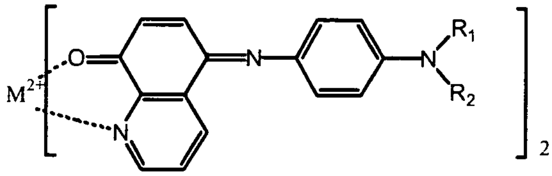

$2X^-$ $M^{2+}$ 4 Coordinate

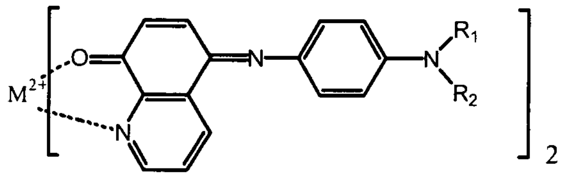

$X^{2-}$ $M^{2+}$ 4 Coordinate

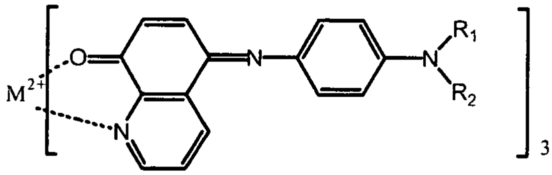

$2X^-$ $M^{2+}$ 6 Coordinate

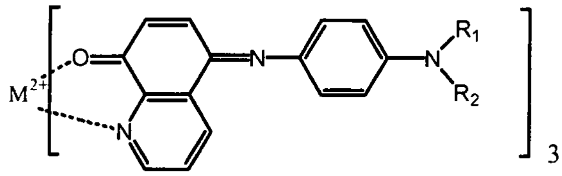

$X^{2-}$ $M^{2+}$ 6 Coordinate

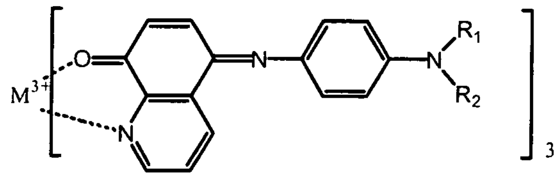

$3X^-$ $M^{3+}$ 6 Coordinate

In the coordination by these, it is preferable that the metal-complex compound is formed in such a way that the same kind of compounds represented by the general formula (II) and anions may coordinate to the metal ion, and it is also preferable that a plurality of kinds of compounds represented by the general formula (II) and anions may coordinate to the metal ion, and it is also preferable that a plurality of kinds of compounds represented by the general formula (II) and anions may coordinate to the metal ion. Preferable structures of the compounds represented by the general formula (II) are shown below.

[Chem. 31]

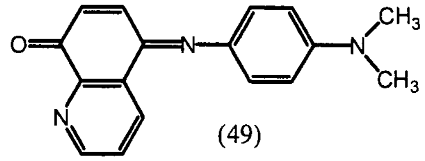

(49)

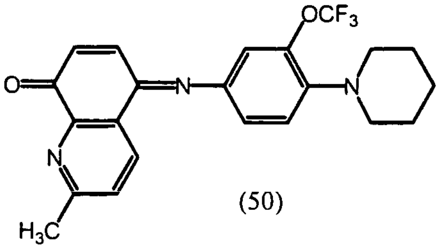

(50)

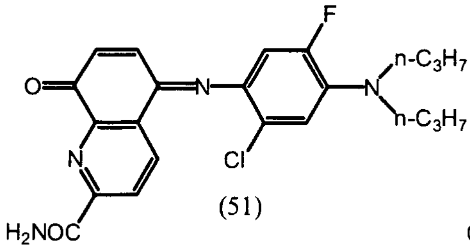

(51)

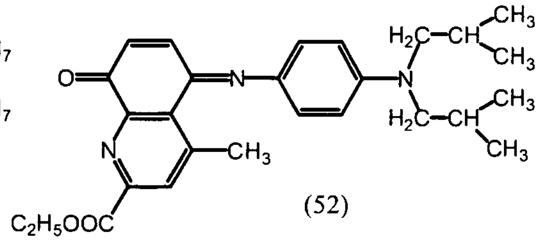

(52)

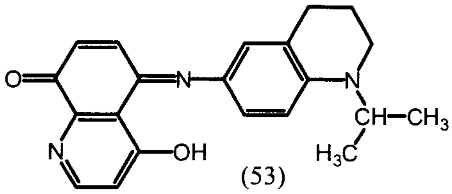

(53)

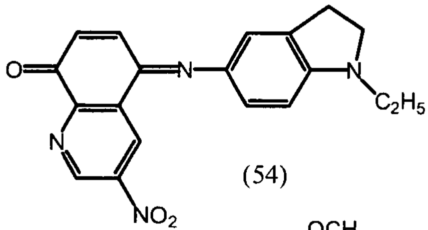

(54)

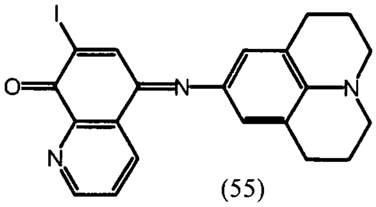

(55)

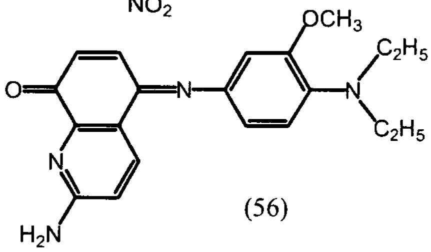

(56)

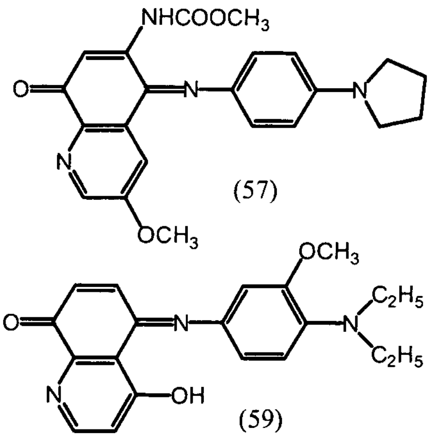

(57)

(59)

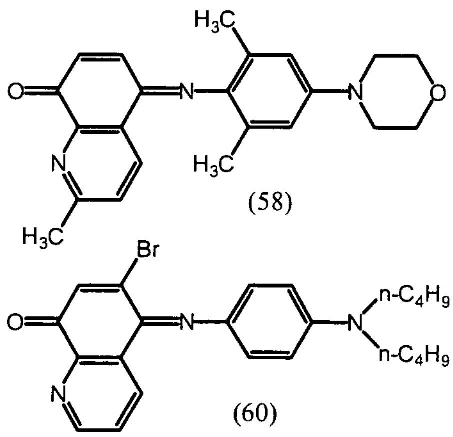

(58)

(60)

[Chem. 32]

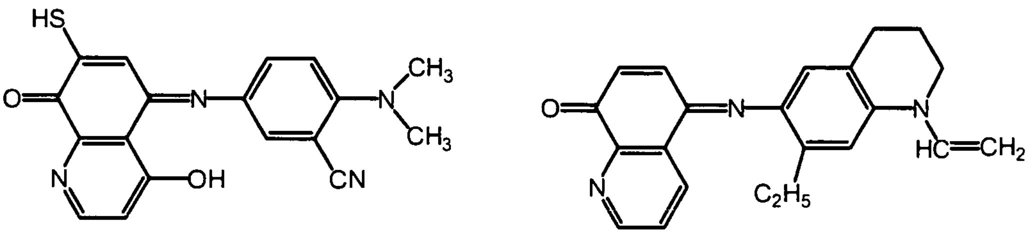

(61)

(62)

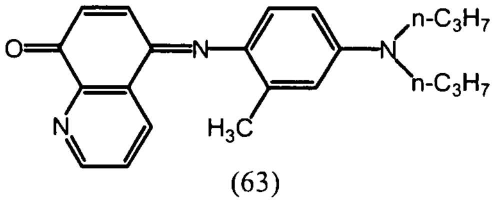

(63)

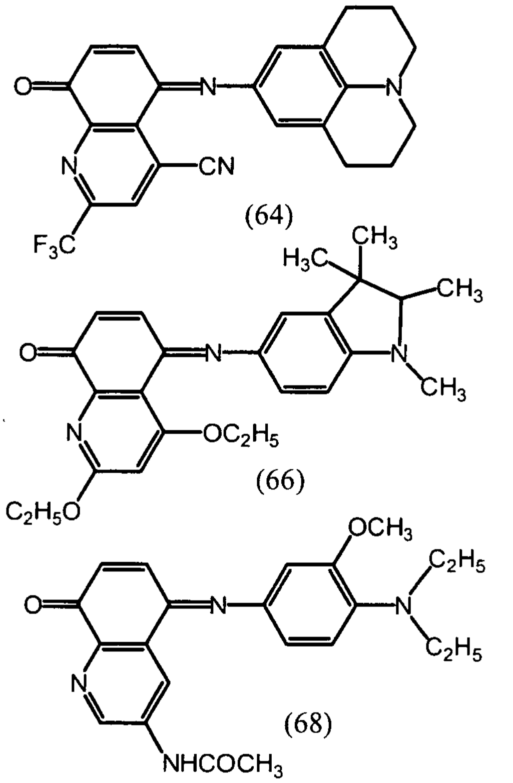

(64)

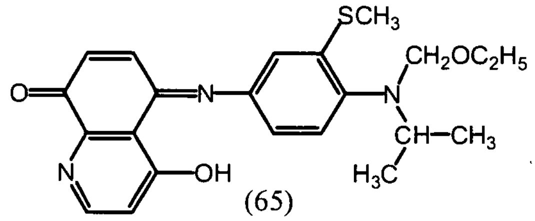

(65)

(66)

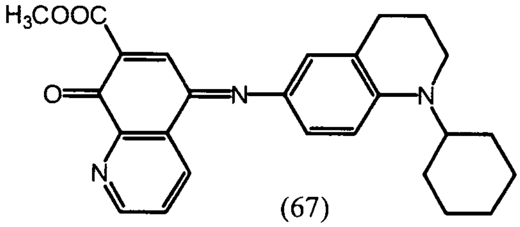

(67)

(68)

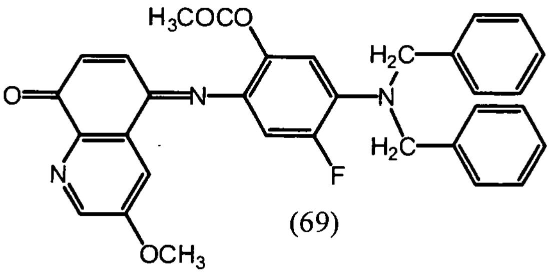

(69)

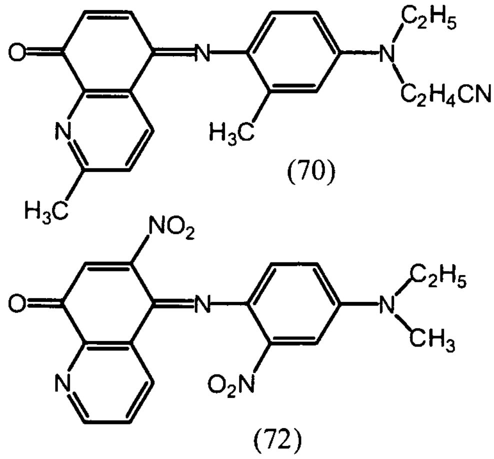

(70)

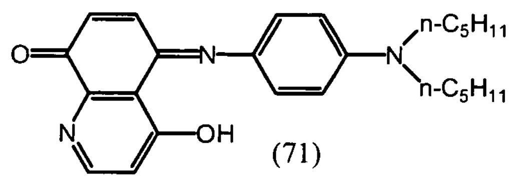

(71)

(72)

[Chem. 33]

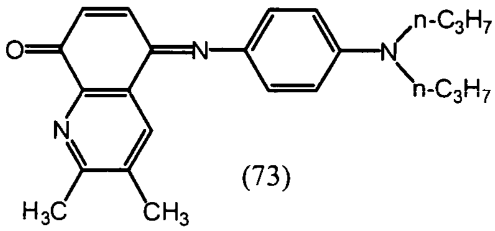
(73)

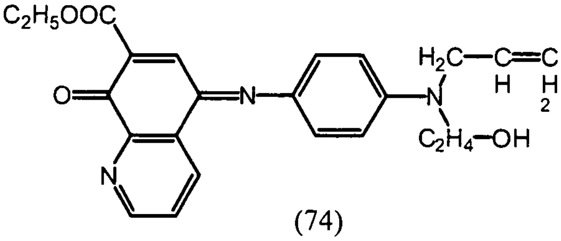
(74)

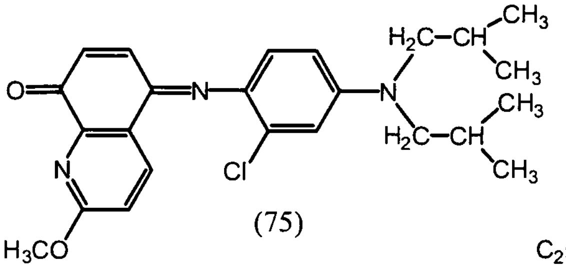
(75)

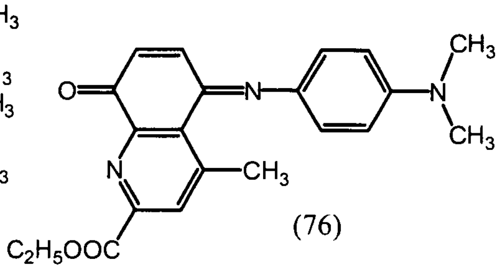
(76)

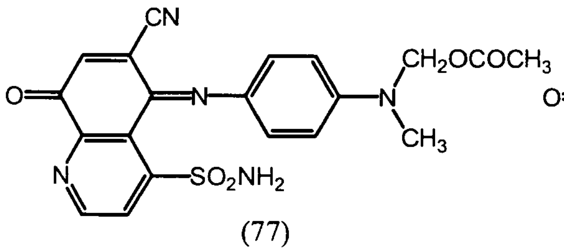
(77)

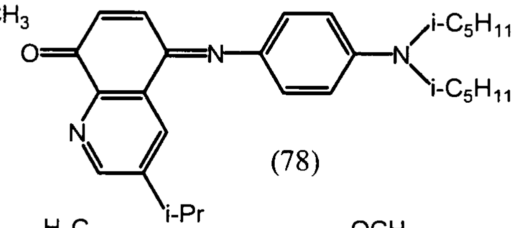
(78)

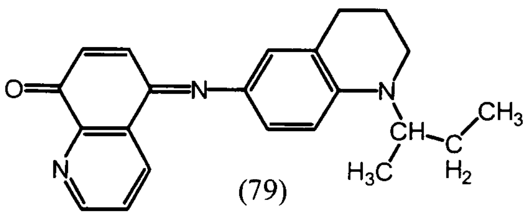
(79)

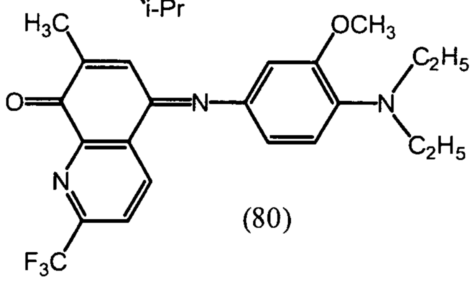
(80)

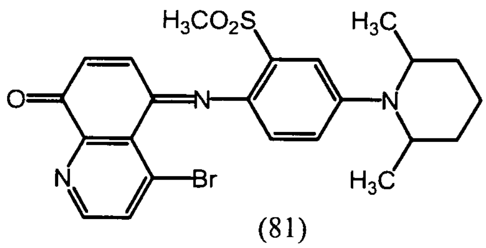
(81)

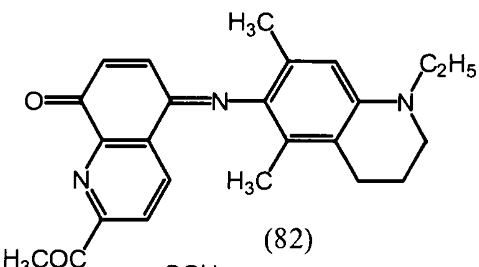
(82)

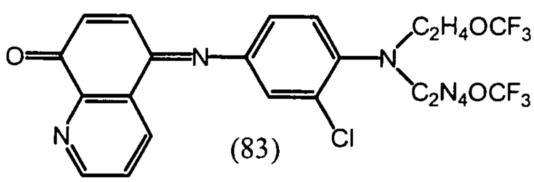
(83)

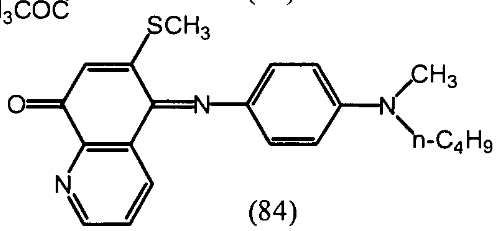
(84)

Next, the organic dye compound A in the optical recording material to which embodiment of the invention is applied is described. For the organic dye compound A to be used in the optical recording material to which embodiment of the invention is applied, any known compound having the absorption maximum in the range from 340 nm to 440 nm and recordable by a so-called blue laser can be used. Generally, the organic dye compound A capable of recording by a blue laser tends to have a light resistance x less than 30% when measured by the above-mentioned test method with the organic dye compound A used alone. Such the organic dye compound A is not particularly limited, but above all includes γ-pyrone organic dye, coumalin organic dye, carbostyryl organic dye, 1-thiocoumarin organic dye.

The molecular weight of γ-pyrone organic dye, coumalin organic dye, carbostyryl organic dye, 1-thiocoumarin one is not particularly limited, but the molecular weight is usually not more than 900, preferably not more than 600 in the case of pyrone organic dye. The molecular weight is usually not more than 700, preferably not more than 500 in the case of coumalin organic dye or carbostyryl organic dye. If the molecular weight is too large, particularly OD value decreases in the part which does not contribute to absorption, the absorption necessary for recording cannot be secured and therefore it is unpreferable.

More specifically, it is preferable to use a compound selected from the compounds represented by the general formulae (III), (IV) and (V) mentioned above.

[Chem. 34]

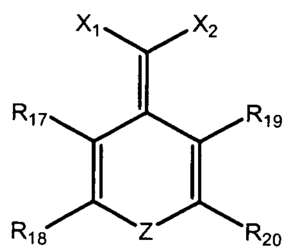

(III)

[Chem. 35]

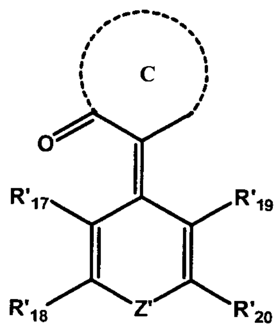

(IV)

[Chem. 36]

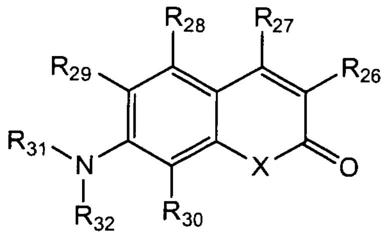

--- [V]

Hereinafter, the general formula (III) or the general formula (IV) is described at first. Here, $R_{17}$' to $R_{20}$' in the general formula (III) or (IV) include those similar to $R_{17}$ to $R_{20}$.

In the general formula (III) or the general formula (IV), $R_{17}$ to $R_{20}$ each independently represent a hydrogen atom, a linear or branched alkyl group having 1 to 12 carbon atoms; a cyclic alkyl groups having 3 to 12 carbon atoms; a linear or branched alkenyl group having 2 to 12 carbon atoms; an aralkyl group having 7 to 18 carbon atoms; a linear or branched alkoxy group having 1 to 12 carbon atoms; a linear or branched alkylthio group having 1 to 12 carbon atoms; a saturated or unsaturated heterocyclic group; an aryl group having 6 to 18 carbon atoms; a halogen atom; a nitro group; a cyano group; a mercapto group; a hydroxy group; a formyl group; an acyl group represented by $-COR_{34}$; an amino group represented by $-NR_{35}R_{36}$; an acylamino group represented by $-NHCOR_{37}$; a carbamate group represented by $-NHCOOR_{38}$; a carboxylic acid ester group represented by $-COOR_{39}$; an acyloxy group represented by $-OCOR_{40}$; a carbamoyl group represented by $-CONR_{41}R_{42}$; a sulfonyl group represented by $-SO_2R_{43}$; a sulfinyl group represented by $-SOR_{44}$; a sulfamoyl group represented by $-SO_2NR_{45}R_{46}$; a sulfonic acid ester group represented by $-SO_3R_{47}$; a sulfonamide group represented by $-NHSO_2R_{48}$.

However, $R_{17}$ and $R_{18}$, $R_{19}$ and $R_{20}$, $R_{17}$' and $R_{18}$', $R_{19}$' and $R_{20}$' may be condensed with each other to form a hydrocarbon ring or a heterocycle structure. The hydrocarbon ring and the heterocycle may have a substituent. $X_1$ is an electron-withdrawing group, and $X_2$ is a hydrogen atom or -Q-Y (Q is a direct bond, an alkylene group having 1 or 2 carbon atoms, an arylene group or a heteroarylene group, and Y is an electron-withdrawing group, and the alkylene group, the arylene group, the heteroarylene group may have arbitrary substituent groups besides Y.). Ring C is a carbocyclic ketone ring or a heterocyclic ketone ring which may have a substituent group along with C = O. Z and Z' each represent -O-, -S-, $-SO_2-$, $-NR_{21}-$ (wherein $R_{21}$ is a hydrogen atom, a hydrocarbon group which may be substituted, a heterocyclic group which may be substituted, a cyano group, a hydroxy group), an amino group represented by $-NR_{22}R_{23}$ (wherein $R_{22}$ and $R_{23}$ each independently represent a hydrogen atom, a hydrocarbon group or a heterocyclic group) or an acyl group represented by $-COR_{24}$ ($R_{24}$ is a hydrocarbon group or a heterocyclic group) or $-COR_{25}$ ($R_{25}$ is a hydrocarbon group or a heterocyclic group).

Among the above-mentioned substituent groups, preferred as $R_{17}$ to $R_{20}$ are a linear or branched alkyl group having 1 to 8 carbon atoms; a cyclic alkyl groups having 3 to 8 carbon atoms; a linear or branched alkenyl group having 2 to 8 carbon atoms; an aralkyl group having 7 to 12 carbon atoms; a linear or branched alkoxy group having 1 to 8 carbon atoms; a linear or branched alkylthio group having 1 to 8 carbon atoms; a saturated or unsaturated heterocyclic group of monocycle or 2-condensed ring; an aryl group having 6 to 12 carbon atoms; a halogen atom; a nitro group; a cyano group; a mercapto group; a hydroxy group; an acyl group represented by $-COR_{34}$; an amino group represented by $-NR_{35}R_{36}$; an acylamino group represented by $-NHCOR_{37}$; a carbamate group represented by $-NHCOOR_{38}$; a carboxylic acid ester group represented by $-COOR_{39}$; an acyloxy group represented by $-OCOR_{40}$; a carbamoyl group represented by $-CONR_{41}R_{42}$; a sulfonyl group represented by $-SO_2R_{43}$; a sulfamoyl group represented by $-SO_2NR_{45}R_{46}$; a sulfonamide group represented by $-NHSO_2R_{48}$.

The preferable condensed ring structures when $R_{17}$ and $R_{18}$, $R_{19}$ and $R_{20}$, $R_{17}$' and $R_{18}$', $R_{19}$' and $R_{20}$' are respectively condensed with each other to form a hydrocarbon ring or a heterocycle structure include the following fused ring structures.

[Chem. 37]

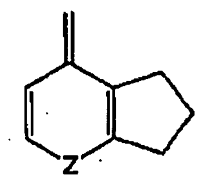
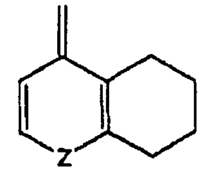
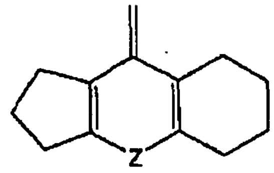

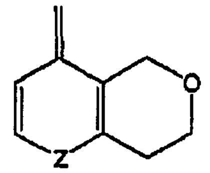
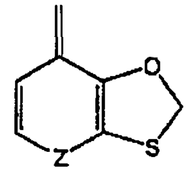
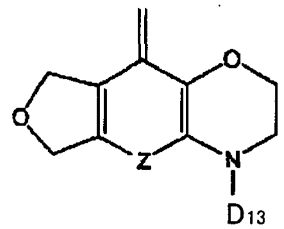

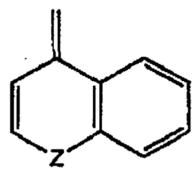
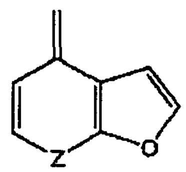
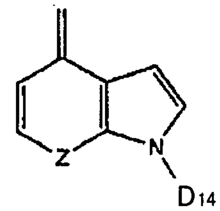

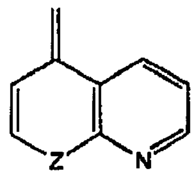
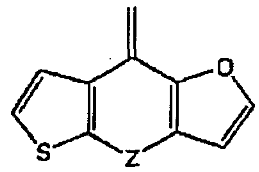
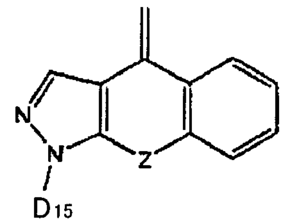

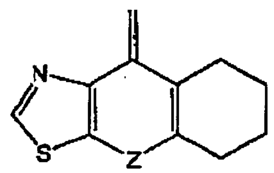
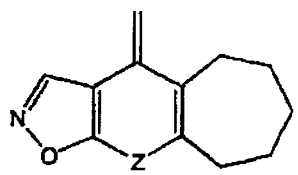
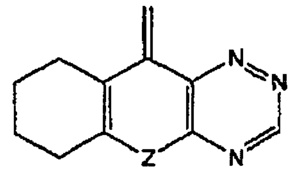

(In the above-mentioned condensed ring structure, $D_{13}$ to $D_{15}$ represent either one of a hydrogen atom, an alkyl group which may be substituted or an acyl group. In addition, the aromatic ring may have an arbitrary substituent, and neither the number nor the location of the substituent is particularly limited as long as it is within the scope of the gist of the present invention.) In addition, these condensed rings may be substituted with a substituted or unsubstituted alkyl group mentioned above. Examples of the substituents which this alkyl group can have include, for example, those similar to the substituents which the alkyl chain part of $R_{17}$ to $R_{20}$ mentioned below can have.

In the general formula (III) or the general formula (IV) of the organic dye compound A, electron-withdrawing group Y in $X_1$ and $X_2$ generally includes those having a positive value as the sigma constant σ (σm and σp, in particular, σp) in Hammett rule. Examples thereof includes a cyano group, a nitro group, a nitroso group, a halogen atom, a carboxyl group, a formyl group, an acyl group, a carboxylic acid ester function, a carbamoyl group, a trialkylamino group, halogenated alkyl groups such as a trifluoromethyl group, a sulfonate group, a sulfonic acid ester group, a sulfonyl group, a sulfamoyl group, a sulfinyl group. The acyl group, carboxylic acid ester group, carbamoyl group, trialkylamino group, halogenated alkyl groups such as trifluoromethyl group, sulfonate group, sulfonic acid ester group, sulfonyl group, sulfamoyl group, sulfinyl group include groups similar to those mentioned above.

In the general formula (III) or the general formula (IV) of the organic dye compound A, the linking group of Q represents a direct bond ($X_2$ becomes - Y), an alkylene group having 1 or 2 carbon atoms, an arylene group and a

heteroarylene group. Here, Y is an electron-withdrawing group, and the alkylene group, the arylene group, the heteroarylene group may have arbitrary substituent groups besides Y. When Q is an alkylene group, carbon atoms may have substituent groups which the below-mentioned $R_1$ to $R_{48}$ can have when they are alkyl chains besides hydrogen atom or an alkyl chain further branched therefrom. When Q represents a 6-membered arylene group, heteroarylene group, it is preferable that the electron-withdrawing group Y is located at the ortho or para position to the binding site, and when it is a 5-membered heteroarylene group, it is preferable that the binding site and the electron-withdrawing group are at position 2 and position 4, respectively. In addition, two or more Y groups may bind to these linking groups. Furthermore, there may be substituent groups at the point other than the position to which Y is bonded. Preferable linkages of these linking groups and the electron-withdrawing group are exemplified as follows.

[Chem. 38]

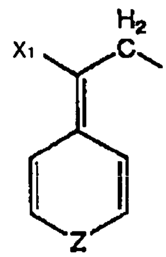
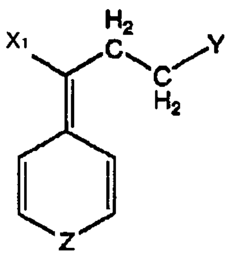
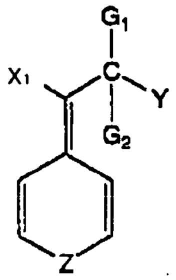
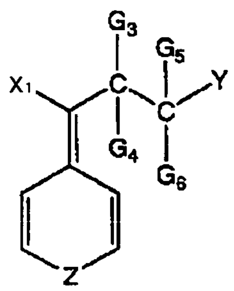
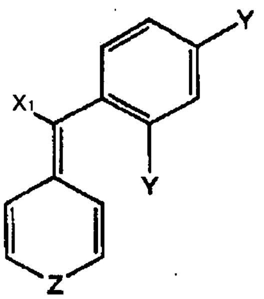
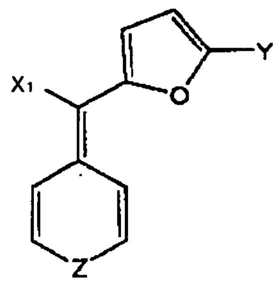

(In the examples above, $G_1$ to $G_6$ represent an arbitrary substituent having 1 to 4 carbon atoms or an alkyl chain which may be substituted, and $X_1$ and Y represent an electron-withdrawing group. Preferably, $X_1$ includes a cyano group, a nitro group, an acyl group, a carboxylic acid ester group, a carbamoyl group, a halogenated alkyl group, a sulfonyl group, a sulfamoyl group, a sulfinyl group. In addition, preferably, Y includes a cyano group, a nitro group, an acyl group, a carboxylic acid ester group, a carbamoyl group, a halogenated alkyl group, a sulfonyl group, a sulfamoyl group, a sulfinyl group. Furthermore, consecutive groups of Q preferably include an arylene group, a heteroarylene group.)

In the general formula (III) or the general formula (IV) of the organic dye compound A, Ring C represents a carbocyclic ketone structure or a heterocyclic ketone structure which may have a substituent group along with >C=O. The carbocyclic ketone and the heterocyclic ketone refer to a compound in which $-CH_2-$ or =CH- in an unsaturated or aromatic ring is replaced with >C=O. In addition, there may be a plurality of >C=O, >C=S or >C=NH in the ring structure part of ring C shown by a dotted line. The carbocyclic ketone structure and the heterocyclic ketone structure formed by ring C may be unsaturated or saturated, and the number of ring member does not particularly matter. The number of hetero atom in a heterocycle is not particularly limited either. In addition, the hydrogen atom of the hydrocarbon group moiety in the ring or -NH- constituting a ring may be substituted with an arbitrary substituent. For a substituent, an alkyl group and an aryl group are particularly preferable.

As for the carbocyclic ketone structure and the heterocyclic ketone structure, part of the ring may be condensed with a further ring to form a condensed ring structure. The ring structure condensed to form a cyclic ketone structure may be either a hydrocarbon ring or a heterocycle, but preferably it is a benzene ring or 5- or 6-membered heteroaromatic ring. The structures shown by the cyclic ketone are exemplified below.

[Chem. 39]

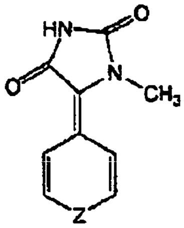
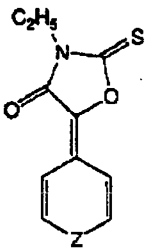
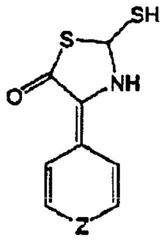
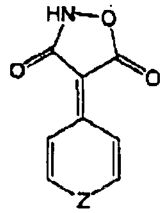
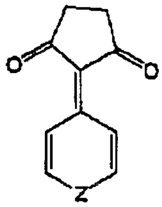
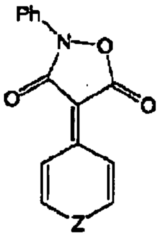
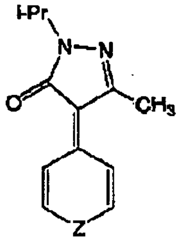
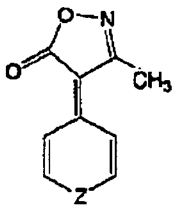
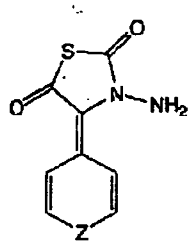
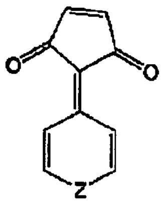
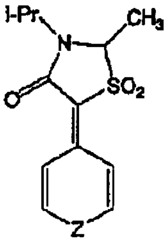
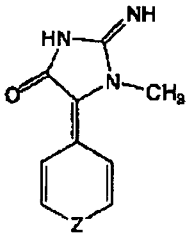
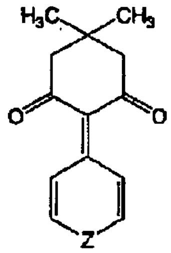
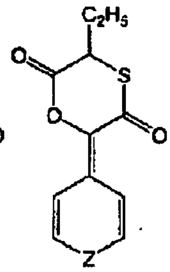
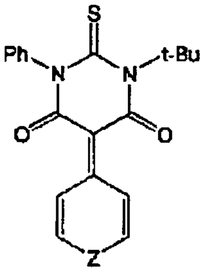
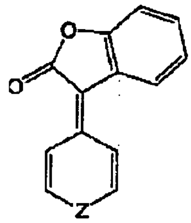
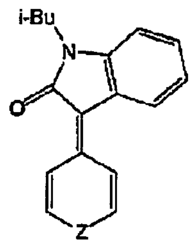
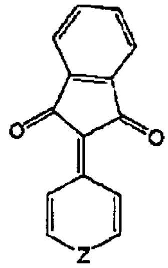
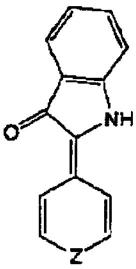
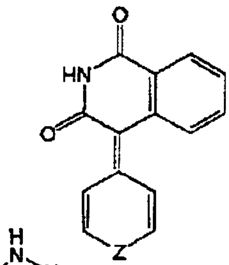
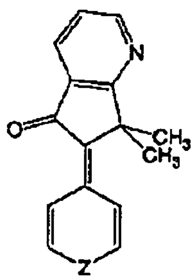
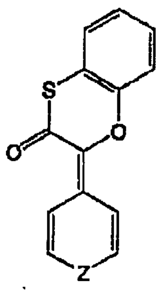
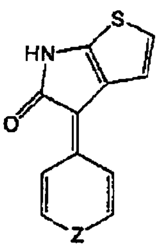
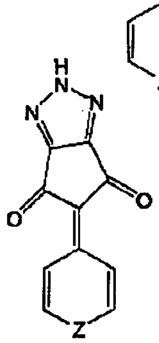

Preferable examples of the carbocyclic ketone structure and the heterocyclic ketone structure which ring C forms include a 5- or 6-membered saturated hydrocarbon ring and a 5- or 6-membered saturated or unsaturated heterocycle.

In the general formula (III) or the general formula (IV) of the organic dye compound A, hydrocarbon groups in $R_{21}$ of $-NR_{21}-$ of Z represents a linear or branched alkyl group having 1 to 18 carbon atoms such as a methyl group, an ethyl group, a propyl group, an isopropyl group, a n-butyl group, a sec-butyl group, a tert-butyl group and a n-heptyl group; a cyclic alkyl groups having 3 to 18 carbon atoms such as a cyclopropyl group, a cyclopentyl group, a cyclohexyl group and an adamanthyl group; a linear or branched alkenyl group having 2 to 18 carbon atoms such as a vinyl group, a propenyl group and a hexenyl group; a cyclic alkenyl group having 3 to 18 carbon atoms such as a cyclopentenyl

group and a cyclohexenyl group; an aralkyl group having 7 to 20 carbon atoms such as a benzyl group, a phenethyl group; an aryl group having 6 to 18 carbon atoms such as a phenyl group, a tolyl group, a xylyl group, a mesityl group. The alkyl chain moiety and the aryl group moiety of these groups may be further substituted with a substituent which the below mentioned $R_1$ to $R_{48}$ can have when they become an alkyl chain.

The heterocyclic group represented by $R_{21}$ may be a saturated heterocycle such as a 4-piperidyl group, a morpholino group, a 2-morpholinyl group, a piperazyl group, or an aromatic heterocycle such as 2-furyl group, 2-pyridyl group, 2-thiazolyl group, 2-quinolyl group. These may include a plurality of hetero atoms, or may have further substituent groups and the bonded position is not limited, either. Preferable structures as a heterocycle are a 5- or 6-membered saturated heterocycle, a 5- or 6-membered monocyclic of bicyclic fused aromatic heterocyclic ring thereof. These groups may be further substituted with a substituent which the below mentioned $R_1$ to $R_{48}$ can have when they become an alkyl chain.

When $R_{21}$ has an alkyl chain as a hydrocarbon group which may be substituted, it may bond to $R_{18}$ or $R_{20}$, $R_{18}$' or $R_{20}$' to form a saturated or unsaturated hydrocarbon ring or a saturated or unsaturated heterocycle structure. The number of ring member of the of cyclic structure is not particularly limited, but preferred is 5- to 6-membered ring both for hydrocarbon ring and heterocycle. These preferable condensed ring structures are shown below.

[Chem. 40]

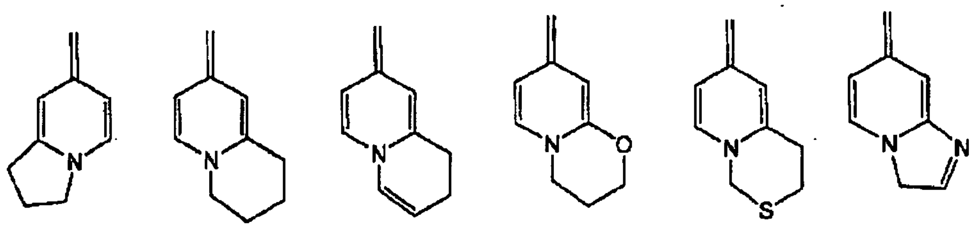

$R_{22}$ and $R_{23}$ of $-NR_{22}R_{23}$ include groups similar to the hydrocarbon group and heterocyclic group exemplified as $R_{21}$. $R_{24}$ of $-COR_{24}$ includes similar groups to the hydrocarbon group and the heterocyclic group similarly as for $R_{21}$. $R_{25}$ of $-COR_{25}$ represents either of a hydrocarbon group or a heterocyclic group, and includes similar groups to the hydrocarbon group and the heterocyclic group similarly as for $R_{21}$. Examples of preferable $-NR_{21}-$ include the following.

[Chem. 41]

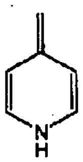
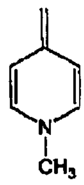
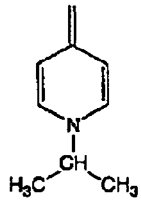
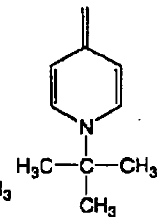
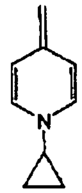
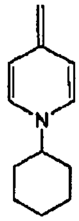
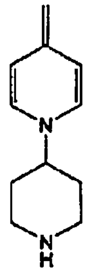
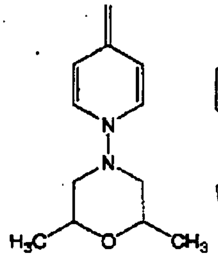
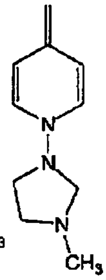
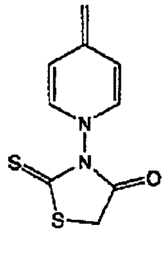
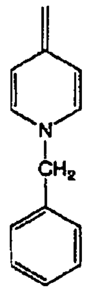
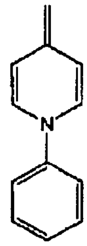
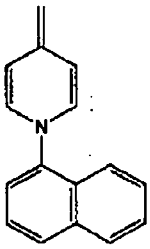
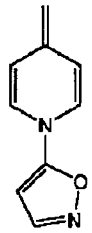
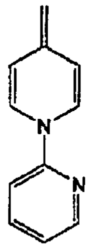
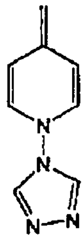
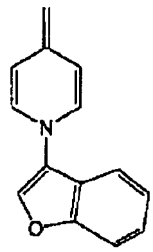
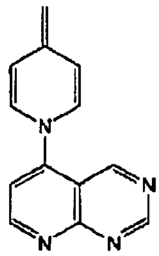
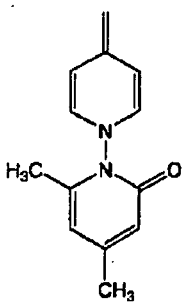
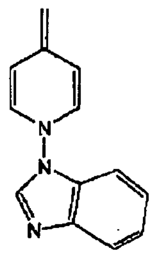
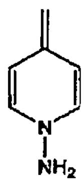
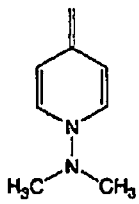
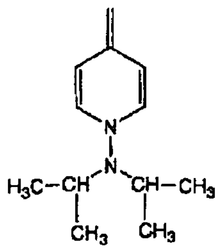

[Chem. 42]

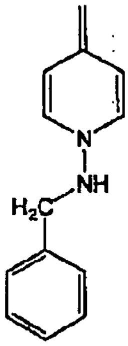
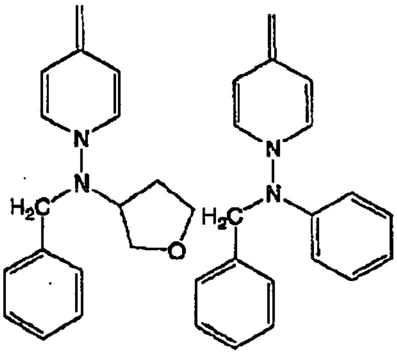
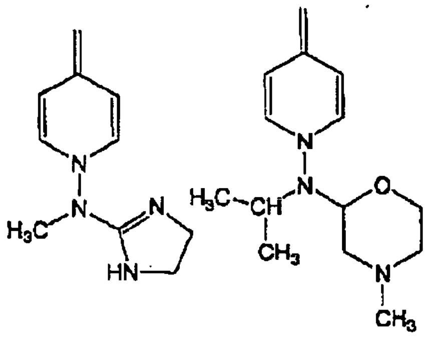

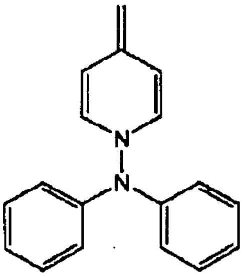
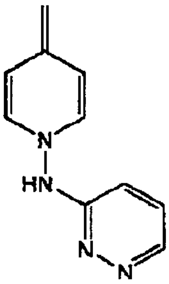
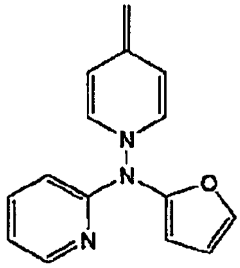
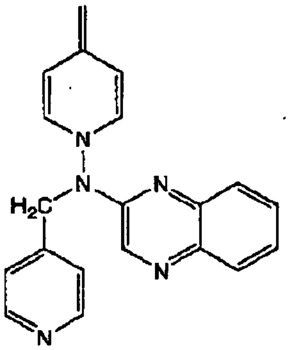

Preferable examples of the compound expressed by the general formula (III) or the general formula (IV) of the organic dye compound A include the following (A(1) to A(103)). Et represents an ethyl group, Bu represents a butyl group and Ph represents a phenyl group.

[Chem. 43]

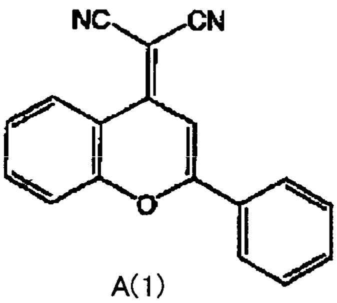

A(1)

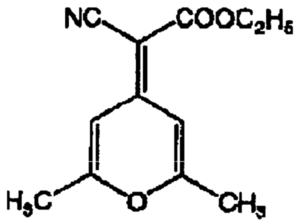

A(2)

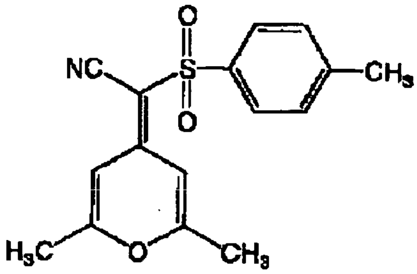

A(3)

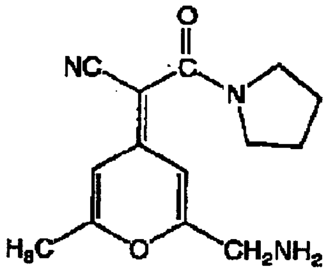

A(4)

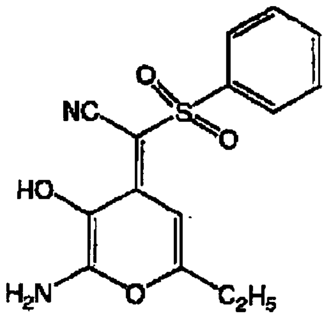

A(5)

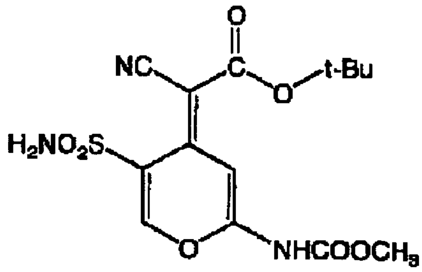

A(6)

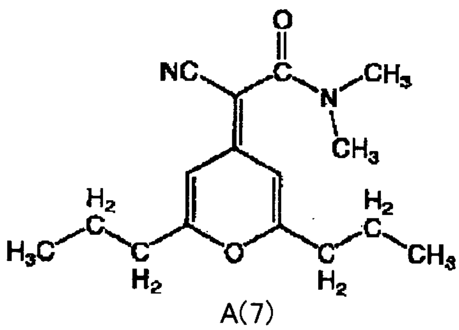

A(7)

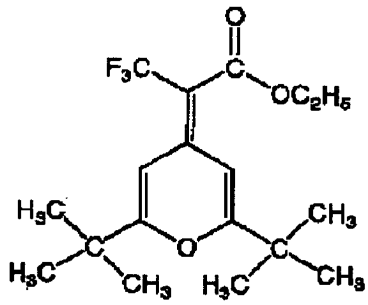

A(8)

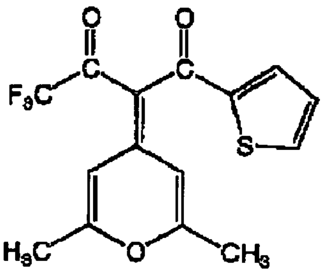

A(9)

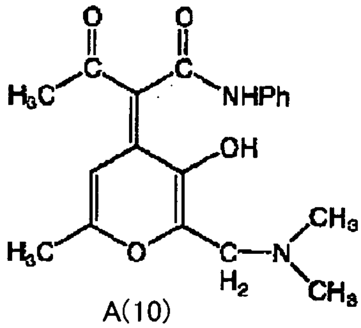

A(10)

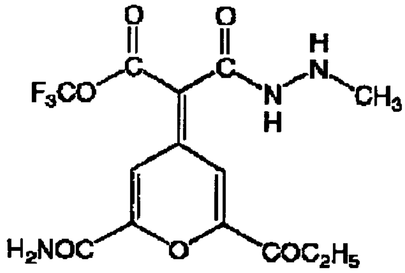

A(11)

[Chem. 44]

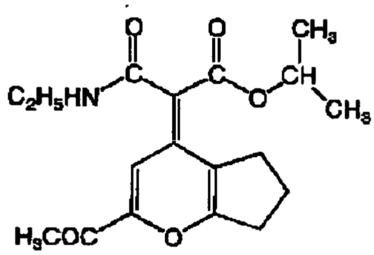

A(12)

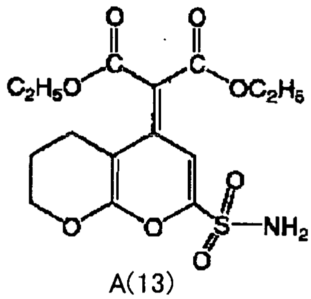

A(13)

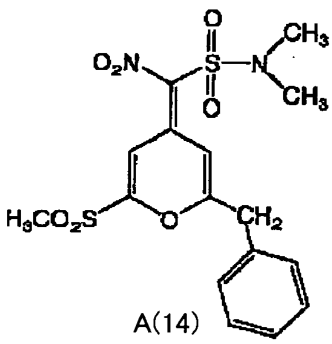

A(14)

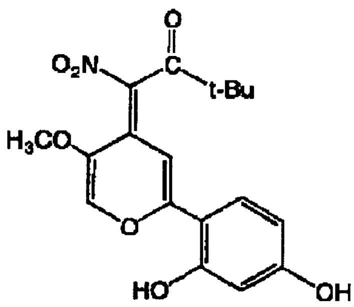

A(15)

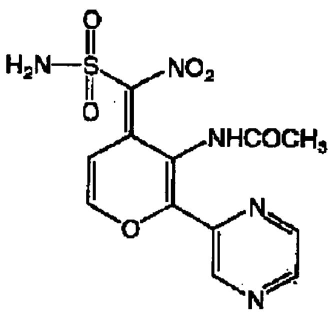

A(16)

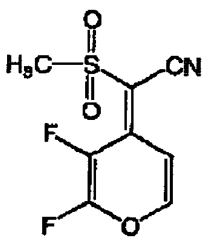

A(17)

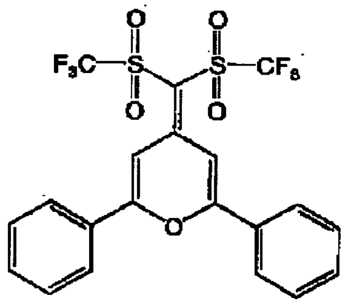

A(18)

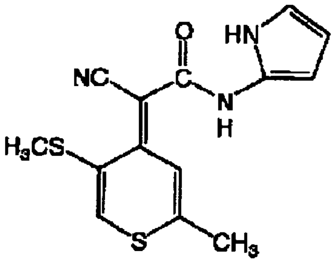

A(19)

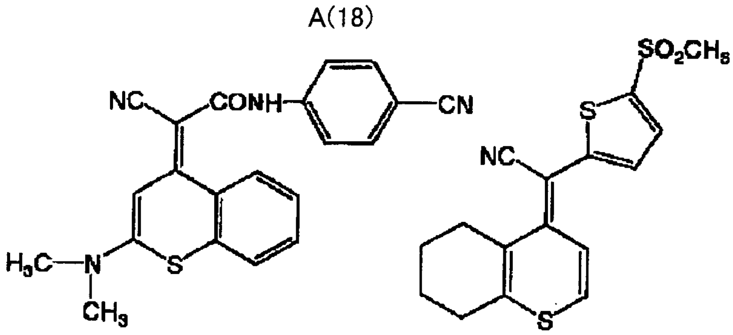

A(20)

A(21)

[Chem. 45]

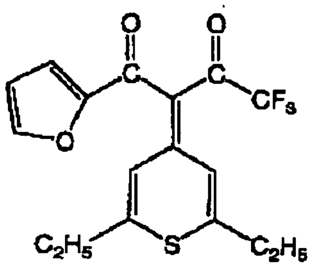

A(22)

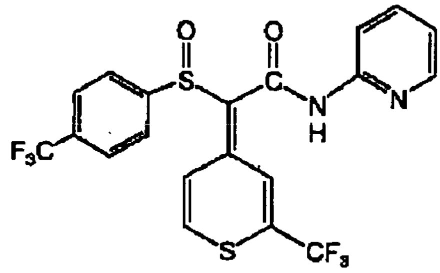

A(23)

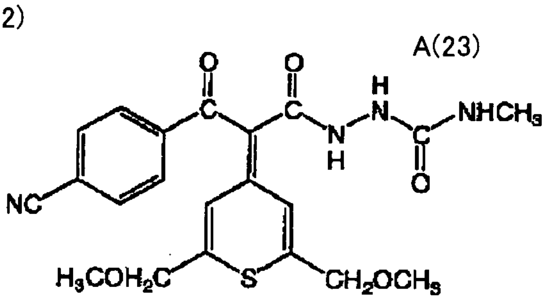

A(24)

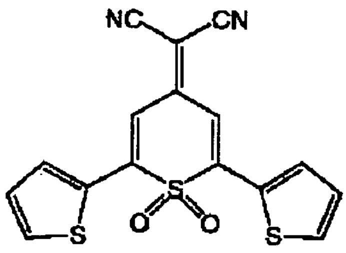

A(25)

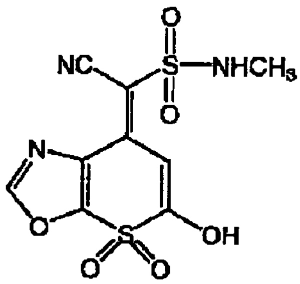

A(26)

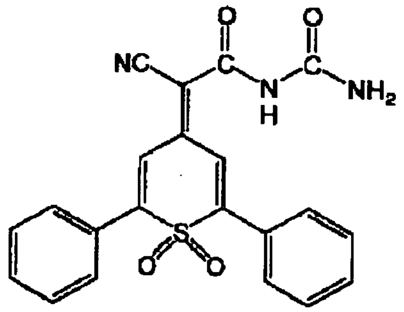

A(27)

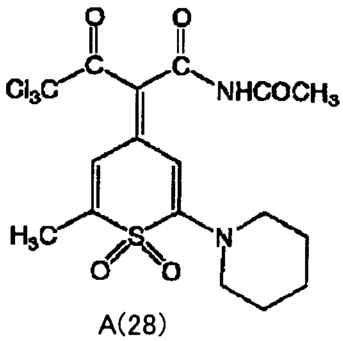

A(28)

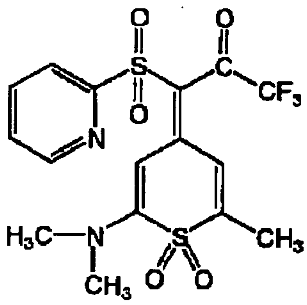

A(29)

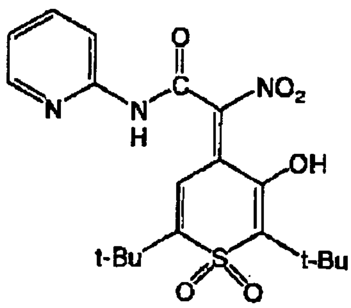

A(30)

[Chem. 46]

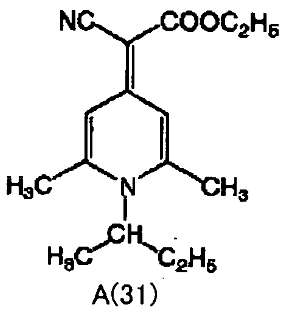

A(31)

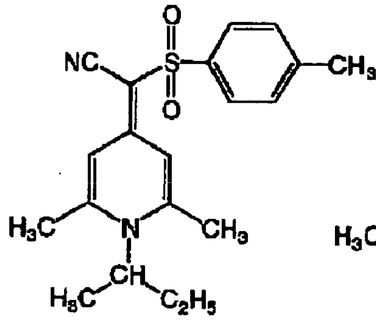

A(32)

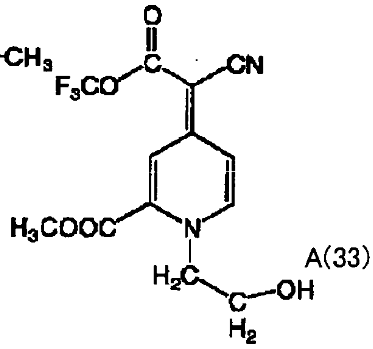

A(33)

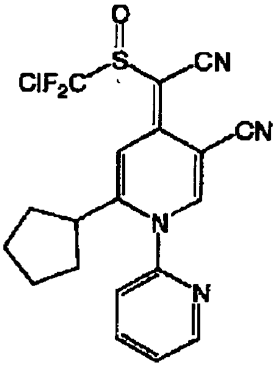

A(34)

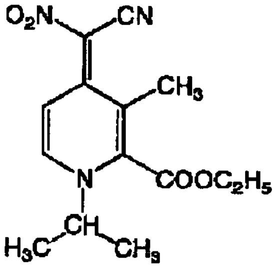

A(35)

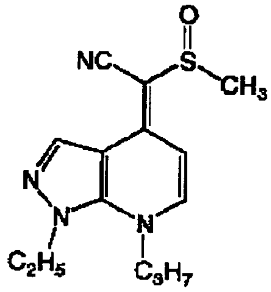

A(36)

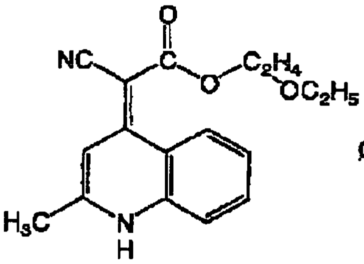

A(37)

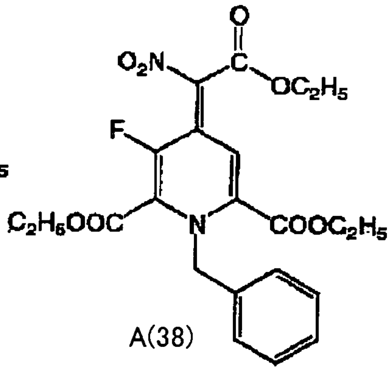

A(38)

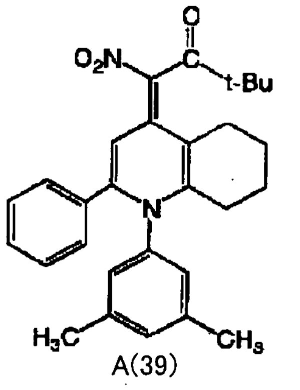

A(39)

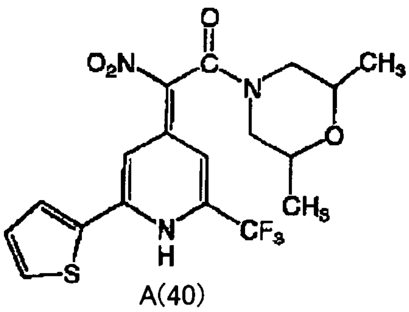

A(40)

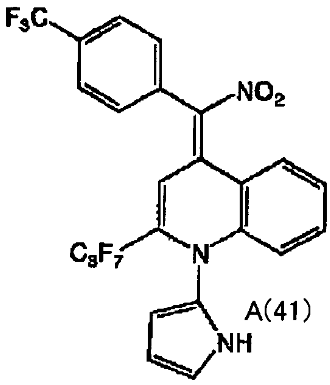

A(41)

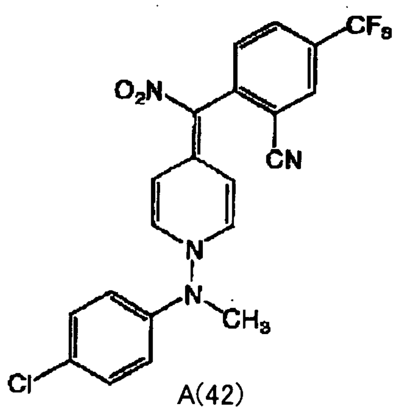

A(42)

[Chem. 47]

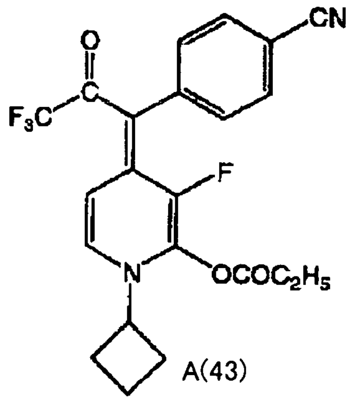
A(43)

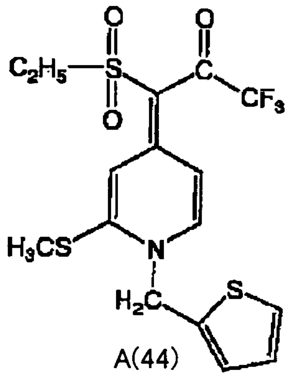
A(44)

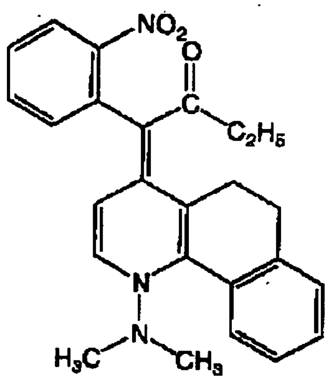
A(45)

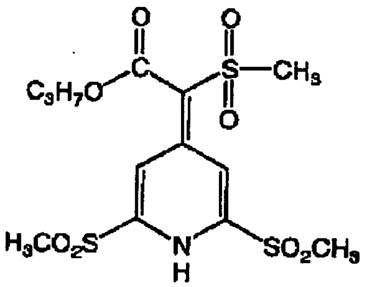
A(46)

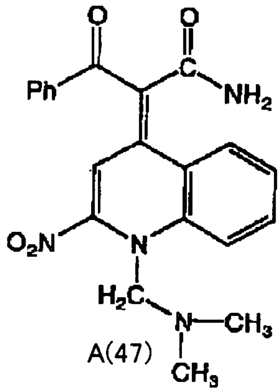
A(47)

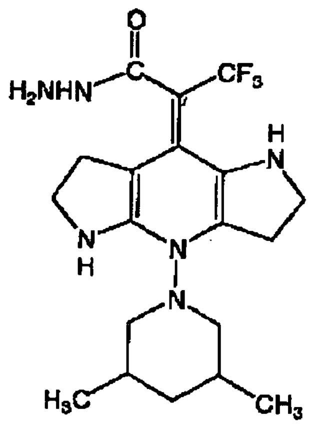
A(48)

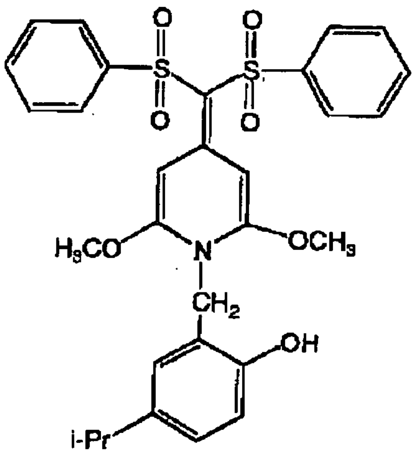
A(49)

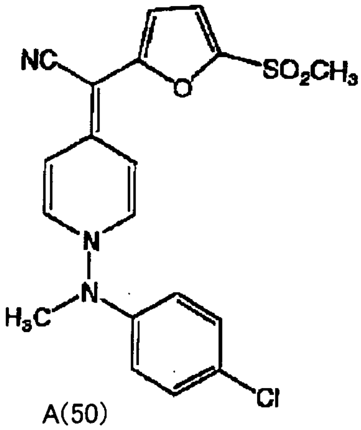
A(50)

[Chem. 48]

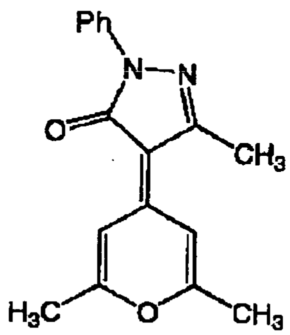

A(51)

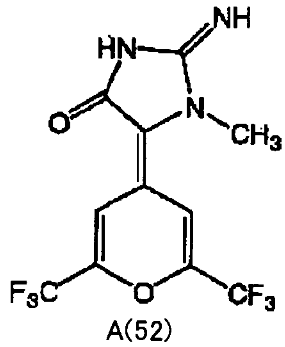

A(52)

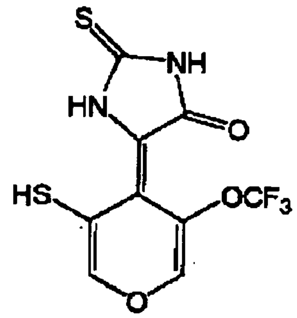

A(53)

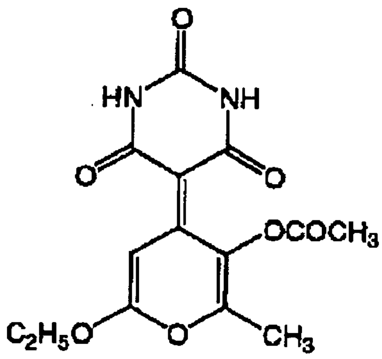

A(54)

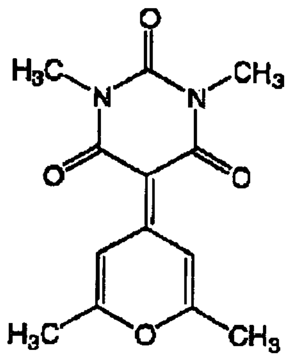

A(55)

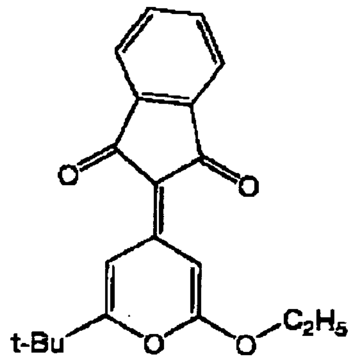

A(56)

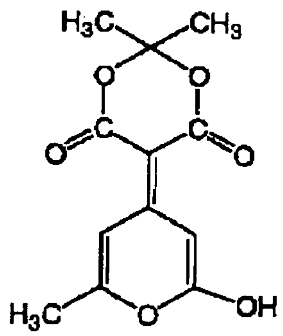

A(57)

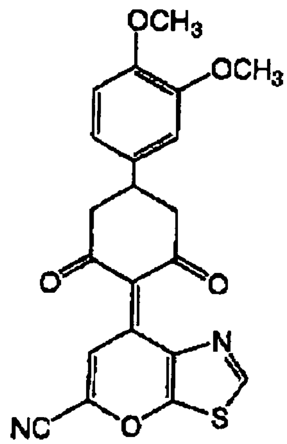

A(58)

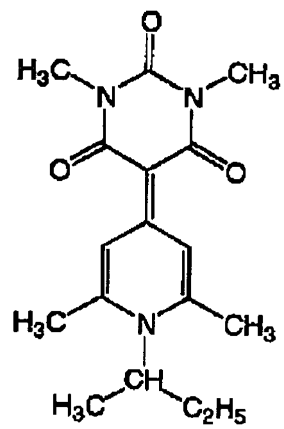

A(59)

[Chem. 49]

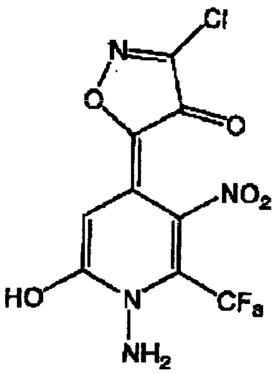

A(60)

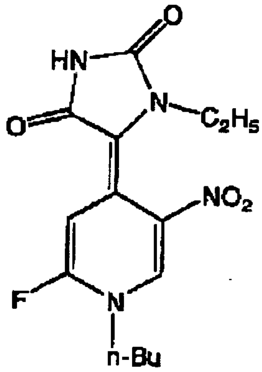

A(61)

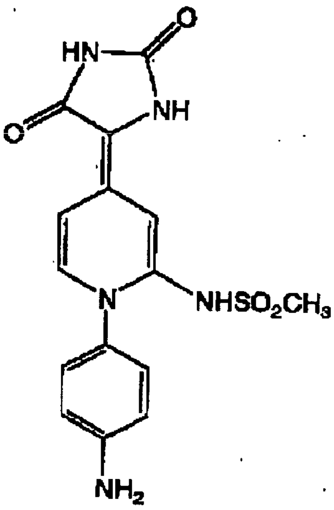

A(62)

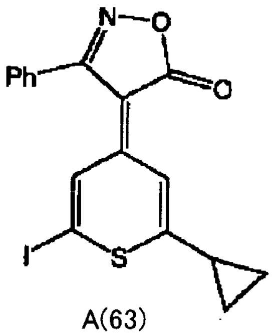

A(63)

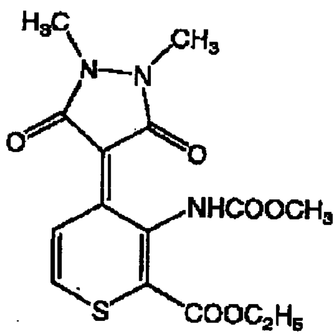

A(64)

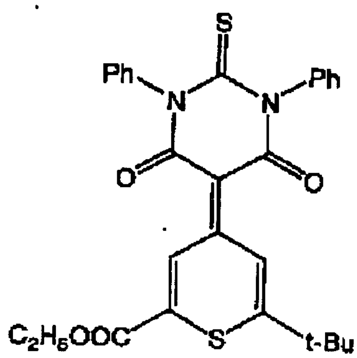

A(65)

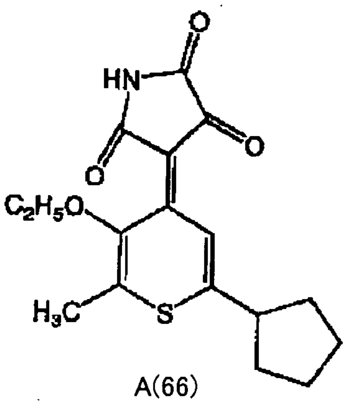

A(66)

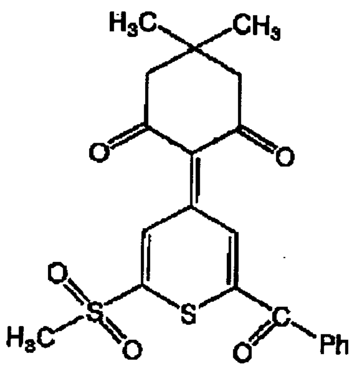

A(67)

[Chem. 50]

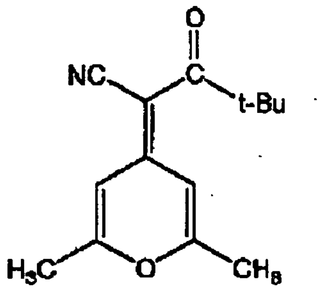

A(68)

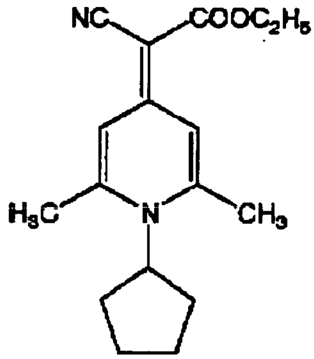

A(69)

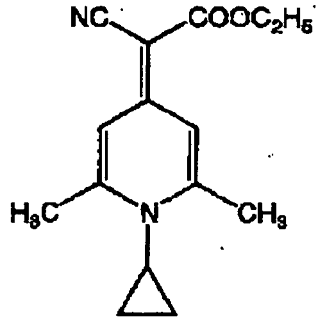

A(70)

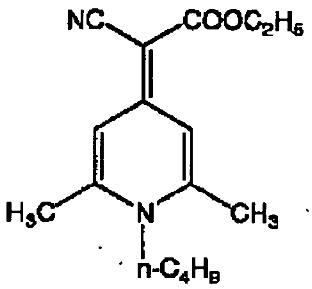

A(71)

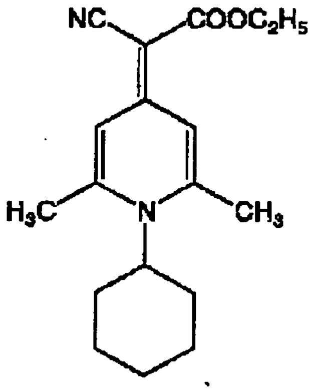

A(72)

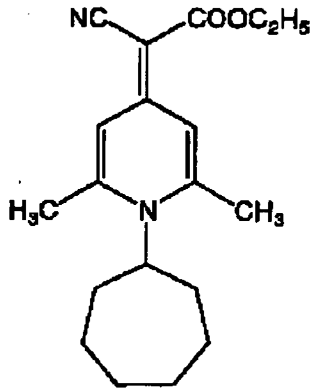

A(73)

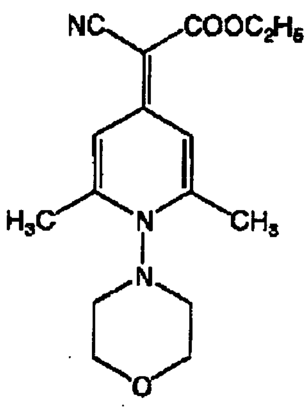

A(74)

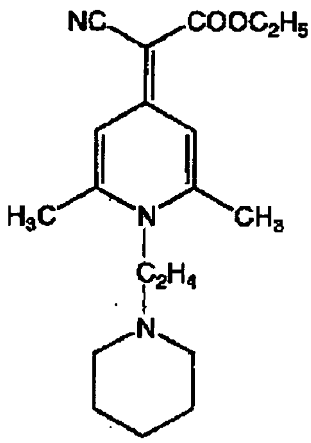

A(75)

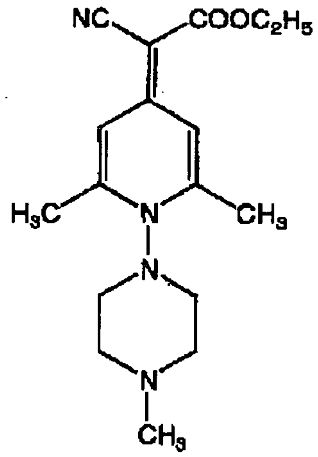

A(76)

[Chem. 51]

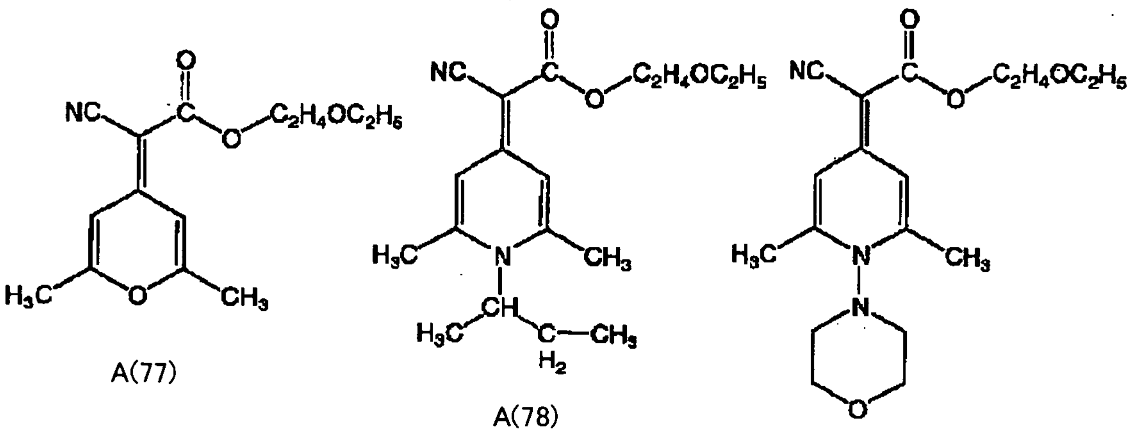

A(77) A(78) A(79)

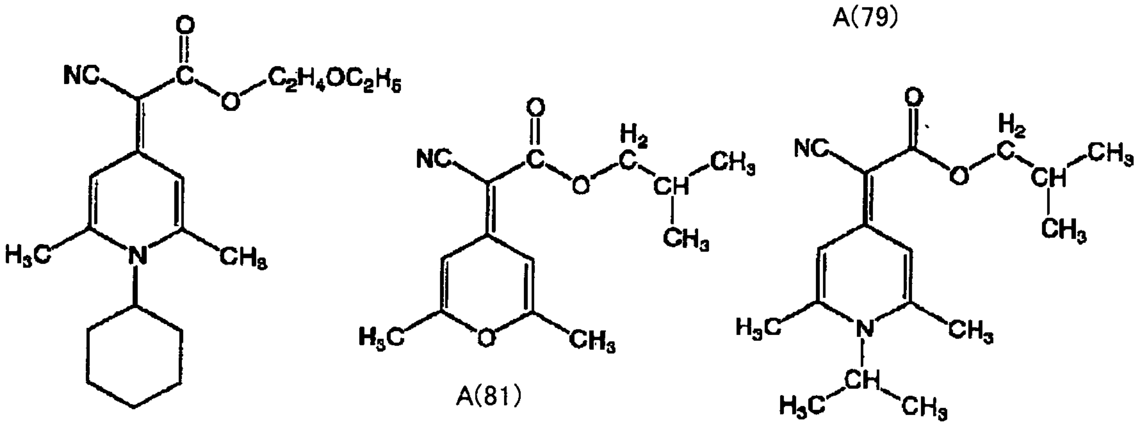

A(80) A(81) A(82)

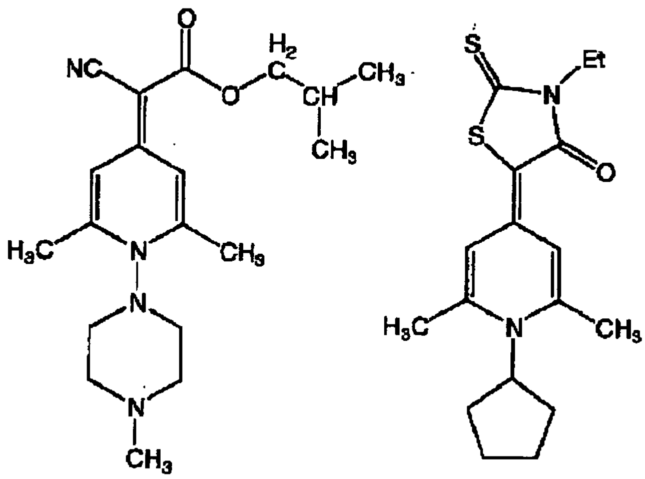

A(83) A(84)

[Chem. 52]

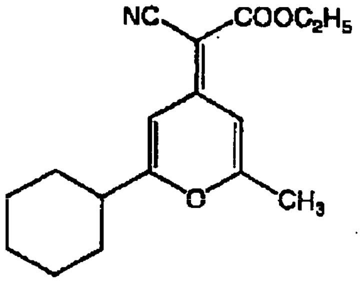
A(85)

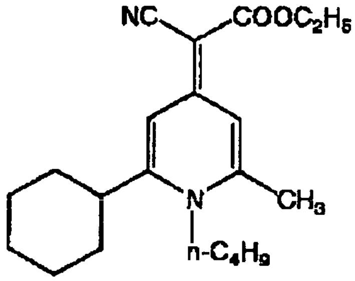
A(86)

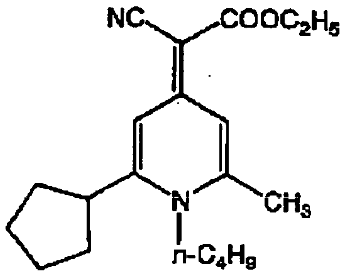
A(87)

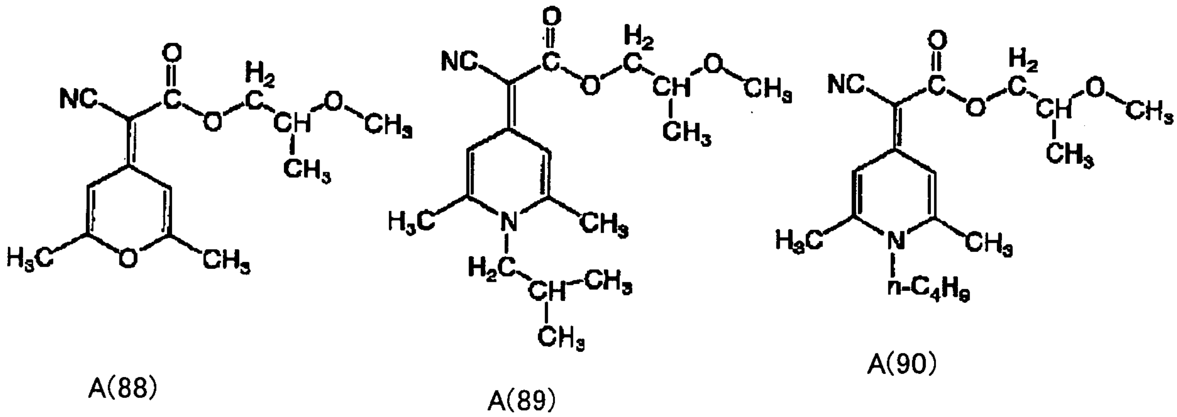
A(88)

A(89)

A(90)

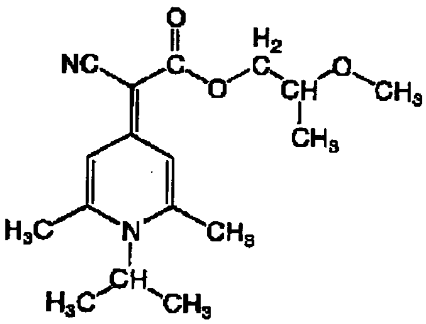
A(91)

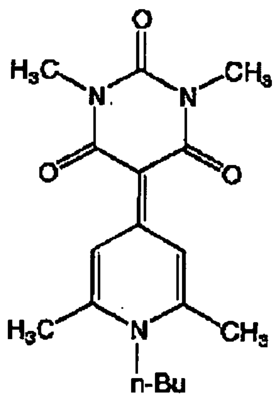
A(92)

[Chem. 53]

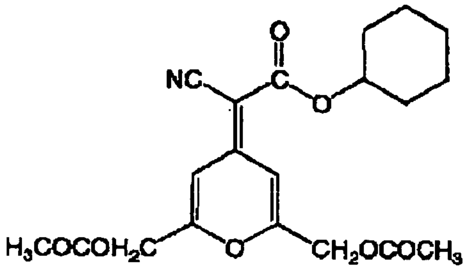

A(93)

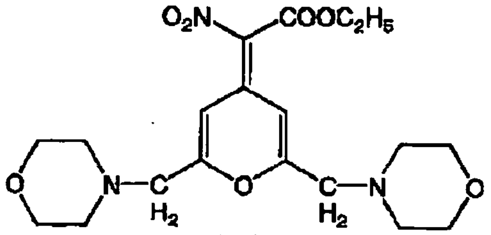

A(94)

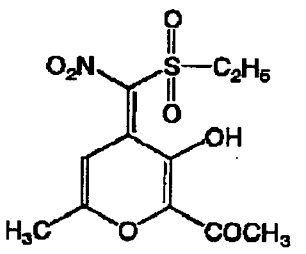

A(95)

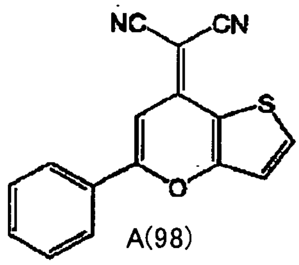

A(98)

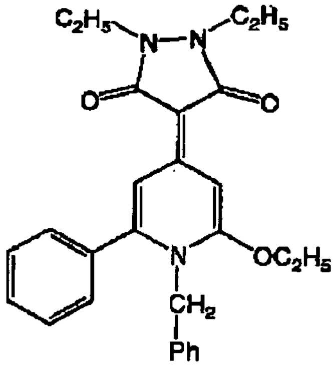

A(96)

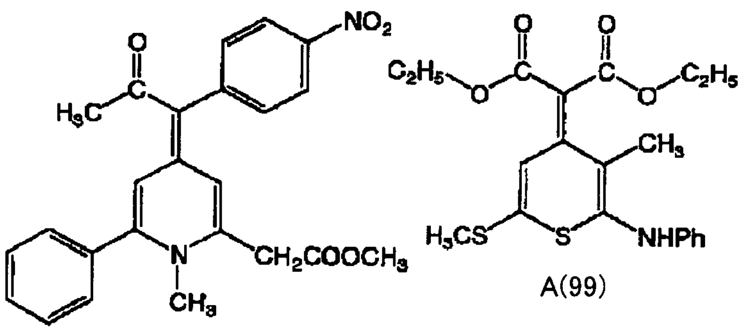

A(97)

A(99)

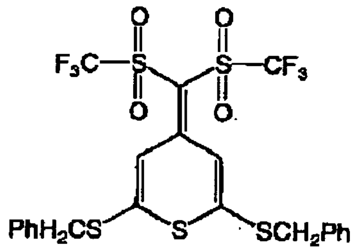

A(100)

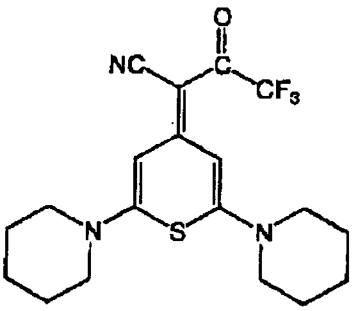

A(101)

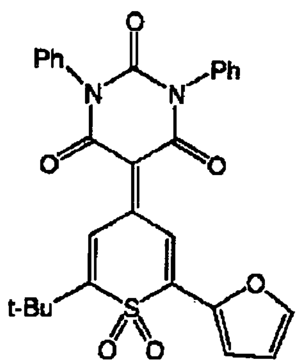

A(102)

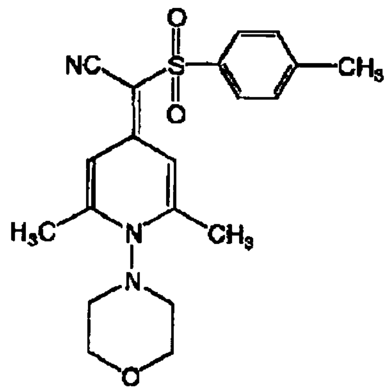

A(103)

Secondly, it is preferable to use a compound represented by the above-mentioned general formula (V) for the organic dye compound A in the optical recording material to which embodiment of the invention is applied.
In the general formula (V), X represents an oxygen atom, a sulfur atom or -N-$R_{33}$. $R_{26}$, $R_{27}$, $R_{28}$, $R_{29}$, $R_{30}$ each independently represent a hydrogen atom, a linear or branched alkyl group having 1 to 12 carbon atoms; a cyclic alkyl groups having 3 to 12 carbon atoms; a linear or branched alkenyl group having 2 to 12 carbon atoms; an aralkyl group having 7 to 18 carbon atoms; a linear or branched alkoxy group having 1 to 12 carbon atoms; a linear or branched alkylthio group having 1 to 12 carbon atoms; an aryl group having 6 to 18 carbon atoms; a saturated or unsaturated heterocyclic

group; a halogen atom; a nitro group; a cyano group; a mercapto group; a hydroxy group; a formyl group; an acyl group represented by -$COR_{34}$; an amino group represented by -$NR_{35}R_{36}$; an acylamino group represented by -$NHCOR_{37}$; a carbamate group represented by -$NHCOOR_{38}$; a carboxylic acid ester group represented by -$COOR_{39}$; an acyloxy group represented by -$OCOR_{40}$; a carbamoyl group represented by -$CONR_{41}R_{42}$; a sulfonyl group represented by -$SO_2R_{43}$; a sulfinyl group represented by -$SOR_{44}$; a sulfamoyl group represented by -$SO_2NR_{45}R_{46}$; a sulfonamide group represented by -$NHSO_2R_{47}$.

$R_{31}$, $R_{32}$, $R_{33}$ each independently represent a hydrogen atom, a linear or branched alkyl group, a cyclic alkyl group, an aralkyl group, a linear or branched alkenyl group, an acyl group. In addition, two adjacent groups among $R_{26}$ to $R_{33}$ may bond to each other and may form a saturated hydrocarbon ring or a saturated heterocycle (wherein $R_{34}$, $R_{37}$, $R_{38}$, $R_{39}$, $R_{40}$, R43, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group.)

Preferably among the above group, $R_{26}$, $R_{27}$, $R_{28}$, $R_{29}$, $R_{30}$ are a hydrogen atom, a linear or branched alkyl group having 1 to 8 carbon atoms; a cyclic alkyl groups having 3 to 8 carbon atoms; an aralkyl group having 7 to 12 carbon atoms; a linear or branched alkoxy group having 1 to 8 carbon atoms; a linear or branched alkylthio group having 1 to 8 carbon atoms; an aryl group having 6 to 12 carbon atoms; a saturated or unsaturated heterocyclic group of monocycle of 2-condensed ring; a halogen atom; a nitro group; a cyano group; a mercapto group; a hydroxy group; a formyl group; an acyl group represented by -$COR_{34}$; an amino group represented by -$NR_{35}R_{36}$; an acylamino group represented by -$NHCOR_{37}$; a carbamate group represented by -$NHCOOR_{38}$; a carboxylic acid ester group represented by -$COOR_{39}$; an acyloxy group represented by -$OCOR_{40}$; a carbamoyl group represented by -$CONR_{41}R_{42}$ and a sulfonamide group represented by -$NHSO_2R_{48}$.

These substituent groups are useful in that they have an effect of enhancing solubility to a coating solvent (particularly, those having an alkyl group moiety) and can shift the absorption maximum wavelength (λmax) to the longer wavelength (particularly, an aryl group, an unsaturated heterocycle, electron-withdrawing groups such as an alkyl halide group or a cyano group), and a group having these in $R_{26}$ and $R_{27}$ is particularly preferable.

$R_{31}$, $R_{32}$, $R_{33}$ each independently represent a hydrogen atom, a linear or branched alkyl group which may be substituted, a cyclic alkyl group which may be substituted, an aralkyl group which may be substituted, a linear or branched alkenyl group which may be substituted, or an acyl group.

Preferably $R_{31}$, $R_{32}$, $R_{33}$ are a hydrogen atom, a linear or branched alkyl group having 1 to 12 carbon atoms and a cyclic alkyl group having 3 to 12 carbon atoms an aralkyl group having 7 to 18 carbon atoms.

Because the absorption maximum wavelength (λmax) shifts to the longer wavelength side particularly in $R_{31}$ and $R_{32}$ by increasing electro-donating properties of the amino group, and can increase in the absorption for a blue laser. On this account, it is particularly preferable that $R_{31}$ and $R_{32}$ are unsubstituted linear or branched alkyl groups or cyclic alkyl groups. However, excessive number of carbon atoms do not show a significant effect on the wavelength, and may oppositely arise problems that absorption intensity decreases and the product does not solidify, and therefore the number of carbon atoms of $R_{31}$, and $R_{32}$ is preferably around 1 to 8.

In addition, either adjacent two of $R_{26}$ to $R_{33}$ may bond together and may form a saturated hydrocarbon ring and $R_{26}$ to $R_{30}$ each independently may represent a hetero atom such as an oxygen atom, a sulfur atom, a nitrogen atom and may form a condensed saturated heterocycle at the end thereof.

Preferred as the above-mentioned condensed ring structure are 5- to 7-membered ring structure in which $R_{29}$ and $R_{31}$ or $R_{30}$ and $R_{32}$ are condensed. $R_{31}$ and $R_{32}$ having an amino group structure can further shift λmax to a longer wavelength side by taking a condensed structure with adjacent substituent groups and are preferable in that enhancement in solubility can also be expected. Furthermore, the ring formed by bonding of these may further have a substituent group. Specific examples of the ring structure include the structures shown below.

[Chem. 54]

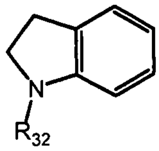
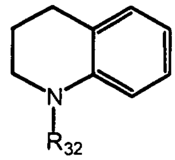
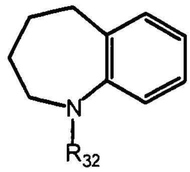
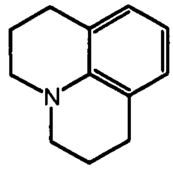

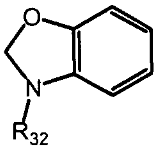
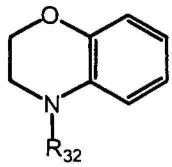
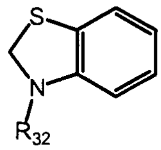
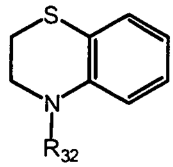

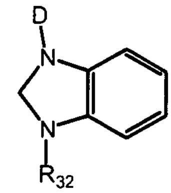
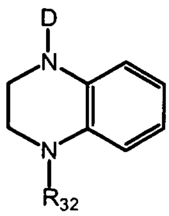
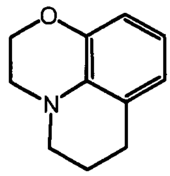
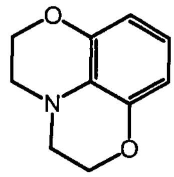

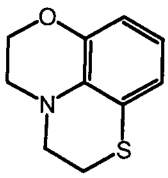
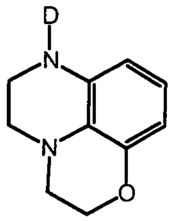

Wherein D represents similar substituent groups as $R_{31}$ and $R_{32}$.

Specific examples of preferable compounds represented by the general formula (V) are shown below.

[Chem. 55]

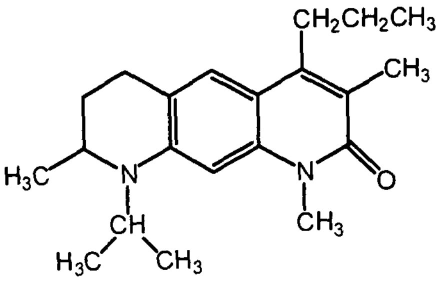

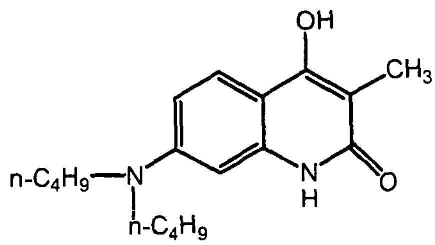

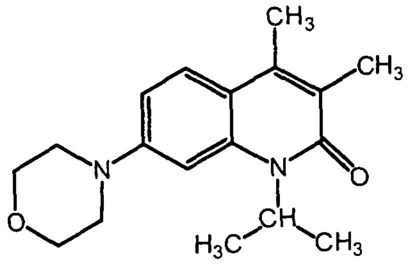

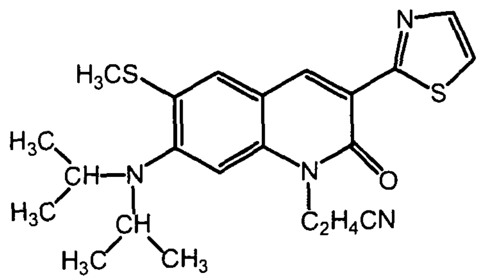

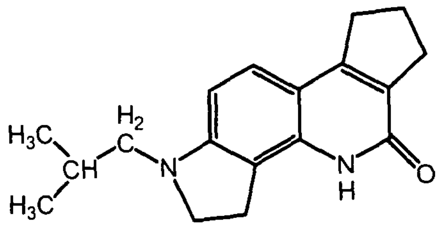

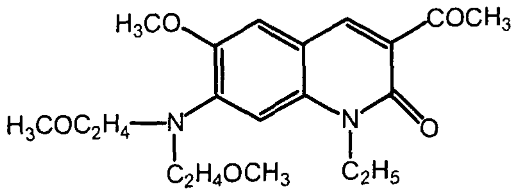

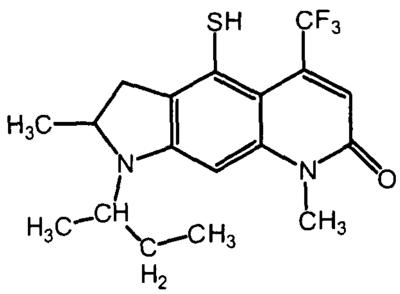

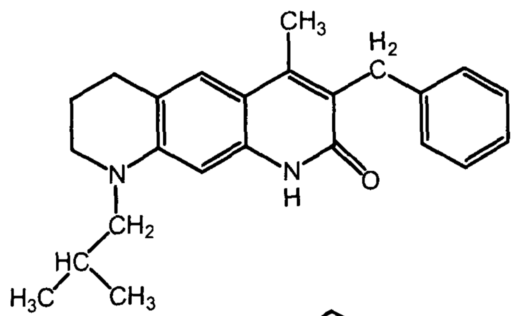

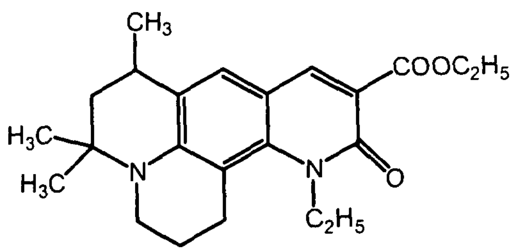

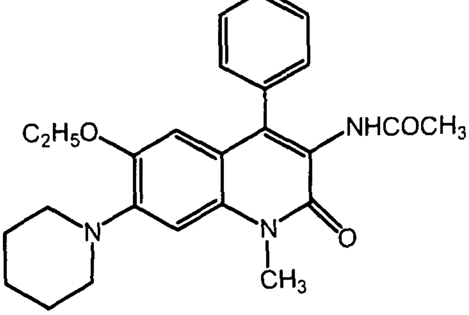

[Chem. 56]

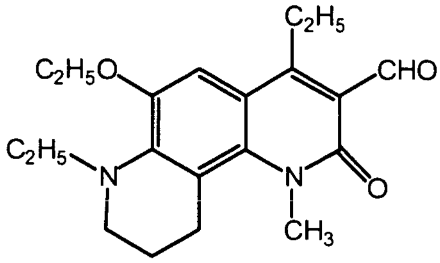

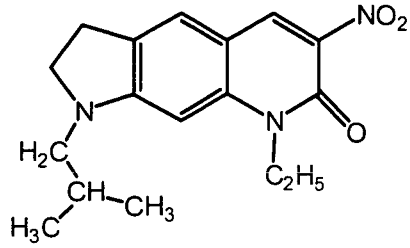

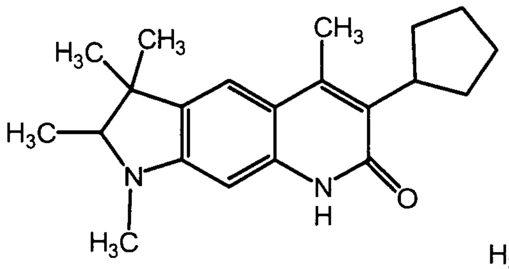

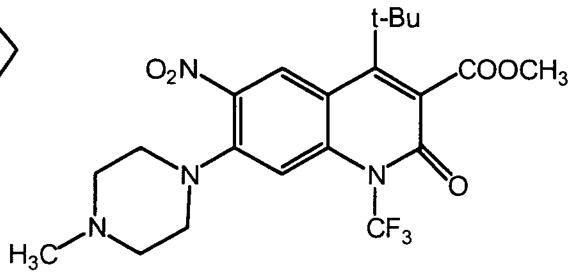

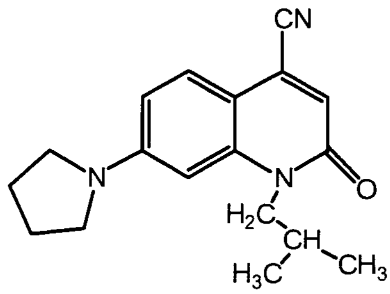

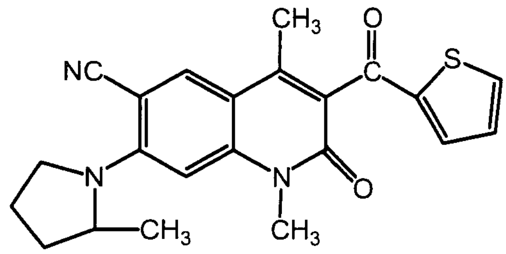

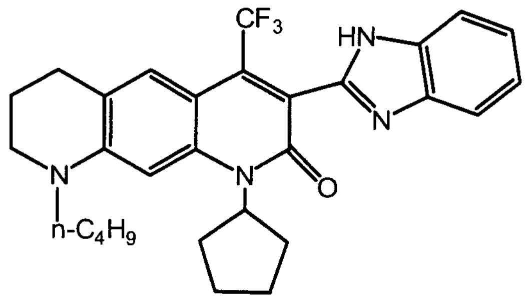

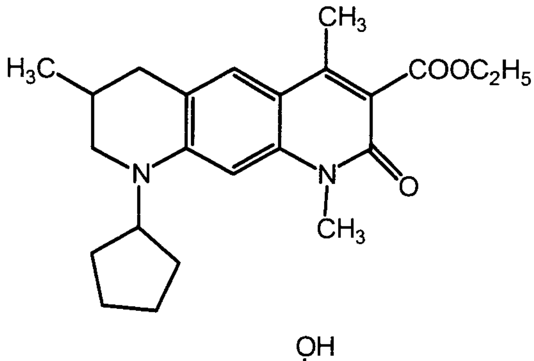

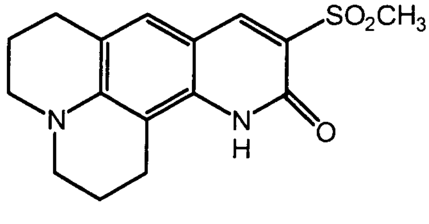

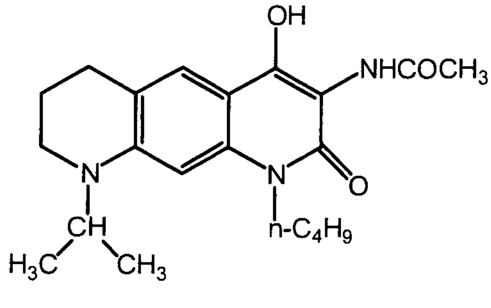

[Chem. 57]

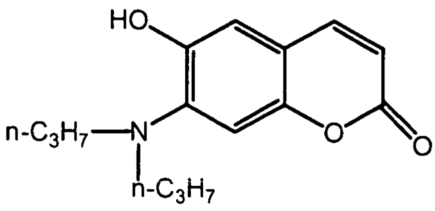

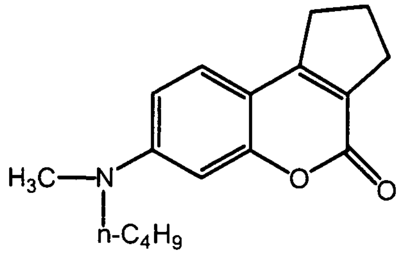

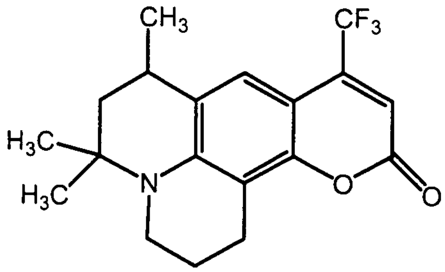

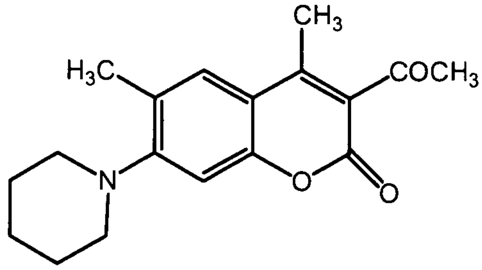

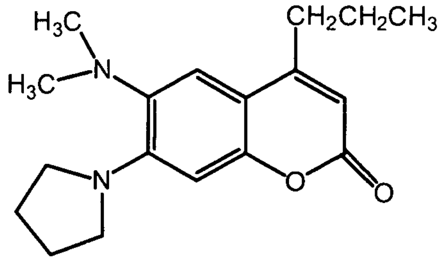

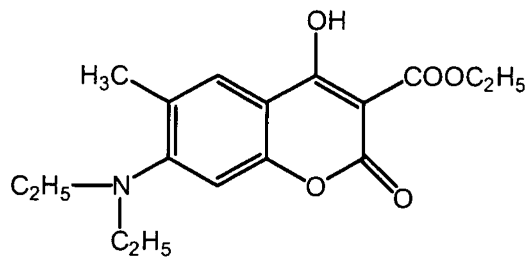

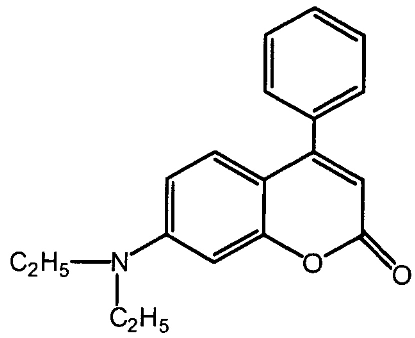

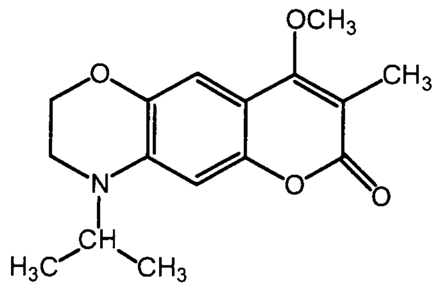

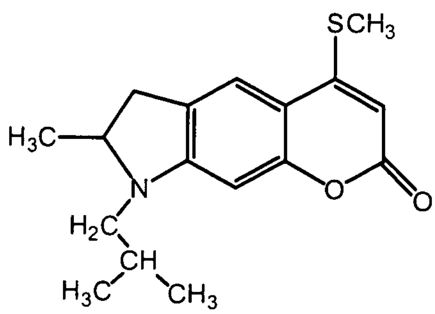

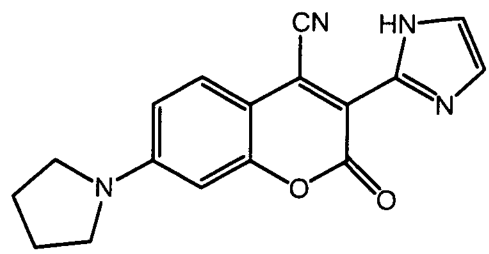

[Chem. 58]

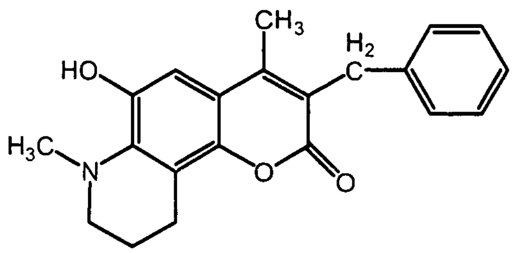
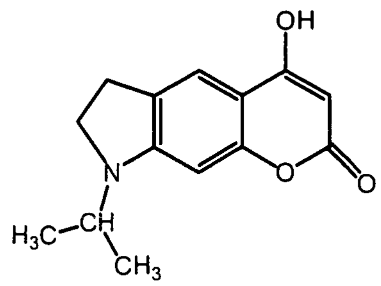
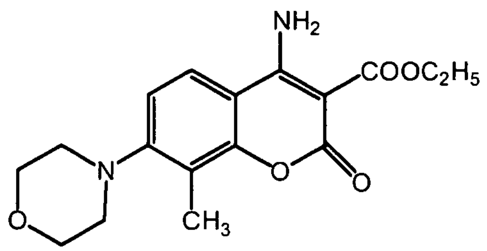
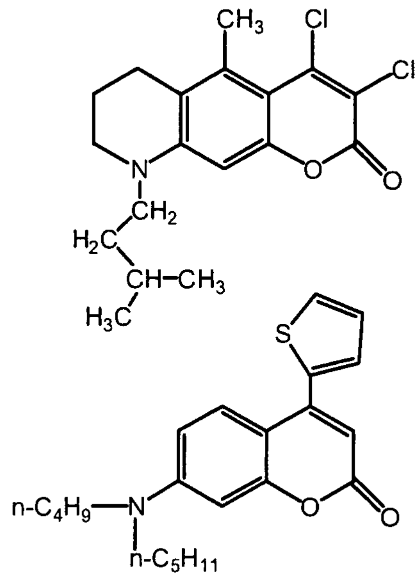
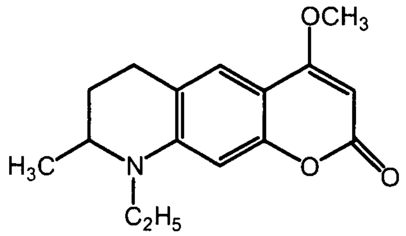
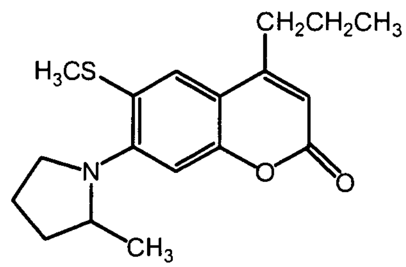
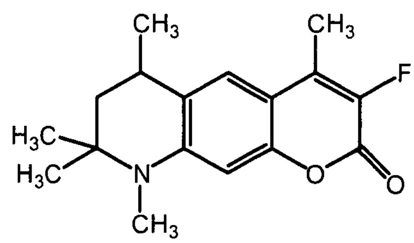
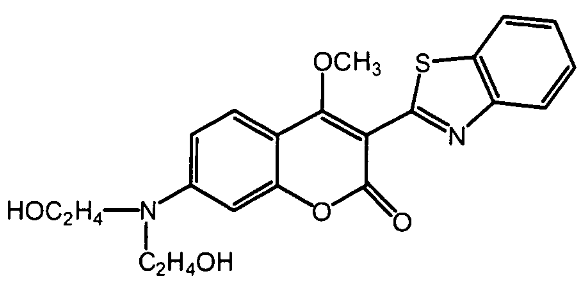
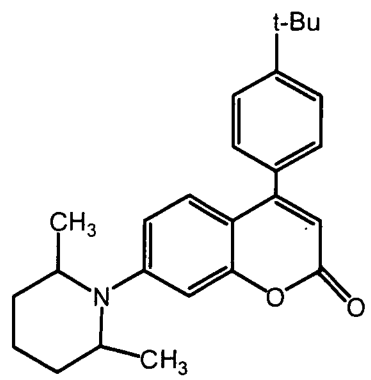

[Chem. 59]

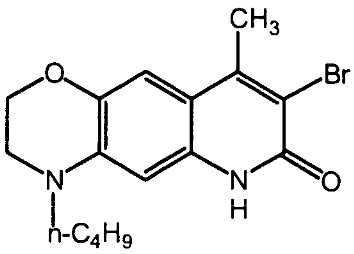

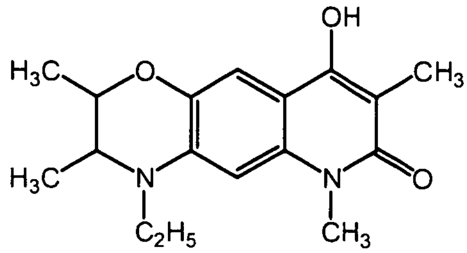

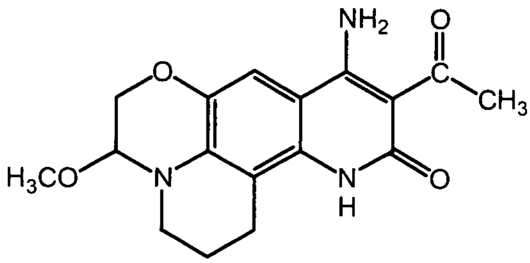

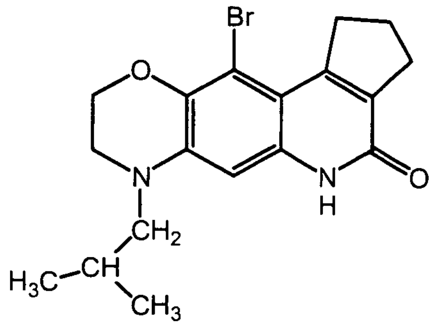

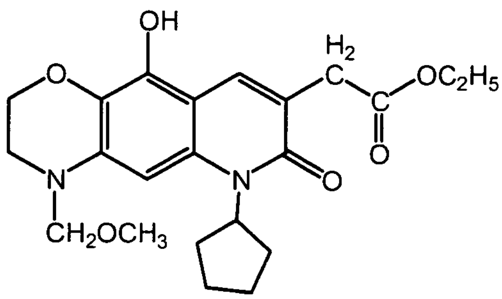

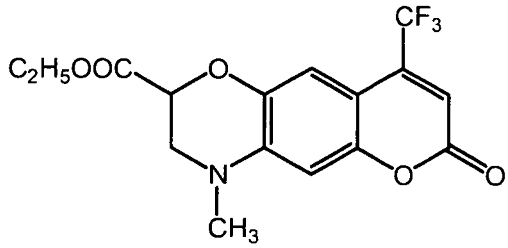

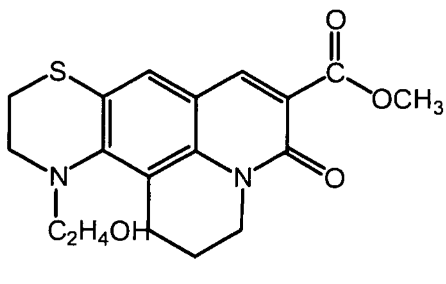

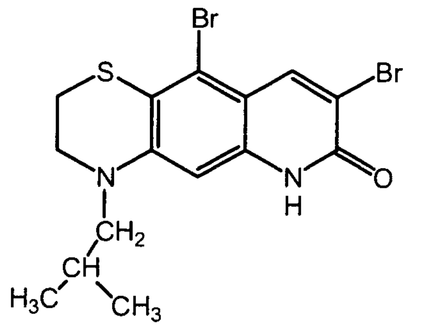

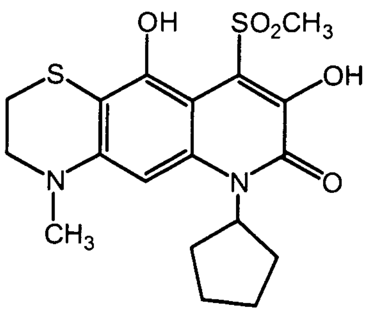

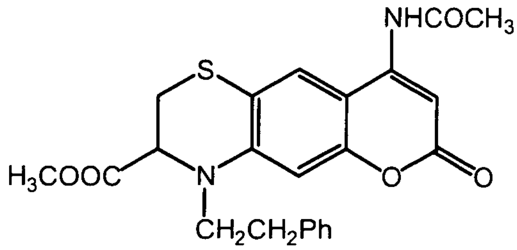

[Chem. 60]

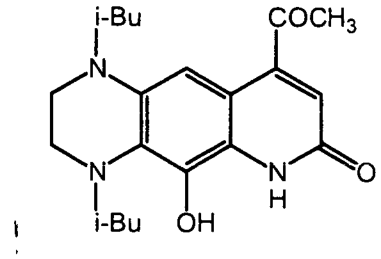

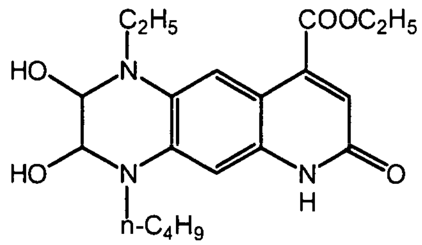

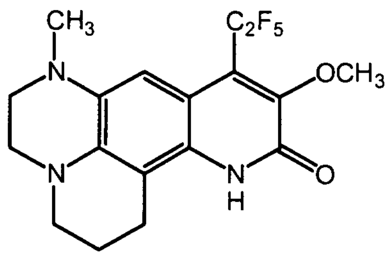

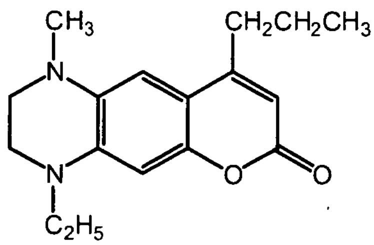

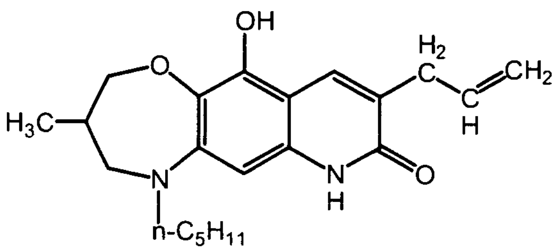

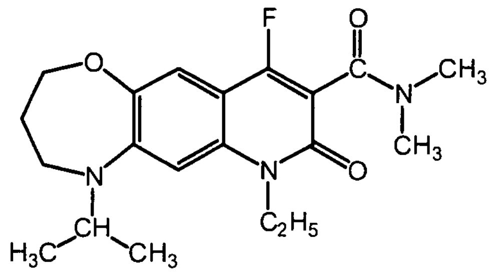

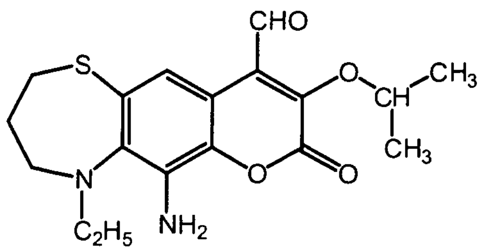

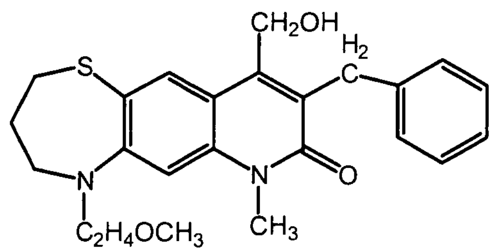

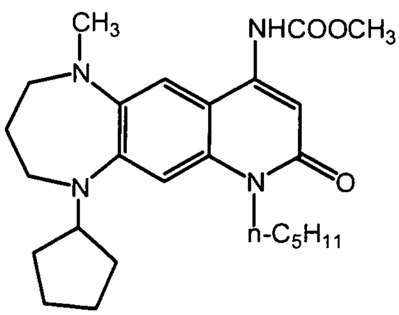

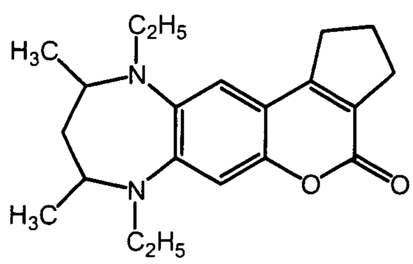

[Chem. 61]

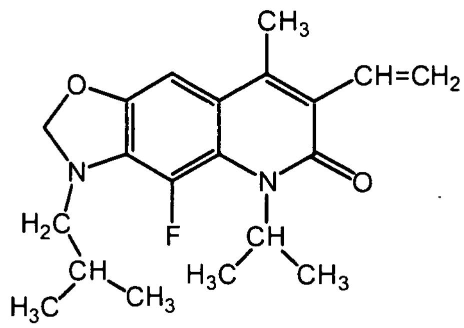

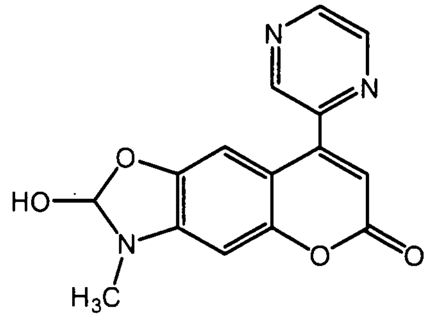

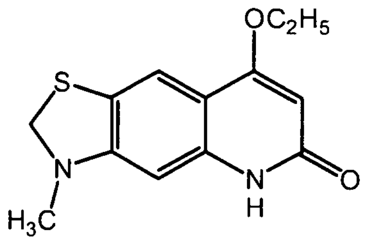

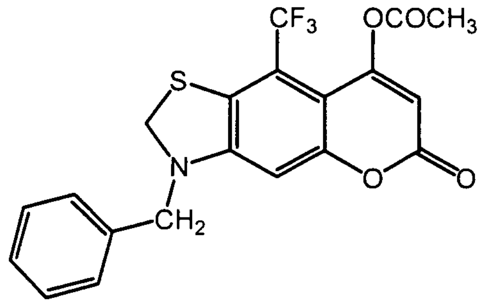

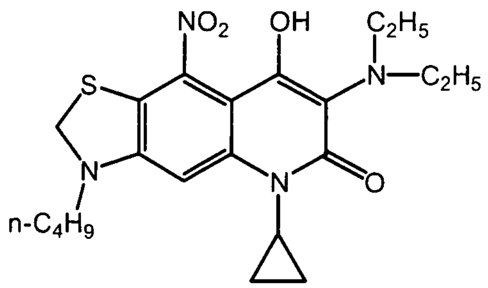

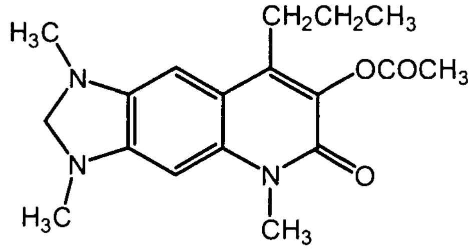

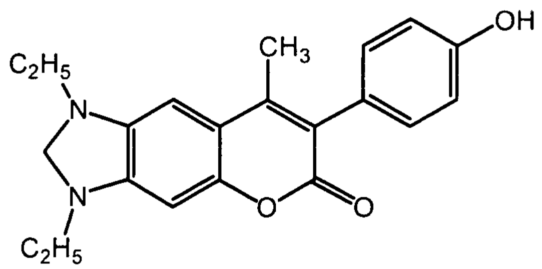

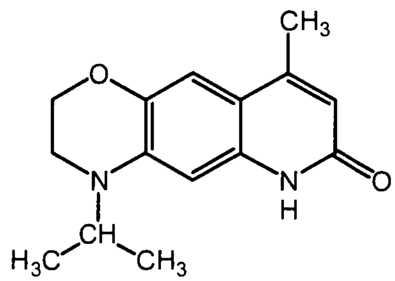

When the above-described $R_1$ to $R_{48}$ are a linear or branched alkyl group, a cyclic alkyl group, a linear or branched alkenyl group, a cyclic alkenyl group, an aralkyl group, a linear or branched alkoxy group, a linear or branched alkylthio group, the alkyl chain moiety of these substituents may have a substituent if necessary. However, the substituents of that case or "substituent" in the phrase "may be substituted" or "may have a substituent" does not include a water-soluble group such as a sulfonate group, a carboxylic acid group and a hydroxyl group.

Examples of the substituent groups include the following. An alkoxy group having 1 to 10 carbon atoms such as a methoxy group, an ethoxy group, a n-propoxy group, an isopropoxy group, a n-butoxy group, a sec-butoxy group, a tert-butoxy group; an alkoxyalkoxy group having 2 to 12 carbon atoms such as a methoxymethoxy group, an ethoxymethoxy group, a propoxymethoxy group, an ethoxyethoxy group, a propoxyethoxy group, a methoxybutoxy group; an alkoxyalkoxyalkoxy group having 3 to 15 carbon atoms such as a methoxymethoxymethoxy group, a methoxymethoxyethoxy

group, a methoxyethoxymethoxy group, a methoxymethoxyethoxy group, an ethoxyethoxymethoxy group; an aryloxy group having 6 to 12 carbon atoms such as a phenoxy group, a tolyloxy group, a xylyloxy group, a naphthyloxy group; an alkenyloxy group having 2 to 12 carbon atoms such as an allyloxy group, a vinyloxy group are exemplified.

Furthermore, the other substituent groups include a heterocyclic group such as a 2-thienyl group, a 2-pyridyl group, a 4-piperidyl group, a morpholino group; a cyano group; a nitro group; a hydroxy group; a mercapto group; an alkylthio group such as a methylmercapto group, an ethylmercapto group; an amino group; an alkylamino group having 1 to 10 carbon atoms such as an N,N-dimethylamino group, an N,N-diethylamino group; an alkylsulfonylamino group having 1 to 6 carbon atoms such as a methylsulfonylamino group, an ethylsulfonylamino group, an n-propylsulfonylamino group; a halogen atom such as a fluorine atom, a chlorine atom, a bromine atom; an alkylcarbonyl group such as a methylcarbonyl group, an ethylcarbonyl group, an isopropylcarbonyl group; an alkoxycarbonyl group having 2 to 7 carbon atoms such as a methoxycarbonyl group, an ethoxycarbonyl group, a n-propoxy carbonyl group, an isopropoxy carbonyl group, a n-butoxycarbonyl group; an alkylcarbonyloxy group having 2 to 7 carbon atoms such as a methylcarbonyloxy group, an ethylcarbonyloxy group, a n-propylcarbonyloxy group, an isopropylcarbonyloxy group, a n-butylcarbonyloxy group; an alkoxycarbonyloxy group having 2 to 7 carbon atoms such as a methoxycarbonyloxy group, an ethoxycarbonyloxy group, a n-propoxycarbonyloxy group, an isopropoxycarbonyloxy group, a n-butoxycarbonyloxy group. The location of these substituent groups is not particularly limited, and the number of the substituent is allowable in the range of 1 to 4. When a plurality of substituent groups are present, they may be different also in class.

(An optical recording medium)

Next, the optical recording medium is described.
The optical recording medium to which an embodiment of the invention is applied comprises at least a substrate and a recording layer containing an organic dye compound A having the absorption maximum in a chloroform solution or a methanol solution of not less than 340 nm and not more than 440 nm and a metal-complex compound B having the absorption maximum in a chloroform solution or a methanol solution of not less than 500 nm and not more than 900 nm. A primer layer, a reflective layer, and/or a protective layer may be also provided if necessary.

Figure 1 is a drawing illustrating the optical recording medium to which an embodiment of the invention is applied. Figure 1 (a) is the first embodiment, and Figure 1 (b) is the second embodiment. Optical recording medium 10 shown in Figure 1 (a) comprises substrate 1 comprising an optically transparent material, recording layer 2 provided on substrate 1, reflective layer 3 and protective layer 4 formed on recording layer 2 in this order. Recording and reading of information is performed in optical recording medium 10 by a laser beam irradiated from the side of substrate 1.
For the convenience of description, the side where protective layer 4 is present is referred to as the upper side and the side where substrate 1 is present is referred to as the lower side in optical recording medium 10 and each of the surfaces of each layer corresponding to these directions are respectively referred to as the upper surface and the lower surface of each layer.

As for substrate 1, various materials can be used as long as it is basically a transparent material at the wavelength of recording light and a reading light. Specific examples include resins such as acryl resin, methacryl resin, polycarbonate resin, polyolefin resin (in particular, amorphous polyolefin), polyester resin, polystyrene resin, epoxy resin; and glass. In addition, a structure provided with a resin layer comprising a radiation curable resin such as a light curable resin on the glass is included. Above all, polycarbonate resin which is used in injection molding method is preferable from the viewpoint of high productivity, cost, moisture resistance, and amorphous polyolefin is preferable from the viewpoint of chemical resistance and moisture resistance. Furthermore, glass is preferable from the viewpoint of high-speed response.

When substrate 1 made of a resin is used or substrate 1 in which a resin layer is provided on the side (the upper side) contacting with a recording layer is used, a guiding groove or pit for the recording and reading light may be formed on the upper surface. The geometry of the guiding groove includes geometry of a concentric circle or a spiral having the center of optical recording medium 10 as a reference point. When a spiral-shaped guiding groove is to be formed, it is preferable that the groove pitch is around 0.2 $\mu$m to 1.2 $\mu$m.

Recording layer 2 is formed directly on the upper side of substrate 1 or on an under layer or the like provided on the upper side of substrate 1 as required, and contains the organic dye compound A having the absorption maximum wavelength ($\lambda$max) in a chloroform solution or a methanol solution of not less than 340 nm and not more than 440 nm and the metal-complex compound B having the absorption maximum wavelength ($\lambda$max) in a chloroform solution or a methanol solution of not less than 500 nm and not more than 900 nm. The above-mentioned the organic dye compound A and the above-mentioned the metal-complex compound B are contained so that the content of the organic dye compound A in the recording layer 2 may be more than the content of the metal-complex compound B and that the light resistance x when measured by the following test method may be not less than 30%.

It is preferable that the decomposition starting temperature of the metal-complex compound B is not more than the decomposition starting temperature of the organic dye compound A. The lower decomposition temperature of the metal-complex compound B than the decomposition temperature of the organic dye compound A enables to decrease

the decomposition temperature of recording layer 2 as a whole and to improve recording sensitivity of recording layer 2. Preferably the difference between the decomposition temperature of the metal-complex compound B and the decomposition temperature of the organic dye compound A is not less than 5°C, more preferably not less than 10°C, and preferably not more than 50°C and more preferably not more than 40°C.

The decomposition starting temperature of the embodiment of the invention is determined in the air or a nitrogen flow at 10°C/min of the temperature increasing rate by measuring TG-DTA from 30°C to 600°C by differential thermal balance method with 3 mg to 4 mg of the dye placed in an aluminum pan. The intersecting point of the tangent lines of weight reduction line before and after the reduction in weight in a weight reduction process in which the reduction in weight is not less than 10% is assumed as the decomposition starting temperature of the weight reduction process.

The film forming method of recording layer 2 includes various thin film forming methods commonly performed such as vacuum deposition method, sputtering method, doctor blade method, casting method, spin coating method, dipping method. From the viewpoint of mass production and cost, spin coating method is preferable, and from the viewpoint that recording layer 2 with uniform thickness can be provided, vacuum deposition method is more preferable than application method. In the case of film formation by spin coating method, the rotation rate of 500 rpm to 15000 rpm is preferable. Some treatments such as heating or contacting with a solvent vapor after spin coating may be optionally performed.

When recording layer 2 is formed by an application method such as doctor blade method, casting method, spin coating method, dipping method, the coating solvent to be used to dissolve the organic dye compound A and the metal-complex compound B to be applied on the substrate 1 is not particular limited as long as it does not erode substrate 1 and dissolves the organic dye compound A and the metal-complex compound B enough to prepare a solution of such a concentration that a spectrophotometer can detect the absorption thereof. Specific examples thereof include a ketone-alcohol solvent such as diacetone alcohol, 3-hydroxy-3-methyl-2-butanone; a cellosolve solvent such as methylcellosolve, ethylcellosolve; chain-like hydrocarbon solvents such as n-hexane, n-octane; a cyclic hydrocarbon solvent such as cyclohexane, methylcyclohexane, ethylcyclohexane, dimethylcyclohexane, n-butyl cyclohexane, tert-butyl cyclohexane, cyclooctane; a perfluoroalkyl alcoholic solvent such as tetrafluoropropanol, octafluoropentanol, hexafluorobutanol; a hydroxycarboxylic acid ester solvent such as methyl lactate, ethyl lactate, methyl 2-hydroxyisobutyrate.

When vacuum deposition method is used, for example, recording layer ingredients such as other dyes or various additives as required are put in a crucible installed in a vacuum vessel and after this vacuum vessel is evacuated with a suitable vacuum pump to around $10^{-2}$ Pa to $10^{-5}$ Pa, the crucible is heated to vaporize the recording layer ingredients and thereby to deposit the ingredients on the substrate placed against the crucible and form recording layer 2.

Transition metal chelate compounds (for example, acetylacetonato chelate, bisphenyldithiol, salicylaldehyde oxime, bisdithio-$\alpha$-diketone) as a singlet oxygen quencher may be contained in recording layer 2 to improve the stability and light resistance and a recording sensitivity improver such as metal compounds may be contained to improve the recording sensitivity. Here, a metal compound refers to as those in which metal such as transition metals is contained in a compound in a form such as an atom, an ion, a cluster and includes organometallic compounds, for example, an ethylenediamine complex, an azomethine complex, a phenylhydroxyamine complex, a phenanthroline complex, a dihydroxyazobenzene complex, a dioxime complex, a nitrosoaminophenolic complex, a pyridyltriazine complex, an acetylacetonato complex, a metallocene complex, a porphyrin complex. The metal atom is not particularly limited, but it is preferably a transition metal. The transition metal chelate compounds and the metal compounds listed here do not have absorption maximum in a chloroform or a methanol solution in not less than 500 nm and not more than 900 nm.

Two or more kinds of the organic dye compound A may be used in combination in recording layer 2 as required. In that case, the whole of the two or more kinds (sum total) is regarded as the organic dye compound A. Furthermore, an optical recording medium 10 corresponding to the recording and reading with two or more kinds of layer beam belonging to different wavelength ranges can be produced by combinationally using a metal-complex compound in recording layer 2 in addition to the organic dye compound A.

The dye of the other line than the organic dye compound A include a benzophenone dye, a phthalocyanine dye, a naphthalocyanine dye, a cyanine dye, an azo compound, a squarylium dye, a triaryl methane series dye, a merocyanine dye, an azulenium dye, a naphthoquinone dye, an anthraquinone dye, an indophenol dye, a xanthene dye, an oxazine dye, a pyrylium dye in addition to the metal-complex compound of the embodiment of the invention if necessary. Furthermore, a binder, a leveling agent, an antifoamer, etc. can be used together if necessary. Preferable binder includes polyvinyl alcohol, polyvinylpyrrolidone, nitrocellulose, cellulose acetate, ketone resin, acryl resin, polystyrene resin, urethane resin, polyvinylbutyral, polycarbonate, polyolefin.

The film thickness of recording layer 2 is not particularly limit since the suitable film thickness may vary depending on recording methods, but it is usually at least 1 nm or more, and preferably not less than 5 nm because a film thickness of a certain degree is needed to enable recording. However, if it is too thick, there is a possibility that recording cannot be performed well, and it is usually not more than 300 nm depend, and preferably not more than 200 nm and more preferably not more than 100 nm.

In addition, the extinction coefficient (the imaginary part of the complex index of refraction) k of recording layer 2 at

recording and reading light wavelength is 0 to 0.50, preferably is 0.05 to 0.35. Furthermore, refraction index (the real part of the complex index of refraction) n is in the range of 1 to 3, and more preferably in the range of 1.5 to 2.5.

As a method for measuring the film thickness of recording layer 2 and controlling the film thickness so that it is a predetermined value, there is a method of irradiating a laser light to recording layer 2, measuring the absorption intensity, that is to say measuring transmission spectrum, of the dye layer for recording forming the recording layer 2 thereby determining and controlling the film thickness of recording layer 2.

There was the case in this method that it was difficult to measure the film thickness of recording layer 2 which has the absorption maximum at not more than 400 nm. It is considered that the reason why measurement of the film thickness of recording layer 2 becomes difficult is that the absorption maximum of a material used for substrate 1 of optical recording medium 10 is often not more than 400 nm and overlaps the absorption maximum of recording layer 2 and that when the wavelength of laser light to irradiate decreases (in particular not more than 500 nm), effect of diffraction of laser light by the guiding groove formed on substrate 1 increases and therefore correct data cannot be measured.

In this embodiment, the above-mentioned problems have been solved and correct film thickness of recording layer 2 can be measured by measuring not the transmission spectrum of the organic dye compound A (which has the absorption maximum not less than 340 nm and not more than 440 nm) contained in recording layer 2 but that of the metal-complex compound B which has the absorption maximum not less than 500 nm and not more than 900 nm, and thereby optical recording medium 10 having the most suitable film thickness can be provided.

Reflective layer 3 is formed on recording layer 2. The film thickness of reflective layer 3 is preferably 50 nm to 300 nm. As a materials of reflective layer 3, materials having reflectance high enough at the wavelength of reading light, for example, metal such as Au, Al, Ag, Cu, Ti, Cr, Ni, Pt, Ta, Pd can be used singly or in an alloy. Among these, Au, Al, Ag have high reflectance and is suitable as a material of reflective layer 3.

The other materials may be contained on condition that these metals are the main components. Here, the main component refers to as one whose content is not less than 50%. Examples of the other materials than the main component include metal such as Mg, Se, Hf, V, Nb, Ru, W, Mn, Re, Fe, Co, Rh, Ir, Cu, Zn, Cd, Ga, In, Si, Ge, Te, Pb, Po, Sn, Bi, Ta, Ti, Pt, Pd, and Nd etc. and metalloid.

Among these, those comprising Ag as the main component are particularly preferable for such reasons that they incur low cost, enable high reflectance to be easy to appear, provide articles with white and beautiful base color when a print receiving layer mentioned below is formed. For example, an alloy which contains Ag and one or more selected from Au, Pd, Pt, Cu and Nd in about 0.1 atom% to 5 atom% is high in reflectance, high in resistance, high in sensitivity and low in cost and therefore it is preferable. Specifically, for example, it is AgPdCu alloy, AgCuAu alloy, AgCuAuNd alloy, AgCuNd alloy. As for materials other than metal, a high refractive index thin film and a low refraction index thin film may be stacked alternately to form a multiple layer film and this can be used as reflective layer 3.

The method for forming reflective layer 3, for example, includes sputtering method, ion plating method, chemical vapor deposition, vacuum deposition method. In addition, well-known inorganic or organic intermediate layers and an adhesive layer can be provided on substrate 1 or under reflective layer 3 for enhancement of reflectance, improvement of recording properties, enhancement of adhesiveness and so on.

Protective layer 4 is formed on reflective layer 3. Materials of protective layer 4 are not particularly limited as long as it protects reflective layer 3 from external force. The materials of organic substance include thermoplastic resins, thermoset resins, electron radiations curable resins, UV curing resins, etc.

The materials of inorganic substance include silicon oxide, silicon nitride, $MgF_2$, $SnO_2$, etc.

When a thermoplastic resin or a thermoset resin is used, protective layer 4 can be prepared by coating a coating liquid formed by dissolving in a suitable solvent on reflective layer 3 and then drying. When an UV curing resin is used, protective layer 4 can be prepared by coating on reflective layer 3 as it is, or a coating liquid formed by dissolving in a suitable solvent on reflective layer 3, and then irradiating UV light to perform curing. As for UV curing resins, for example, acrylate resins such as urethane acrylate, epoxy acrylate, polyester acrylate can be used. These materials may be used singularly or by mixing two or more kinds. The protective layer 4 may be formed as a monolayer or a multiple layer.

The method for forming protective layer 4 includes, like the recording layer 2, for example, application method such as spin coating method and the casting method, sputtering method, chemical vapor deposition method and among these, spin coating method is preferable. The film thickness of protective layer 4 is generally not less than 0.1 $\mu$m, preferably not less than 3 $\mu$m because thickness to some extent is needed to achieve the protecting function. However, when it is too thick, formation of protective layer 4 may take time and incur cost while the effect does not change, and therefore, it is usually not less than 100 $\mu$m, preferably it is not less than 30 $\mu$m.

Hereinforth, a structure in which a substrate, a recording layer, a reflective layer and a protective layer are laminated in this order is described as an example of the layer structure of optical recording medium 10, structures other than this may be adopted.

For example, another substrate 1 may be further affixed to the top surface of protective layer 4 in the layer structure of the above instance or to the top surface of reflective layer 3 by omitting protective layer 4 from the layer structure of the above instance. Substrate 1 of this case may be a substrate itself which is not provided with any layer, or a substrate

having any optional layer such as reflective layer 3 on the side to be affixed or the other side thereof. In addition, two pieces of optical recording medium 10 having the above layer structure of the above instance or optical recording medium 10 from which protective layer 4 is omitted may be affixed together by facing the top surfaces of each protective layer 4 and/or reflective layer 3 with each other in the same way.

Next, the second embodiment of an optical recording medium is described.
Figure 1(b) is a drawing illustrating the second embodiment of an optical recording medium. Any parts in common with optical recording medium 10 of the first embodiment are referred to by the same symbol and description thereof is omitted. Optical recording medium 20 shown in Figure 1 (b) comprises substrate 1 comprising an optically transparent material, reflective layer 3 provided on substrate 1, recording layer 2 and protective coating film 5 laminated on reflective layer 3 in this order. Recording and reading of information is performed in optical recording medium 20 by a laser beam irradiated from the side of protective coating film 5.

Protective coating film 5 may be affixed using a film or a sheet by an adhesive or, may be formed by using a material similar to the above-mentioned protective layer 4 and coating and curing or drying the coating fluid of film formation. The thickness of protective coating film 5 is generally not less than 0.1 μm, preferably not less than 3 μm because thickness to some extent is needed to achieve the protecting function. However, when it is too thick, formation of protective coating film 5 may take time and incur cost while the effect does not change, and therefore, it is usually not more than 300 μm, preferably it is not more than 200 μm. Those similar in the above-mentioned optical recording medium 10 can be usually used for each layer of recording layer 2, reflective layer 3. However, substrate 1 does not have to be transparent in this configuration and therefore, opaque resins, ceramics, metals (including alloy) can be used as well as the above-mentioned materials. Any arbitrary layer may also be provided between each of the above-mentioned layers as required in this configuration unless it impairs properties of the present invention.

Meanwhile, one of the means for improving recording density of optical recording media 10, 20 is to increase the numerical aperture of the objective lens. This allows the light spot condensed on the information record surface to be compact. However, in the case where the numerical aperture of the objective lens is increased, when the laser beam is irradiated to perform recording and reading, aberration of the light spot caused by warpage and the like of optical recording media 10, 20 tends to increase and a good recording and reading signal cannot be stably obtained.

Because such aberration tends to increase as the transparent substrate 1 or protective coating film 5 through which the laser beam transmits are thick, it is preferable to decrease the thickness of substrate 1 and protective coating film 5 as much as possible in order to decrease the aberration. Usually, however, substrate 1 should have some thickness to secure the strength of optical recording media 10, 20, the structure of optical recording medium 20 (structure of optical recording medium 20 of the basic layer structure comprising substrate 1, reflective layer 3, recording layer 2, protective coating film 5) is preferably adopted this case. Because protective coating film 5 of optical recording medium 20 is made thinner more readily than the substrate 1 of optical recording medium 10, preferably optical recording medium 20 is used.

However, even the structure of optical recording medium 10 (structure of optical recording medium 10 of the basic layer structure comprising substrate 1, recording layer 2, reflective layer 3, protective layer 4) can be used with decreased aberration by decreasing the thickness of transparent substrate 1 through which the laser beam for recording and reading passes to around 50 μm to 300 μm.
In addition, for the purpose of protecting the surface and preventing adhesion of dust, a film of UV curing resin layer or inorganic thin film may be formed on the surface to which the recording and reading laser beam enters (usually, lower surface of substrate 1) after each of the other layers are formed, and print receiving layer on which inscription or printing by various printers such as ink jet printer, thermal ink-transfer printer or various writing implements is possible may be provided on the surface other than the surface to which the recording and reading laser beam enters (usually, top surface of reflective layer 3 and protective layer 4).

In optical recording media 10, 20 to which embodiment of the invention is applied, the wavelength of the laser beam to be used for recording and reading of information is preferably as short as possible from the viewpoint of realizing high density recording, and laser beam of wavelength 350 nm to 530 nm is particularly preferable. Typical example of such a laser beam includes laser beams having central wavelength at about 405 nm, about 410 nm, about 515 nm (wavelength shift of around ±5 nm is permitted).

The laser beams of wavelength 350 to 530 nm can be obtained by using high power semiconductor radiation of blue laser at the wavelength of 405 nm, or 410 nm or bluish green laser at the wavelength of 515 nm. Besides, they can be obtained by subjecting, for example, either one of the oscillation laser beams of (a) semiconductor laser radiation having a basic oscillation wavelength of 740 nm to 960 nm which is possible of continuous oscillation and (b) solid state laser beam having a basic oscillation wavelength of 740 nm to 960 nm which is possible of continuous oscillation excited by semiconductor laser beam to wavelength conversion with a second harmonic generation element (SHG).

SHG may be any piezoelectric element lacking in inversion symmetry, but KDP, ADP, BNN, KN, LBO, a compound semiconductor are preferable. Specific examples of second harmonic include 430 nm which is a half wavelength of a basic oscillation wavelength for the semiconductor laser radiation having a basic oscillation wavelength at 860 nm, and 430 nm which is a half wavelength derived from Cr doped $LiSrAlF_6$ single crystal (basic oscillation wavelength

at 860 nm) in the case of solid state laser beam excited by semiconductor laser.

For the wavelength to be used for recording and reading, it is the most preferable to use the wavelength of 405 nm which is a short wavelength profitable to densification and for which practical laser diode is supplied. When this wavelength is used, the absorption maximum wavelength (λmax) of the organic dye compound A is preferably in the range of 340 nm to 400 nm, more preferably 350 nm to 400 nm, and still more preferably 370 nm to 400 nm.

When information is recorded in the optical recording media 10, 20 to which embodiment of the invention is applied, a laser beam which is usually converged to around 0.4 to 0.6 μm is irradiated onto the recording layer 2 (usually allowing the beam to transmit substrate 1 from the side of substrate 1). The part of recording layer 2 on which the laser beam is irradiated absorbs energy of laser beam, and causes thermal change such as decomposition, exothermic heat, dissolution, and a change of complex index of refraction thereby resulting in the optical properties change.
When the information recorded in the recording layer 2 is played, a laser beam having a lower energy is irradiated similarly onto the recording layer 2 (usually from the same direction as the recording time). In recording layer 2, reading of information is performed by reading a difference in reflectance between the part where change in optical properties (optical constant or phase contrast, etc.) is caused (that is, the part where information has been recorded) and the part where change is not caused.

Examples

The embodiment of the invention is described more in detail by way of Examples. However, the embodiments of the invention are not limited to these Examples. The organic dye compound A is referred to as component A, the metal-complex compound B as component B, and a compound to be compared with the metal-complex compound B as component C in the following table.

(Synthesis examples of compound)

The synthesis method of a compound to be used in the embodiment of the invention is not particularly limited, but includes, for example, a synthesis method described in Japanese Patent Laid-Open No. 6-329616, etc. as a synthesis method of an azo compound represented by formula (I). The synthesis method of a compound represented by formula (II) includes, for example, Japanese Patent Laid-Open No. 63-057846, etc. The synthesis method of a compound represented by formula (III) and formula (IV) includes, for example, a method described in Japanese Patent Application No. 2001-372199 (USP6815033) and the synthesis method of a compound represented by formula (V) includes, for example, a method described in Japanese Patent Application No. 2001-027599, etc.

(1) Synthesis of the metal-complex compound B

To methanol solutions of the above-mentioned example compounds (45), (46), (47), a methanol solution (0.6 equivalent) of nickel acetate was dropped and then filtered to synthesize the metal-complex compound B (Component B: B1 to B3) shown in Table 1. To an ethanol solution of the example compounds (63), an aqueous solution of nickel chloride and an aqueous solution of $NH_4PF_6$ were dropped and then filtered to synthesize a metal-complex compound (Component B: B4). The absorption maximum wavelength λmax and molar extinction coefficient ε in a chloroform solution are shown in Table 1.

[Table 1]

| Component (B) | Ligand | Metal | Anion | Ligand: Metal | λmax (nm) | $\varepsilon x 10^{-3}$ |
|---|---|---|---|---|---|---|
| B1 | 45 | Ni | - | 2:1 | 689.5 | 127 |
| B2 | 46 | Ni | - | 2:1 | 692 | 109 |
| B3 | 47 | Ni | - | 2:1 | 680.5 | 122 |
| B4 | 63 | Ni | $PF_6$ | (Ligand:Anion:Metal) 3:2:1 | 793.5 | 253 |

(2) Light resistance test

A 0.6% by weight tetrafluoropropanol solution of optical recording materials prepared from the organic dye compound A and the metal-complex compound B in predetermined composition ratio was subjected to spin coating on an injection molded type polycarbonate resin substrate having a thickness of 0.6 mm and a diameter of 12 cm at a

rotation of 800 rpm, and then dried and cut into a suitable size to prepare a disc piece and a Xe lamp was irradiated at 45°C, 250 W/m$^2$ for 8 hours using a light resistance testing machine (a product of Toyo Seiki Seisakujo Co., Ltd. : Suntest XLS +) .

The absorbance $I_0$ of absorption maximum before irradiation of a Xe lamp and the absorbance $I_1$ of absorption maximum after irradiation of a Xe lamp were measured for the absorption band which could monitor the organic dye compound A (that is to say, absorption maximum of wavelength range from 340 nm to 440 nm) in optical recording material, and the light resistance x = $I_1/I_0$ was calculated. The wavelength of $I_0$ is usually the same as $I_1$. The larger the numeric value is, the better the light resistance.
The absorption not more than 440 nm of the mixed Component B itself is very small as compared with that of Component A and the absorption magnitude of λmax can be regarded as almost the absorption of Component A in consideration of the content in the mixture.

(Examples 1 to 13, Comparative Examples 1 to 7)

The optical recording materials of the composition shown in Table 2 were examined and the light resistance x was evaluated. The results are shown in Table 2. As the organic dye compound A, the following compounds (A1, A2) were used.

[Chem. 62]

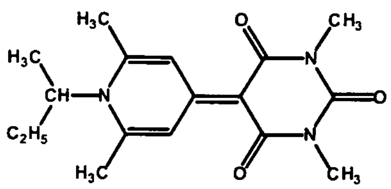

(A 1)
λ max=380nm
ε =43000

[Chem. 63]

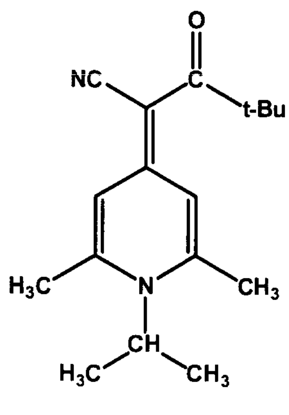

(A 2)
λ max=389nm
ε =41000

[Table 2]

| | Component (A) | Component (B) | A/B | (light resistance x)% |
|---|---|---|---|---|
| Example 1 | A1 | B1 | 85/15 | 77.8 |

(continued)

| | Component (A) | Component (B) | A/B | (light resistance x)% |
|---|---|---|---|---|
| Example 2 | A1 | B1 | 80/20 | 85.9 |
| Example 3 | A1 | B1 | 70/30 | 77.3 |
| Comparative Example 1 | A1 | B1 | 100/0 | 0 |
| Comparative Example 2 | A1 | B1 | 90/10 | 27.0 |
| Example 4 | A1 | B2 | 85/15 | 70.4 |
| Example 5 | A1 | B2 | 80/20 | 78.3 |
| Example 6 | A1 | B2 | 70/30 | 82.8 |
| Comparative Example 3 | A1 | B2 | 100/0 | 0 |
| Comparative Example 4 | A1 | B2 | 90/10 | 3.9 |
| Example 7 | A1 | B3 | 85/15 | 85.2 |
| Example 8 | A1 | B3 | 80/20 | 84.1 |
| Example 9 | A1 | B3 | 70/30 | 84.3 |
| Comparative Example 5 | A1 | B3 | 100/0 | 0 |
| Example 10 | A1 | B3 | 90/10 | 58.9 |
| Example 11 | A2 | B4 | 85/15 | 61.3 |
| Example 12 | A2 | B4 | 80/20 | 93.2 |
| Example 13 | A2 | B4 | 70/30 | 96.6 |
| Comparative Example 6 | A2 | B4 | 100/0 | 0 |
| Comparative Example 7 | A2 | B4 | 90/10 | 0.5 |

From the results of Table 2, the weight of the organic dye compound A/the weight of the metal-complex compound B (hereinafter sometimes referred to as "Component (A)/Component (B)"), the optical recording materials (Examples 1 to 13) of Component (A) /Component (B) = 85/15 to 70/30 were confirmed to have 50% or more of the light resistance x which was tested by the above-mentioned (2) light resistance test method and to be superior in the light resistance.
On the other hand, as for the optical recording material of Component (A)/Component (B) = 100/0 and, for example, those except for Examples 10 (Comparative Examples 1 to 7) of 90/10, the light resistance x is less than 30%, it can be seen that they are inferior in light resistance.
The optical recording material used in Example 13 was dissolved in octafluoropentanol, and adjusted to 0.6 wt%. The solution obtained by filtering this was dropped on an injection molded polycarbonate resin substrate having a thickness of 0.6 mm and a diameter of 120 mm, and applied by spinner method, and after coating, dried at 100°C, for 30 minutes. The the absorption maximum wavelength (λmax) of this coating film was 388.5 nm, and the next large absorption maximum wavelength was 803.5 nm. The absorption spectrum is shown in Figure 2.

(Comparative Examples 8 to 11)

Compound A1 used in Example 1 and compound C described below (Component C: C1 to C4) were prepared in the composition shown in Table 3 and subjected to light resistance test. The results are shown in Table 3. Here, C1 is an anthraquinone dye having λmax in a range of 500 nm to 900 nm, and C2 is a cyanine dye, and C3 is an azo compound which does not coordinate on a metal ion of B1, and C4 is an azo metal-complex compound whose λmax is out of the range of 500 nm to 900 nm. As for the absorption maximum wavelength (λmax) and the value of ε of compound C, C1, C2, C4, and C5 are measured value in a chloroform solution and C3 in a methanol solution.
[Chem. 64]

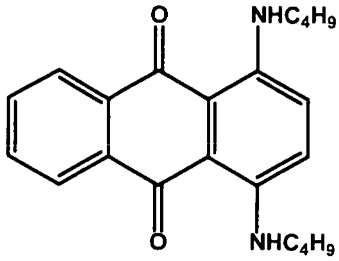

(C 1)
λ max=649. 5nm
ε =19000

[Chem. 65]

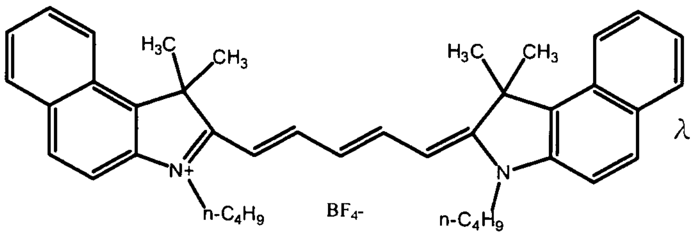

(C 2)
λ max=685. 5nm
ε =20000

[Chem. 66]

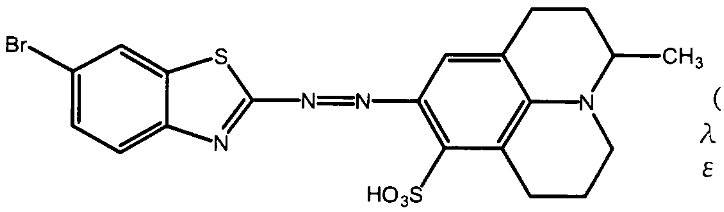

(C 3)
λ =564nm
ε =47000

[Chem. 67]

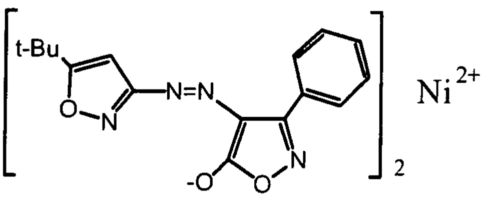

(C 4)
λ =396nm
ε =32000

[Table 3]

| | Component (A) | Component (C) | A/C | (light resistance x)% |
|---|---|---|---|---|
| Comparative Example 8 | A1 | C1 | 70/30 | 2.9 |
| Comparative Example 9 | A1 | C2 | 70/30 | 1.1 |
| Comparative Example 10 | A1 | C3 | 70/30 | 6.3 |
| Comparative Example 11 | A1 | C4 | 70/30 | 14.1 |

From the result of Table 3, it can be seen that these (Comparative Examples 8 to 11) did not exhibit improvement in the light resistance.

(Examples 14 to 17, Comparative Examples 12 to 15)

(1) Manufacture example of an optical recording medium

An octafluoropentanol solution of optical recording material of the composition (0.6wt%) shown in Table 4 was dropped on an injection molded type polycarbonate resin substrate having a thickness of 0.6 mm and a diameter of 120 mm and a groove of track pitch of 425 nm, groove width of 163 nm and groove depth of 90 nm and applied by spinner method. Application was performed by increasing the rotation rate from 600 rpm to 4900 rpm for 25 seconds maintaining the rotation rate at 4900 rpm for five seconds. Furthermore, it was dried at 100°C for 30 minutes to form a recording layer. Subsequently, a film of silver alloy was formed at a thickness of 100 nm by sputtering method to form a reflective layer. Then, a protective coating agent comprising UV curing resin was applied by spinner method and irradiation of UV light was performed to form a protective layer having a thickness of 5 μm. Furthermore, a polycarbonate substrate having a thickness of 0.6 mm was adhered to the surface of the protective layer side with a delay hardening model adhesive, thereby an optical recording medium for estimation was produced.

(2) Recording example

A single frequency signals of (8T mark/8T space) and (3T mark/3T space) were recorded in the groove with a laser beam of wavelength 405 nm (numerical aperture NA =0.65 of the objective lens) while turning the optical recording medium mentioned above in a linear of velocity 5.7 m/sec and each of the recording properties were measured. The results are shown in Table 4. Here, T is a reference clock period corresponding to the frequency of 66 MHz. As a recording pulse strategy, the split pulse number was (n - 1) assuming the mark length as nT, top recording pulse width 2T, following recording pulse width 0.6 T, bias power 0.2 mW, reading power 0.2 mW, recording power variable.
[Table 4]

| | Component (A) | Component (B) | A/B | CN (dB) | | Recording sensitivity (mW) |
|---|---|---|---|---|---|---|
| | | | | 8T | 3T | |
| Example 14 | A1 | B3 | 80/20 | 50.8 | 42.9 | 10.3 |
| Example 15 | A1 | B3 | 70/30 | 51.2 | 43.3 | 10.0 |
| Comparative Example 12 | A1 | B3 | 100/0 | 50.0 | 36.1 | >12 |
| Comparative Example 13 | A1 | B3 | 90/10 | 49.9 | 38.9 | 10.8 |
| Example 16 | A2 | B3 | 80/20 | 50.0 | 38.0 | 11.8 |
| Example 17 | A2 | B3 | 70/30 | 49.7 | 41.4 | 8.6 |
| Comparative Example 14 | A2 | B3 | 100/0 | 42.7 | 35.6 | >12 |

(continued)

| | Component (A) | Component (B) | A/B | CN (dB) | | Recording sensitivity (mW) |
|---|---|---|---|---|---|---|
| | | | | 8T | 3T | |
| Comparative Example 15 | A2 | B3 | 90/10 | 48.2 | 39.0 | >12 |

It can be seen that the recording properties and the recording sensitivity of an optical recording medium using optical recording materials in which Component (A)/Component (B) =80/20 and 70/30 (Examples 14 to 17) are improved from the results in Table 4.

(Examples 18 to 21, Comparative Examples 16 to 19)

The optical recording media used in Examples 14 to 17 and Comparative Examples 12 to 15 were tested by reading $10^5$ times at a reading light power of 0.2 mW and decrease dB of C/N of 8T was respectively measured, and reading deterioration by light was compared. The less the numeric value, the better the reading cyclability. The results are shown in Table 5.

[Table 5]

| | Component (A) | Component (B) | A/B | (Degradation in the reading cyclability) dB |
|---|---|---|---|---|
| Example 18 | A1 | B3 | 80/20 | 0 |
| Example 19 | A1 | B3 | 70/30 | -3.0 |
| Comparative Example 16 | A1 | B3 | 100/0 | -12.9 |
| Comparative Example 17 | A1 | B3 | 90/10 | -4.0 |
| Example 20 | A2 | B3 | 80/20 | -0.8 |
| Example 21 | A2 | B3 | 70/30 | -0.1 |
| Comparative Example 18 | A2 | B3 | 100/0 | -10.1 |
| Comparative Example 19 | A2 | B3 | 90/10 | -2.2 |

It can be seen that the reading deterioration by light of an optical recording medium using optical recording materials in which Component (A)/Component (B) =80/20 and 70/30 (Examples 18 to 21) show excellent reading cyclability from the results in Table 5.

(Example 22, Comparative Example 20)

The optical recording media were prepared as in Example 14 using optical recording materials of the composition shown in Table 6, and recording sensitivity, etc were measured. As the organic dye compound A, the following compounds (A3) was used. The results are shown in Table 6.

[Chem. 68]

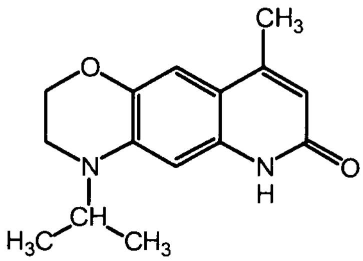

(A 3)
$\lambda$ max=379.5nm
$\varepsilon$ =25000

[Table 6]

| | Component (A) | Component (B) | A/B | CN | | Recording sensitivity |
|---|---|---|---|---|---|---|
| | | | | 8T | 3T | |
| Example 22 | A3 | B3 | 80/20 | 52.9 | 46.6 | 10.9 |
| Comparative Example 20 | A3 | B3 | 100/0 | 53.6 | 44.5 | 11.6 |

It can be seen that the recording sensitivity is improved from the results in Table 6.

(Examples 23 to 26, Comparative Examples 21 to 26)

TG-DTA (DTG) measurement was performed on the optical recording materials of the composition shown in Tables 7 and 8 and the thermal decomposition behavior was observed. TG-DTA (DTG) measurement was performed by grinding the powders of optical recording materials in mortar until they become uniform; each sample (about 3.5 mg) was subjected to TG-DTA (DTG) (a product of SEIKO Instruments Co., Ltd.: TG/DTA6200) from 30°C to 600°C while elevating the temperature at a rate of 10°C/min under each condition of nitrogen and air as flow gas. The results are shown in Table 7 and Table 8. The measurement charts were shown in Figure 3 to Figure 5.

[Table 7]

| TG-DTA measurement (Condition: employing nitrogen as flow gas) | | | | | |
|---|---|---|---|---|---|
| | Component (A) | Component (B) | A/B | Decomposition starting temperature | DTG Peak Temperature |
| Example 23 | A2 | B3 | 80/20 | 277.7 | 339.4 |
| Example 24 | A2 | B3 | 70/30 | 271.4 | 325.7 |
| Comparative Example 21 | A2 | B3 | 100/0 | 294.7 | 348.0 |
| Comparative Example 22 | A2 | B3 | 90/10 | 284.3 | 344.1 |
| Comparative Example 23 | A2 | B3 | 0/100 | 284.5 | 290.5 |

[Table 8]

| TG-DTA measurement (Condition: employing air as flow gas) | | | | | |
|---|---|---|---|---|---|
| | Component (A) | Component (B) | A/B | Decomposition starting temperature | DTG Peak Temperature |
| Example 25 | A2 | B3 | 80/20 | 271.2 | 317.5 |
| Example 26 | A2 | B3 | 70/30 | 264.2 | 304.7 |
| Comparative Example 24 | A2 | B3 | 100/0 | 289.7 | 344.3 |
| Comparative Example 25 | A2 | B3 | 90/10 | 269.9 | 324.1 |
| Comparative Example 26 | A2 | B3 | 0/100 | 266.6 | 379.0 |

It can be seen from the results of Table 7 and Table 8 that the decomposition starting temperature of TG shifts to the lower temperature side than that expected from a simple weight ratio, and the DTG (differential peak of TG) peak temperature decreases for the optical recording material in which Component (A)/Component (B) =80/20 and 70/30. It is considered that recording sensitivity of an optical recording medium has been improved by such thermal decomposition behavior.

(Examples 27 and 28, Comparative Examples 27 to 30)

[Chem. 69]

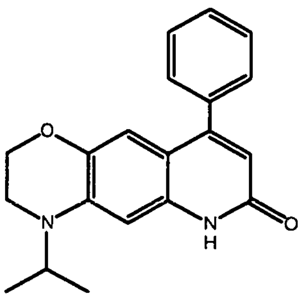

(A5)

λ max=385.5nm
ε =23000

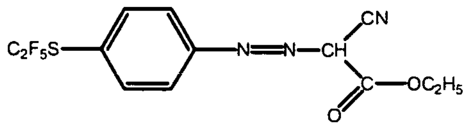

(C5)

λ max=354.5nm
ε =25000

In the same manner as in Examples 23 to 26, the powders of A5 in which B1, B3, and C5 were mixed in the ratio shown in Table 9 were subjected to TG-DTA(DTG) measurement and the thermal decomposition behavior was observed. The conditions of TG-DTA (DTG) measurement were the same as in the above. The results are shown in Table 9 and Table 10. In addition, the measurement chart of Comparative Examples 27 was shown in Figure 6.

[Table 9]

| TG-DTA measurement (Condition: employing air as flow gas) | | | | | |
|---|---|---|---|---|---|
| | Component (A) | Component (B) or (C) | A/(B or C) | Decomposition starting temperature (°C) | DTG Peak Temperature (°C) |
| Example 27 | A5 | B1 | 70/30 | 276.2 | 527.3 |
| Example 28 | A5 | B3 | 70/30 | 271.4 | 543.6 |
| Comparative Example 27 | A5 | C5 | 70/30 | 189.9, 331.5 | 217.4, 364.2 |
| Comparative Example 28 | A5 | B1 | 100/0 | 316.3 | 556.4 |
| Comparative Example 29 | A5 | B1 | 0/100 | 265.5 | 428.6 |
| Comparative Example 30 | A5 | C5 | 0/100 | 189.9 | 245.4 |

[Table 10]

| TG-DTA measurement (Condition: employing nitrogen as flow gas) | | | | | |
|---|---|---|---|---|---|
| | Component (A) | Component (B) or (C) | A/(B or C) | Decomposition starting temperature (°C) | DTG Peak Temperature (°C) |
| Example 27 | A5 | B1 | 70/30 | 229.5 | 373 |
| Example 28 | A5 | B3 | 70/30 | 221 | 383.8 |
| Comparative Example 27 | A5 | C5 | 70/30 | 190.1, 348.9 | 221.9, 389 |
| Comparative Example 28 | A5 | B1 | 100/0 | 341.3 | 388.3 |
| Comparative Example 29 | A5 | B1 | 0/100 | 256.1 | 260 |
| Comparative Example 30 | A5 | C5 | 0/100 | 188.3 | 245.4 |

It can be seen from the results of Table 9 and Table 10 that the decomposition starting temperature of TG again shifts to the lower temperature side than that expected from a simple weight ratio and the DTG (differential peak of TG) peak temperature decreases for the optical recording material in the mixed powder of Component (A)/Component (B) = 70/30.
On the other hand, as apparent from Figure 6, the powder in which C5, a monoazo compound containing no metal used as a comparative example, is mixed decomposes earlier at the decomposition temperature of C5 alone in accordance with the mixing ratio and it is apparent that the powder does not contribute to decrease in the decomposition starting temperature of the organic dye compound A for recording use.

(Examples 29 to 44, Comparative Examples 31 to 39)

In the same manner as in the above-mentioned Examples 1 to 13, the metal-complex compound B5, B6, B3, and B4 were blended in a ratio shown in Table 11 in organic dye compounds A2, A4, and A5, and a dye coated discs were prepared and subjected to the light resistance test. The results calculating the light resistance x are shown in table 11. The components of B5, B6 are shown in Table 12.
[Table 11]

| | Component (A) | Component (B) | A/B | (light resistance x)% |
|---|---|---|---|---|
| Comparative Example 31 | A2 | B5 | 85/15 | 20.4 |
| Example 29 | A2 | B5 | 80/20 | 50.6 |
| Example 30 | A2 | B5 | 70/30 | 73.9 |
| Comparative Example 32 | A2 | B5 | 100/0 | 0 |
| Comparative Example 33 | A2 | B5 | 90/10 | 2.5 |
| Comparative Example 34 | A2 | B6 | 85/15 | 22.7 |
| Example 31 | A2 | B6 | 80/20 | 61.5 |
| Example 32 | A2 | B6 | 70/30 | 78.3 |
| Comparative Example 35 | A2 | B6 | 100/0 | 0 |
| Comparative Example 36 | A2 | B6 | 90/10 | 2.9 |
| Example 33 | A4 | B3 | 85/15 | 71.8 |
| Example 34 | A4 | B3 | 80/20 | 79.6 |
| Example 35 | A4 | B3 | 70/30 | 89.2 |
| Comparative Example 37 | A4 | B3 | 100/0 | 15.8 |
| Example 36 | A4 | B3 | 90/10 | 45 |
| Example 37 | A5 | B3 | 85/15 | 94.3 |
| Example 38 | A5 | B3 | 80/20 | 93.8 |
| Example 39 | A5 | B3 | 70/30 | 97.1 |
| Comparative Example 38 | A5 | B3 | 100/0 | 21.7 |
| Example 40 | A5 | B3 | 90/10 | 85.4 |
| Example 41 | A4 | B4 | 85/15 | 87.4 |
| Example 42 | A4 | B4 | 80/20 | 91.9 |
| Example 43 | A4 | B4 | 70/30 | 98.2 |
| Comparative Example 39 | A4 | B4 | 100/0 | 15.8 |
| Example 44 | A4 | B4 | 90/10 | 72.8 |

[Chem. 70]

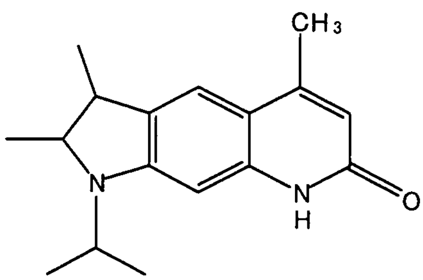

(A4)
$\lambda$ max=377nm
$\varepsilon$ =26000

[Chem. 71]

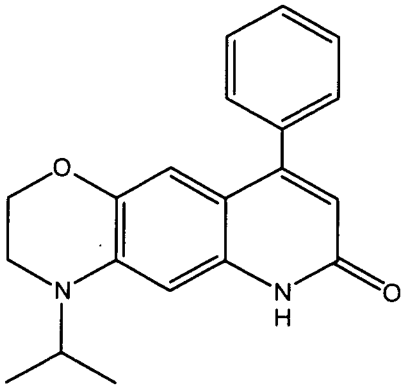

(A 5)
λ max=385.5nm
ε =23000

[Chem. 72]

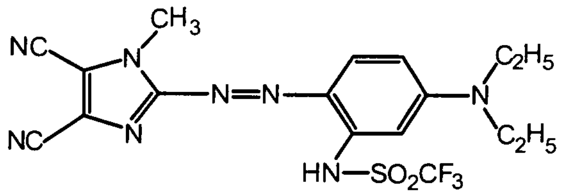

(48-1)

[Chem. 73]

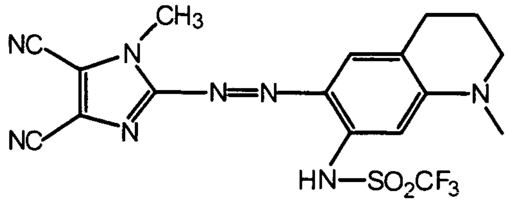

(48-2)

[Table 12]

| Component (B) | Ligand | Metal | Anion | Ligand: Metal | λmax (nm) | ε x $10^{-3}$ |
|---|---|---|---|---|---|---|
| B5 | 48-1 | Ni | - | 2:1 | 577 | 158 |
| B6 | 48-2 | Ni | - | 2:1 | 579.5 | 137 |

It is clear from this result that the light resistance is extremely improved by containing the metal-complex compound B3, B4, and B5 as compared with the result of 100% each of A2, A4, and A5.

The results of Examples 1 to 13, Comparative Examples 1 to 7, Examples 29 to 44, and Comparative Examples 31 to 39 are summarized in Figure 9. It can be seen from Figure 9 that A/B by which desired light resistance x can be obtained differs depending on the combination of the organic dye compound A estimated in case where the metal-complex compound B is 0% by weight and the metal-complex compound B.

In addition, as is understood by comparing the effects of B4, B5, and B6 whose absorption maximum wavelength (λmax) for A2 on light resistance is respectively 793.5 nm, 577 nm, 579.5 nm, the required amount of B5 and B6 whose absorption maximum wavelength (λmax) is not more than 620 nm is larger than that of B4 which has the absorption maximum wavelength (λmax) on longer side of wavelength than B5 and B6, and it can be estimated that the metal-complex compound B is 15% by weight or more in this example. Around 20% by weight is necessary to obtain the light resistance x not less than 50%.

The relationship between the difference in absorption maximum wavelength ($\lambda_{max}$) (Δλ = λmax (B) - λmax (A)) of the organic dye compound A2 and the metal-complex compound B and the light resistance x is shown in Figure 10. That is, the light resistance x of Comparative Example 1 (A2 =100% Δλ =0), Example 13 (A2/B4=70/30, Δλ =404.5 nm), Example 30 (A2/B5=70/30, Δλ =188 nm) and Example 32 (A2/B6=70/30, Δλ =190.5 nm) is shown. There is a tendency in Figure 10 that the metal-complex compound B is more effective on the light resistance x in case where its absorption maximum wavelength (λmax) is longer to compare with the one of the organic dye compound A. It can be seen that the wavelength longer by 100 nm is better in order to obtain the light resistance x of not less than 50% in this example. The wavelength longer by 200 nm is better in order to obtain the light resistance x of not less than 80%. The wavelength longer by 300 nm is better in order to obtain the light resistance x of not less than 90%, which is more preferable.

(Comparative Example 40)

In the same manner as in the above-mentioned Example 43, C4 which was not a metal-complex compound and whose absorption maximum wavelength (λmax) is 354.5 nm, i.e. shorter than that of A4 (absorption maximum wavelength (λmax) =377 nm) was used with an A4/C4=70/30 to prepare a dye coated disc and the light resistance x was examined. x was 13.3% and no improvement in the light resistance was observed. The results are shown in Table 13.

[Table 13]

| | Component (A) | Component (C) | A/C | (light resistance x)% |
|---|---|---|---|---|
| Comparative Example 40 | A4 | C5 | 70/30 | 13.3 |

The present invention is based on the Japanese patent application filed on February 26, 2004 (Patent application No. 2004-052421), entire of which is incorporated herein by reference.

Brief Description of the Drawings

Figure 1 is a view for explaining an optical recording medium to which the present embodiment is applied. Figure 1(a) is a first embodiment, and Figure 1(b) is a second embodiment;
Figure 2 shows an absorption spectrum of the optical recording material used in Example 13.
Figure 3 is a chart of TG-DTA of the optical recording material used in comparative example 24 measured in the air.
Figure 4 is a chart of TG-DTA of the optical recording material used in example 26 measured in the air.
Figure 5 is a chart of TG-DTA of the optical recording material used in comparative example 26 measured in the air.
Figure 6 is a chart of TG-DTA of the optical recording material used in comparative example 27 measured in the air.
Figure 7 shows an absorption spectrum of a film consisting of a metal-complex compound B having a "weak absorption band" around 400nm.
Figure 8 shows an absorption spectrum of a film consisting of a metal-complex compound B not having a "weak absorption band" around 400nm.
Figure 9 is a view showing a light resistance x of the optical recording material shown in Table 2 and Table 11.
Figure 10 is a view showing a relationship between the light resistance x and difference in the absorption maximum wavelength (λmax) (Δλ = λmax (B) - λmax (A)) of an organic dye compound A2 and the metal complex compound B.

Description of Reference Numerals and Signs

1 ... substrate, 2 ... recording layer, 3 ... reflective layer, 4 ... protective layer, 5 ... protective coating film, 10,

20 ... optical recording medium

## Claims

1. An optical recording material comprising an organic dye compound A whose absorption maximum wavelength (λmax) is not less than 340 nm and not more than 440 nm and a metal-complex compound B whose absorption maximum wavelength (λmax) is not less than 500 nm and not more than 900 nm, wherein
the content of the organic dye compound A is higher than the content of the metal-complex compound B, and
a light resistance x calculated by the following formula is not less than 30%:

$$\text{Light resistance } x = \{(I_1/I_0) \times 100\}$$

(wherein, $I_0$ is the absorbance at the absorption maximum present in the wavelength range from 340 nm to 440 nm in the absorption spectrum of a film of a mixture of the organic dye compound A and the metal-complex compound B measured by a spectrophotometer; and $I_1$ is the absorbance at the absorption maximum present in the wavelength range from 340 nm to 440 nm in the absorption spectrum, measured by the spectrophotometer, of the film of the mixture of the organic dye compound A and the metal-complex compound B after light irradiation treatment).

2. The optical recording material according to claim 1, wherein, as for the organic dye compound A, the light resistance $x = \{(I_{A1}/I_{A0}) \times 100\}$ calculated with the absorbance ($I_{A0}$) of the absorption maximum present in the wavelength range from 340 nm to 440 nm in the absorption spectrum of the film measured by the spectrophotometer and the absorbance ($I_{A1}$) of the absorption maximum present in the wavelength range from 340 nm to 440 nm in the absorption spectrum of the film of the organic dye compound A measured after a light irradiation treatment is less than 30%.

3. The optical recording material according to claim 1 or 2, wherein the light resistance x is calculated by the following operation steps:

   (Operation steps)

   (Step 1) Spin-coating a transparent substrate with a solution containing the organic dye compound A and the metal-complex compound B, then drying to prepare a dye coated disc;
   (Step 2) Measuring the absorption spectrum of the dye coated disc prepared in the (Step 1) at the wavelength of 300 nm to 900 nm with a spectrophotometer, and determining $I_0$ as the absorbance at the absorption maximum present in the wavelength range from 340 nm to 440 nm;
   (Step 3) Subjecting the dye coated disc prepared in the (Step 1) to a light irradiation treatment of irradiating with a xenon lamp at 250 $W/m^2$ for 8 hours, then measuring the absorption spectrum under the same condition as in (Step 2), and determining $I_1$ as the absorbance at the absorption maximum present in the wavelength range from 340 nm to 440 nm; and
   (Step 4) Calculating $\{(I_1/I_0) \times 100\}$ based on the ($I_0$) at the (Step 2) and the ($I_1$) at the (Step 3).

4. The optical recording material according to any one of claims 1 to 3, wherein the content of the metal-complex compound B is not less than 20% by weight and not more than 40% by weight, assuming a total amount of the organic dye compound A and the metal-complex compound B as 100% by weight, when the absorption maximum wavelength (λmax) of the metal-complex compound B is 500 nm to 620 nm.

5. The optical recording material according to any one of claims 1 to 4, wherein the difference between the absorption maximum wavelength (λmax) of the organic dye compound A and the absorption maximum wavelength (λmax) of the metal-complex compound B is 100 nm or more.

6. The optical recording material according to claim 1 or 5, wherein the absorption maximum wavelength (λmax) of the metal-complex compound B is 680 nm to 900 nm.

7. The optical recording material according to any one of claims 1 to 6, wherein the light resistance x is 50% or more.

**8.** The optical recording material according to any one of claims 1 to 7, wherein the organic dye compound A is at least one selected from the group consisting of a γ-pyrone organic dye, a γ-thiopyrone organic dye, a γ-1,1-dioxothiopyrone organic dye, a γ-pyridone organic dye, a coumalin organic dye, a carbostyryl organic dye and a 1-thiocoumarin organic dye.

**9.** The optical recording material according to any one of claims 1 to 8, wherein the metal-complex compound B is an azo metal-complex compound or an indoaniline metal-complex compound.

**10.** The optical recording material according to claim 9, wherein the metal-complex compound B is an azo metal-complex compound comprising a metal ion and an azo compound represented by the following general formula (I):

[Chem. 1]

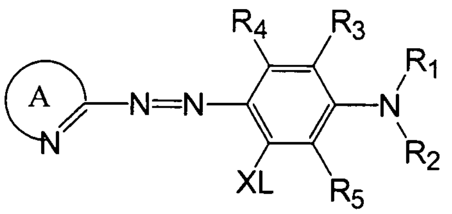

·····( I )

(In the formula (I), ring A is a nitrogen-containing heterocyclic aromatic ring formed with a carbon atom and a nitrogen atom, and XL represents a substituent in which X becomes an anion and capable of coordinating to a metal ion when L is eliminated; $R_1$ and $R_2$ each independently represent a hydrogen atom, a linear or branched alkyl group, a cyclic alkyl group, an aralkyl group or an alkenyl group, or each may form a condensed ring with an adjacent substituent group or with each other; $R_3$, $R_4$ and $R_5$ each independently represent a hydrogen atom, a linear or branched alkyl group having 1 to 12 carbon atoms, a cyclic alkyl group having 3 to 12 carbon atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, a monocyclic saturated heterocyclic group, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfinyl group represented by $-SOR_{44}$, a sulfamoyl group represented by $-SO_2NR_{45}R_{46}$, a sulfonic acid ester group represented by $-SO_3R_{47}$ or a sulfonamide group represented by $-NHSO_2R_{48}$ (wherein $R_{34}$, $R_{37}$, $R_{38}$, $R_{39}$, $R_{40}$, $R_{43}$, $R_{44}$, $R_{47}$ and $R_{48}$ each independently represent any of a hydrocarbon group or a heterocyclic group, and $R_{35}$, $R_{36}$, $R_{41}$, $R_{42}$, $R_{45}$ and $R_{46}$ each independently represent any of a hydrogen atom, a hydrocarbon group or a heterocyclic group)).

**11.** The optical recording material according to claim 10, wherein, in the azo compound represented by the general formula (I), the ring A represents a 5- or 6-membered monocyclic or bicyclic fused nitrogen-containing heterocyclic aromatic ring, XL represents a hydroxy group, a sulfonate group, acylamino group, sulfonamide group, mercapto group, a carboxyl group, $R_1$ and $R_2$ each independently represent a linear or branched alkyl group having 1 to 12 carbon atoms, a cyclic alkyl group having 3 to 12 carbon atoms, an aralkyl group having 7 to 12 carbon atoms, or each may form a saturated condensed ring with an adjacent substituent group or with each other, $R_3$, $R_4$ and $R_5$ each independently represent a hydrogen atom, a linear or branched alkyl group having 1 to 8 carbon atoms, an aralkyl group having 7 to 12 carbon atoms, a linear or branched alkoxy group having 1 to 8 carbon atoms, a linear or branched alkylthio group having 1 to 8 carbon atoms, a monocyclic 5- or 6-membered-ring saturated heterocyclic group, a halogen atom, a nitro group, a cyano group, a mercapto group, a hydroxy group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfamoyl group represented by $-SO_2NR_{45}R_{46}$, a sulfonamide group represented by $-NHSO_2R_{48}$.

**12.** The optical recording material according to claim 9, wherein the metal-complex compound B is a metal-complex compound comprising a metal ion and an arbitrary anion and a compound represented by the following general

formula (II) .

[Chem. 2]

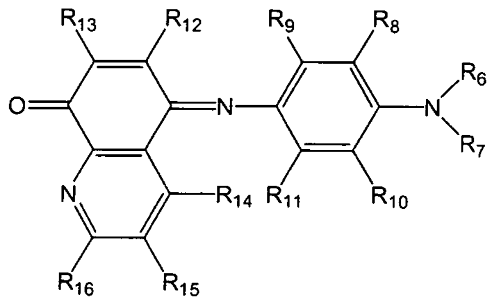

...... (II)

(In the formula (II), $R_6$ and $R_7$ each independently represent a hydrogen atom, a linear or branched alkyl group, a cyclic alkyl group, an aralkyl group, an alkenyl group, or each may form a condensed ring with an adjacent substituent group or with each other; $R_8$ to $R_{16}$ each independently represent a hydrogen atom, a linear or branched alkyl group having 1 to 12 carbon atoms, a cyclic alkyl group having 3 to 12 carbon atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, a saturated or unsaturated heterocyclic group, an aryl group having 6 to 18 carbon atoms, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfinyl group represented by $-SOR_{44}$, a sulfamoyl group represented by $-SO_2NR_{45}R_{46}$, a sulfonic acid ester group represented by $-SO_3R_{47}$ or a sulfonamide group represented by $-NHSO_2R_{48}$ (wherein $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group)).

**13.** The optical recording material according to claim 12, wherein the arbitrary anion is a monovalent monodentate ligand.

**14.** The optical recording material according to any one of claims 1 to 13, wherein the metal-complex compound B is a metal-complex compound having a divalent or trivalent transition metal ion.

**15.** The optical recording material according to claim 14, wherein the transition metal is at least one selected from the group consisting of nickel, cobalt, copper, iron, zinc, platinum, palladium and manganese.

**16.** The optical recording material according to any one of claims 1 to 15, wherein the organic dye compound A is selected from the compounds represented by the following general formulae (III) and (IV):

[Chem. 3]

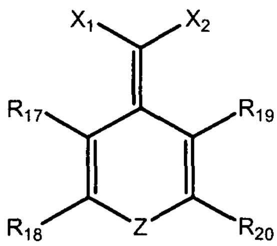

(III)

[Chem. 4]

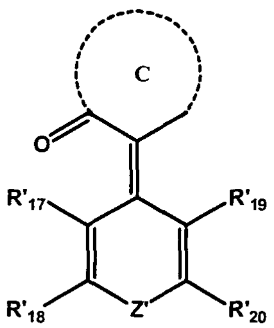

(IV)

(In the formula (III) or (IV), $R_{17}$ to $R_{20}$ and $R_{17'}$ to $R_{20'}$ each independently represent a hydrogen atom or a linear or branched alkyl group having 1 to 12 carbon atoms, a cyclic alkyl group having 3 to 12 carbon atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, a saturated or unsaturated heterocyclic group, an aryl group having 6 to 18 carbon atoms, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfinyl group represented by $-SOR_{44}$, a sulfamoyl group represented by $-SO_2NR_{45}R_{46}$, a sulfonic acid ester group represented by $-SO_3R_{47}$ and a sulfonamide group represented by $-NHSO_2R_{48}$ (wherein $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group, where, $R_{17}$ and $R_{18}$, $R_{19}$ and $R_{20}$, $R_{17}$' and $R_{18}$', $R_{19}$' and $R_{20}$' may be condensed with each other to form a hydrocarbon ring or a heterocyclic structure and the hydrocarbon ring and the heterocycles may have substituent) $X_1$ is an electron-withdrawing group, and $X_2$ is a hydrogen atom or -Q-Y (Q is a direct bond, an alkylene group having 1 or 2 carbon atoms, an arylene group or a heteroarylene group, and Y is an electron-withdrawing group, and the alkylene group, the arylene group, the heteroarylene group may have arbitrary substituent groups besides Y) ; ring C is a carbocyclic ketone ring or a heterocyclic ketone ring which may have a substituent group along with C = O; Z and Z' each represent -O-, -S-, $-SO_2-$, $-NR_{21}-$ (wherein $R_{21}$ is a hydrogen atom, a hydrocarbon group which may be substituted, a heterocyclic group which may be substituted, a cyano group, a hydroxy group), an amino group represented by $-NR_{22}R_{23}$ (wherein $R_{22}$ and $R_{23}$ each independently represent a hydrogen atom, a hydrocarbon group or a heterocyclic group) or an acyl group represented by $-COR_{24}$ ($R_{24}$ is a hydrocarbon group or a heterocyclic group) or $-COR_{25}$ ($R_{25}$ is a hydrocarbon group or a heterocyclic group).

**17.** The optical recording material according to any one of claims 1 to 15, wherein the organic dye compound A is the compounds represented by the following general formula (V) :

[Chem. 5]

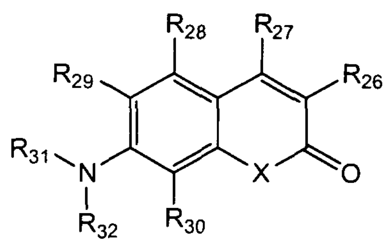

--- [V]

(In the formula (V), X represents -O -, -S -, $-NR_{33}-$; $R_{26}$, $R_{27}$, $R_{28}$, $R_{29}$, $R_{30}$ each independently represent a hydrogen atom or a linear or branched alkyl group having 1 to 12 carbon atoms, a cyclic alkyl group having 3 to 12 carbon

atoms, a linear or branched alkenyl group having 2 to 12 carbon atoms, an aralkyl group having 7 to 18 carbon atoms, a linear or branched alkoxy group having 1 to 12 carbon atoms, a linear or branched alkylthio group having 1 to 12 carbon atoms, an aryl group having 6 to 18 carbon atoms, a saturated or unsaturated heterocyclic group, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, a sulfonyl group represented by $-SO_2R_{43}$, a sulfinyl group represented by $-SOR_{44}$, a sulfamoyl group represented by $-SO_2NR_{45}R_{46}$, a sulfonic acid ester group represented by $-SO_3R_{47}$ or a sulfonamide group represented by $-NHSO_2R_{48}$, $R_{31}$, $R_{32}$, $R_{33}$ each independently represent a hydrogen atom, a linear or branched alkyl group, a cyclic alkyl group, an aralkyl group, a linear or branched alkenyl group, an acyl group, two adjacent among $R_{26}$ to $R_{33}$ may be linked to form a saturated hydrocarbon ring or a saturated heterocycle, where, $R_{34}$, $R_{37}$, $R_{38}$, $R_{39}$, $R_{40}$, $R_{43}$, $R_{44}$, $R_{47}$ and $R_{48}$ each independently represent a hydrocarbon group or a heterocyclic group, and $R_{35}$, $R_{36}$, $R_{41}$, $R_{42}$, $R_{45}$ and $R_{46}$ each independently represent a hydrogen atom, a hydrocarbon group or a heterocyclic group.)

**18.** The optical recording material according to claim 15, wherein in the above-mentioned general formula (V), X is -O-, $-NR_{33}-$, and $R_{26}$, $R_{27}$, $R_{28}$, $R_{29}$, $R_{30}$ each independently represent a hydrogen atom or a linear or branched alkyl group having 1 to 8 carbon atoms, a cyclic alkyl group having 3 to 8 carbon atoms, an aralkyl group having 7 to 12 carbon atoms, a linear or branched alkoxy group having 1 to 8 carbon atoms, a linear or branched alkylthio group having 1 to 8 carbon atoms, an aryl group having 6 to 12 carbon atoms, a saturated or unsaturated heterocyclic monocyclic or bicyclic fused ring group, a halogen atom, a nitro group, a cyano group, a mercapto group, a hydroxy group, a formyl group, an acyl group represented by $-COR_{34}$, an amino group represented by $-NR_{35}R_{36}$, an acylamino group represented by $-NHCOR_{37}$, a carbamate group represented by $-NHCOOR_{38}$, a carboxylic acid ester group represented by $-COOR_{39}$, an acyloxy group represented by $-OCOR_{40}$, a carbamoyl group represented by $-CONR_{41}R_{42}$, or a sulfonamide group represented by $-NHSO_2R_{48}$, and $R_{31}$, $R_{32}$, $R_{33}$ each independently represent a linear or branched alkyl group having 1 to 12 carbon atoms, a cyclic alkyl group having 3 to 12 carbon atoms or an aralkyl group having 7 to 18 carbon atoms, and one or both of $R_{29}$ and $R_{31}$ and $R_{30}$ and $R_{32}$ may form a saturated hydrocarbon ring or a saturated heterocycle.

**19.** The optical recording material according to any one of claims 1 to 18, wherein the metal-complex compound B inhibits crystallization of the organic dye compound A.

**20.** The optical recording material according to any one of claims 1 to 19, wherein the decomposition starting temperature of the metal-complex compound B is not higher than the decomposition starting temperature of the organic dye compound A.

**21.** An optical recording medium capable of recording or reading of information, wherein the medium has
a substrate and
a recording layer provided on the substrate and capable of recording or reading of the information by light irradiation, and
the recording layer contains an optical recording material according to any one of claims 1 to 20.

**22.** The optical recording medium according to claim 21, wherein the light is a laser beam with a wavelength of 350 nm to 530 nm.

FIG. 1

(a)

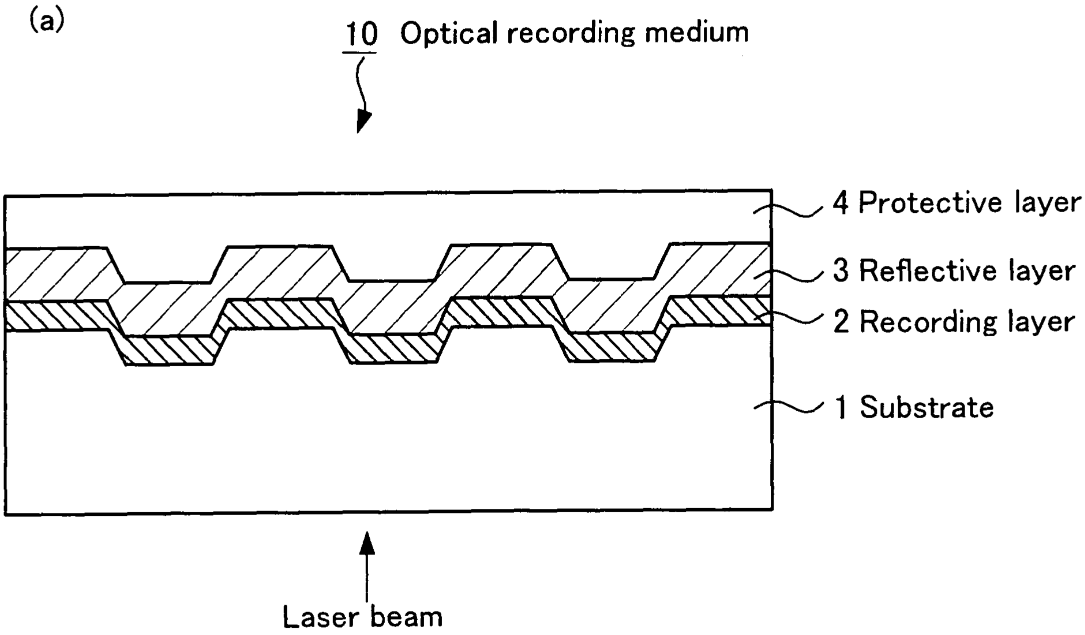
10 Optical recording medium
4 Protective layer
3 Reflective layer
2 Recording layer
1 Substrate
Laser beam

(b)

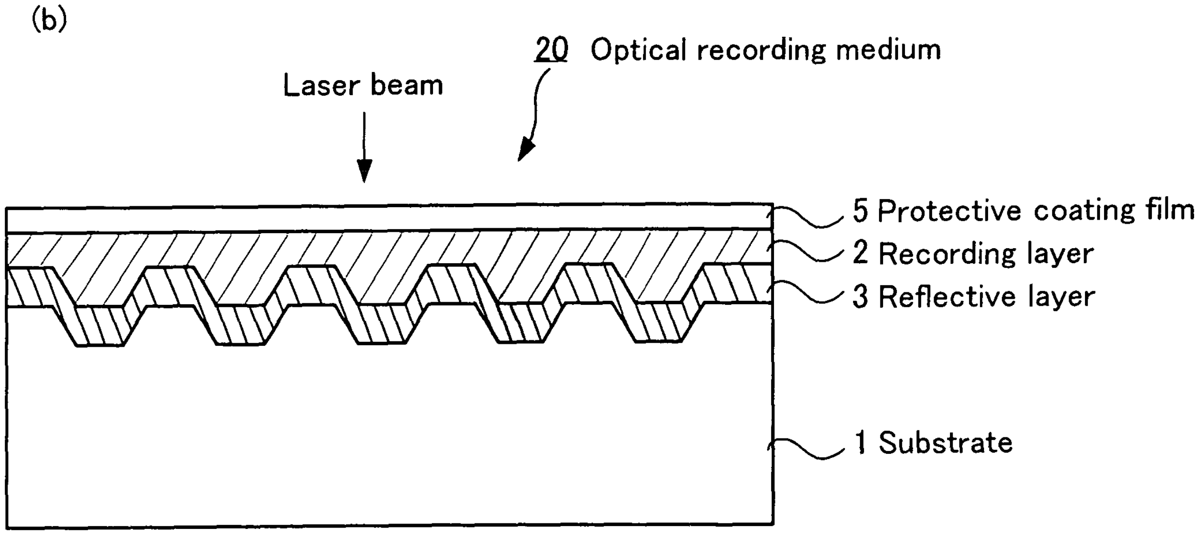
Laser beam
20 Optical recording medium
5 Protective coating film
2 Recording layer
3 Reflective layer
1 Substrate

FIG. 2

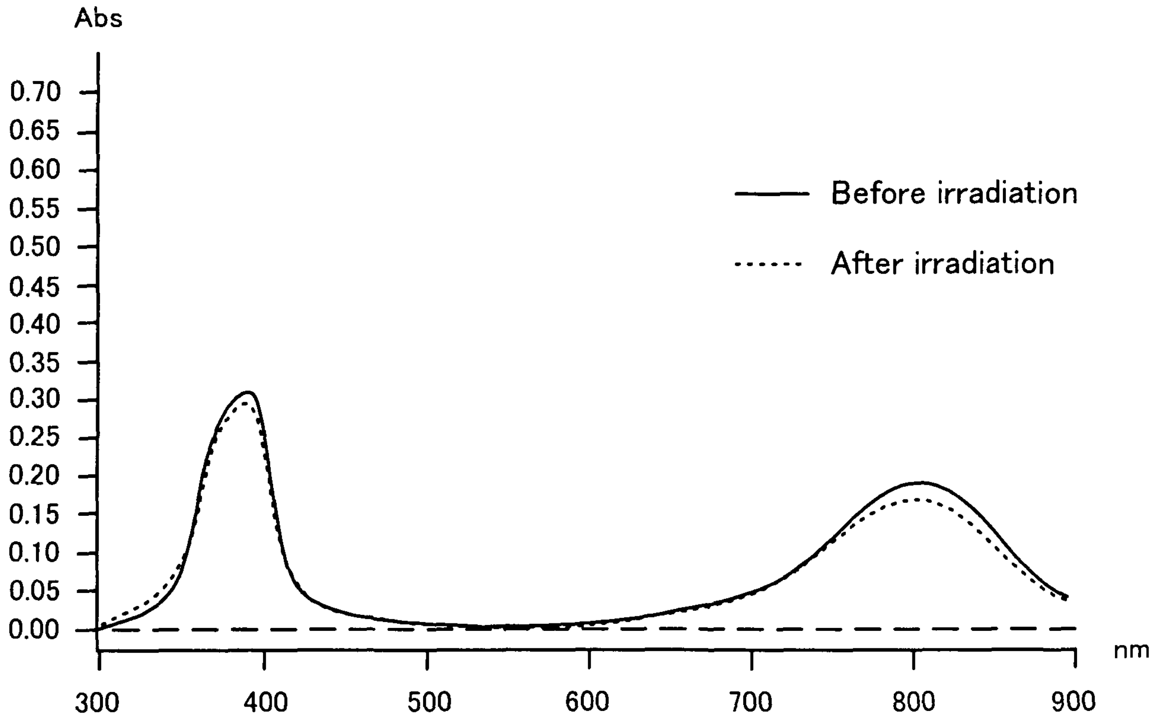
Abs
0.70
0.65
0.60
0.55
0.50
0.45
0.40
0.35
0.30
0.25
0.20
0.15
0.10
0.05
0.00
Before irradiation
After irradiation
nm
300
400
500
600
700
800
900

FIG. 3

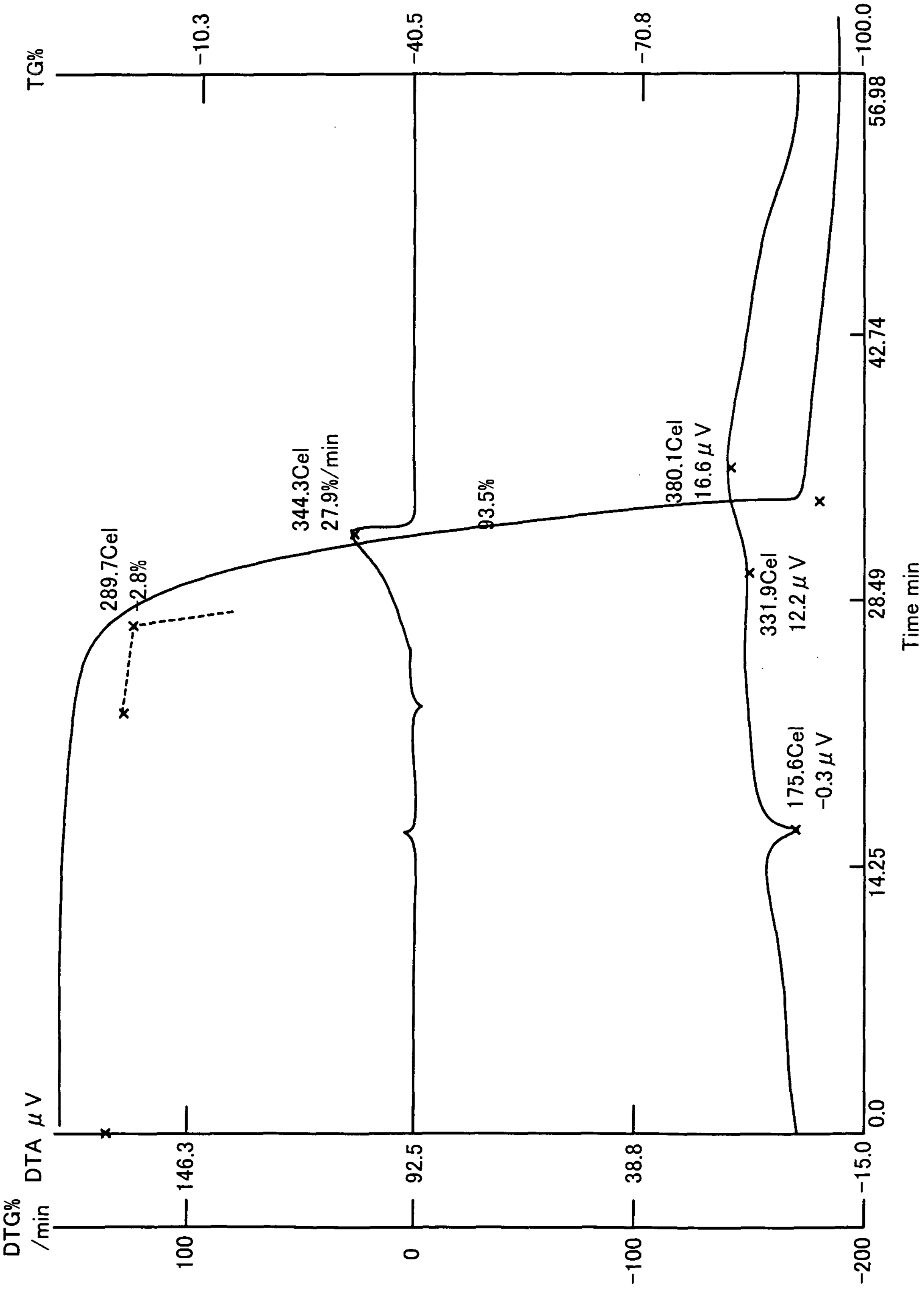
TG%
-10.3
-40.5
-70.8
-100.0
289.7Cel
-2.8%
344.3Cel
27.9%/min
93.5%
380.1Cel
16.6 μV
331.9Cel
12.2 μV
175.6Cel
-0.3 μV
56.98
42.74
28.49
14.25
0.0
Time min
DTA μV
146.3
92.5
38.8
-15.0
DTG%
/min
100
0
-100
-200

FIG. 4

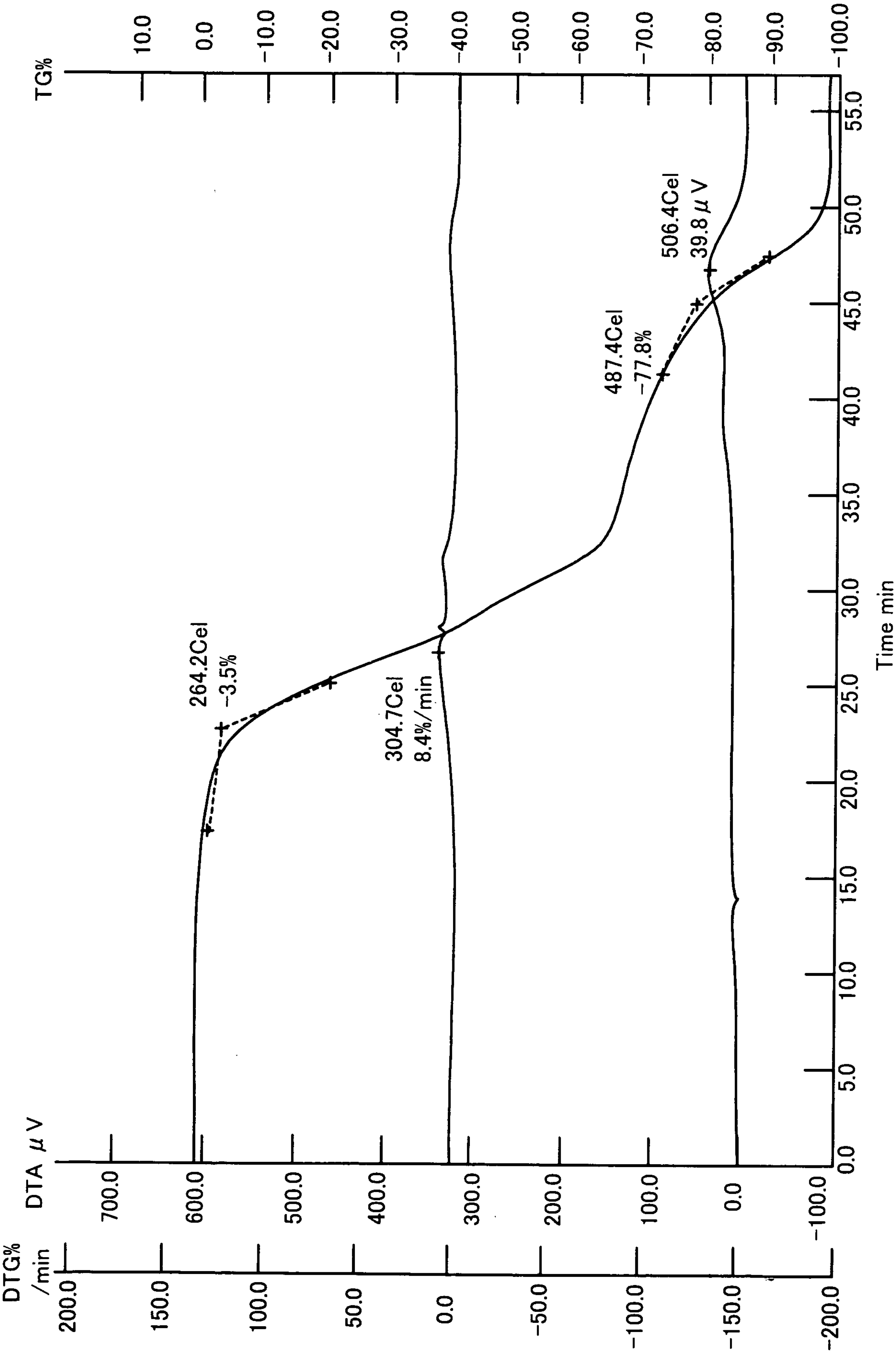
TG%
10.0
0.0
-10.0
-20.0
-30.0
-40.0
-50.0
-60.0
-70.0
-80.0
-90.0
-100.0
DTA μV
700.0
600.0
500.0
400.0
300.0
200.0
100.0
0.0
-100.0
DTG%/min
200.0
150.0
100.0
50.0
0.0
-50.0
-100.0
-150.0
-200.0
0.0
5.0
10.0
15.0
20.0
25.0
30.0
35.0
40.0
45.0
50.0
55.0
Time min
264.2Cel
-3.5%
304.7Cel
8.4%/min
487.4Cel
-77.8%
506.4Cel
39.8 μV

FIG. 5

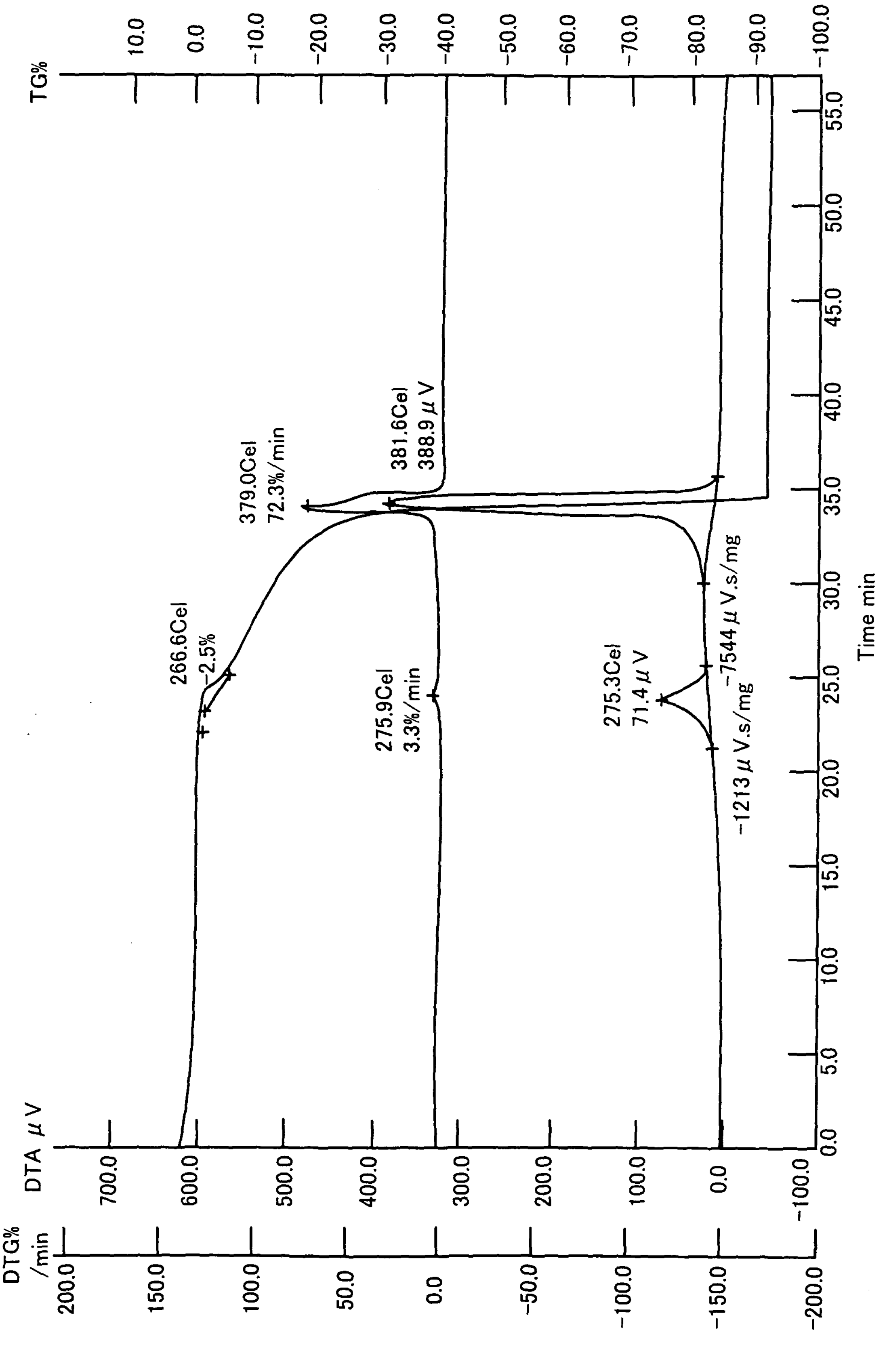
TG%
DTA μV
DTG% /min
Time min
379.0Cel
72.3%/min
381.6Cel
388.9 μV
266.6Cel
−2.5%
275.9Cel
3.3%/min
275.3Cel
71.4 μV
−7544 μV.s/mg
−1213 μV.s/mg

FIG. 6

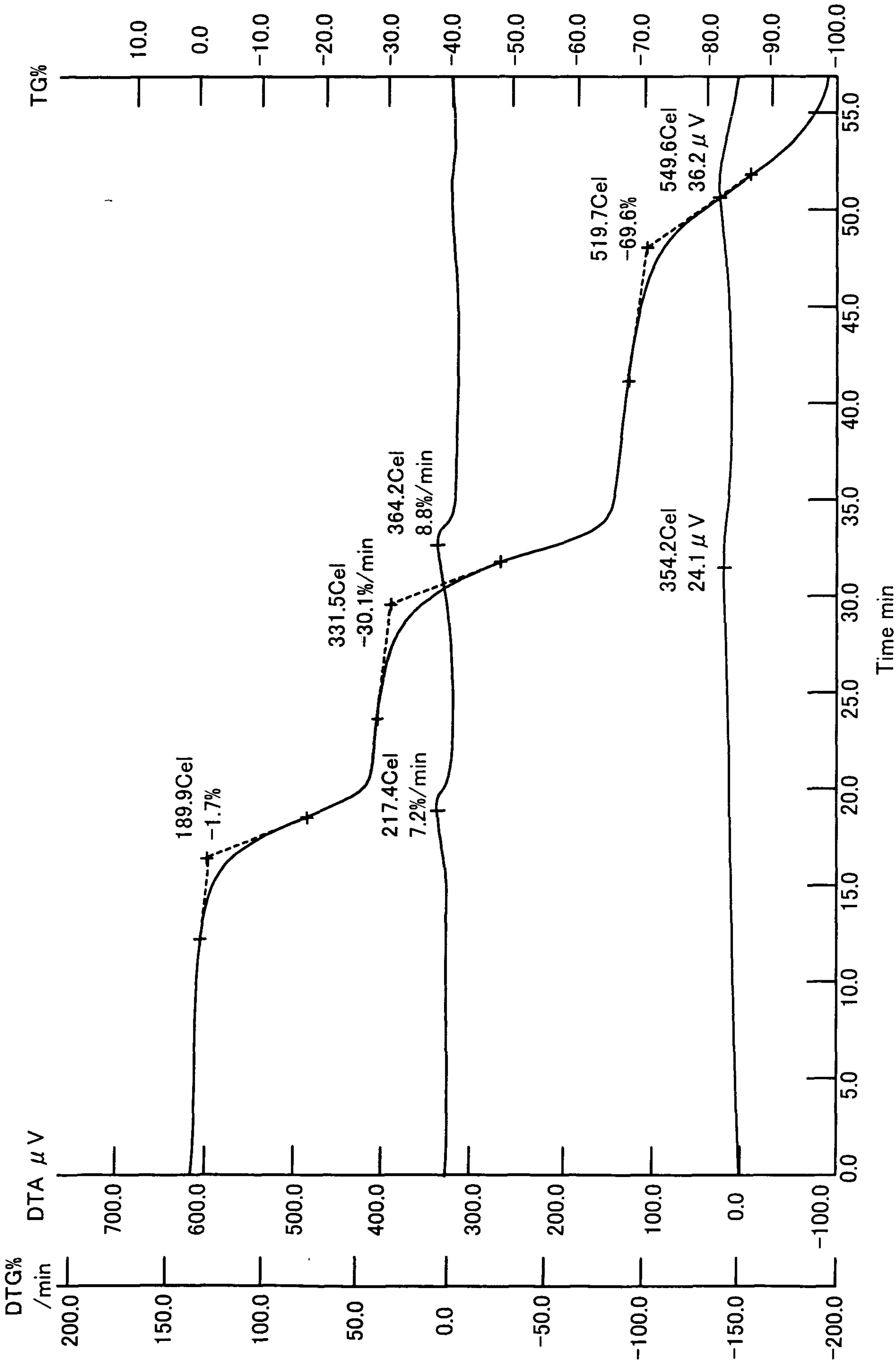
TG%
10.0
0.0
-10.0
-20.0
-30.0
-40.0
-50.0
-60.0
-70.0
-80.0
-90.0
-100.0
DTA μV
700.0
600.0
500.0
400.0
300.0
200.0
100.0
0.0
-100.0
DTG% /min
200.0
150.0
100.0
50.0
0.0
-50.0
-100.0
-150.0
-200.0
Time min
0.0
5.0
10.0
15.0
20.0
25.0
30.0
35.0
40.0
45.0
50.0
55.0
189.9Cel
-1.7%
217.4Cel
7.2%/min
331.5Cel
-30.1%/min
364.2Cel
8.8%/min
354.2Cel
24.1 μV
519.7Cel
-69.6%
549.6Cel
36.2 μV

FIG. 7

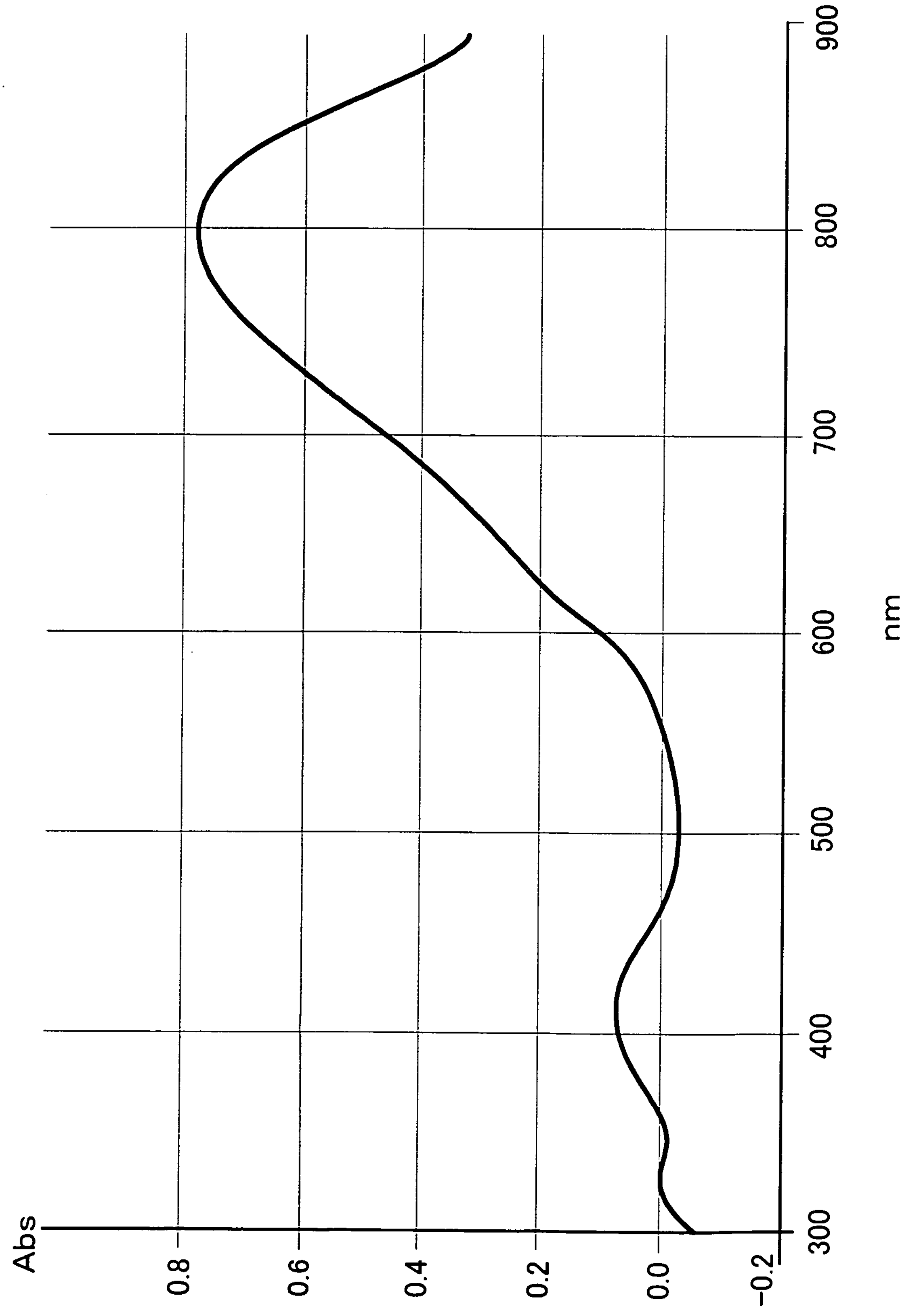

FIG. 8

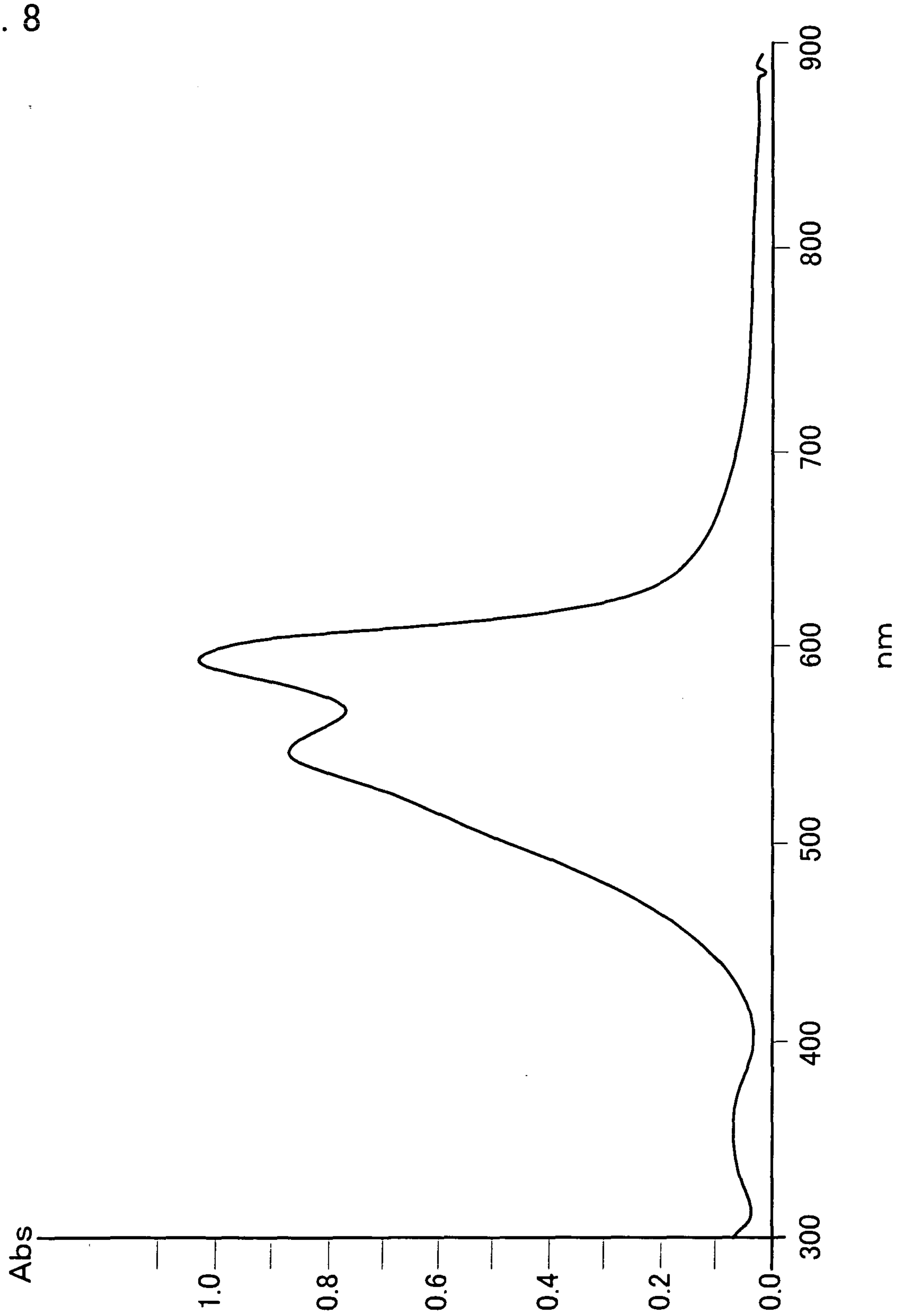

FIG. 9

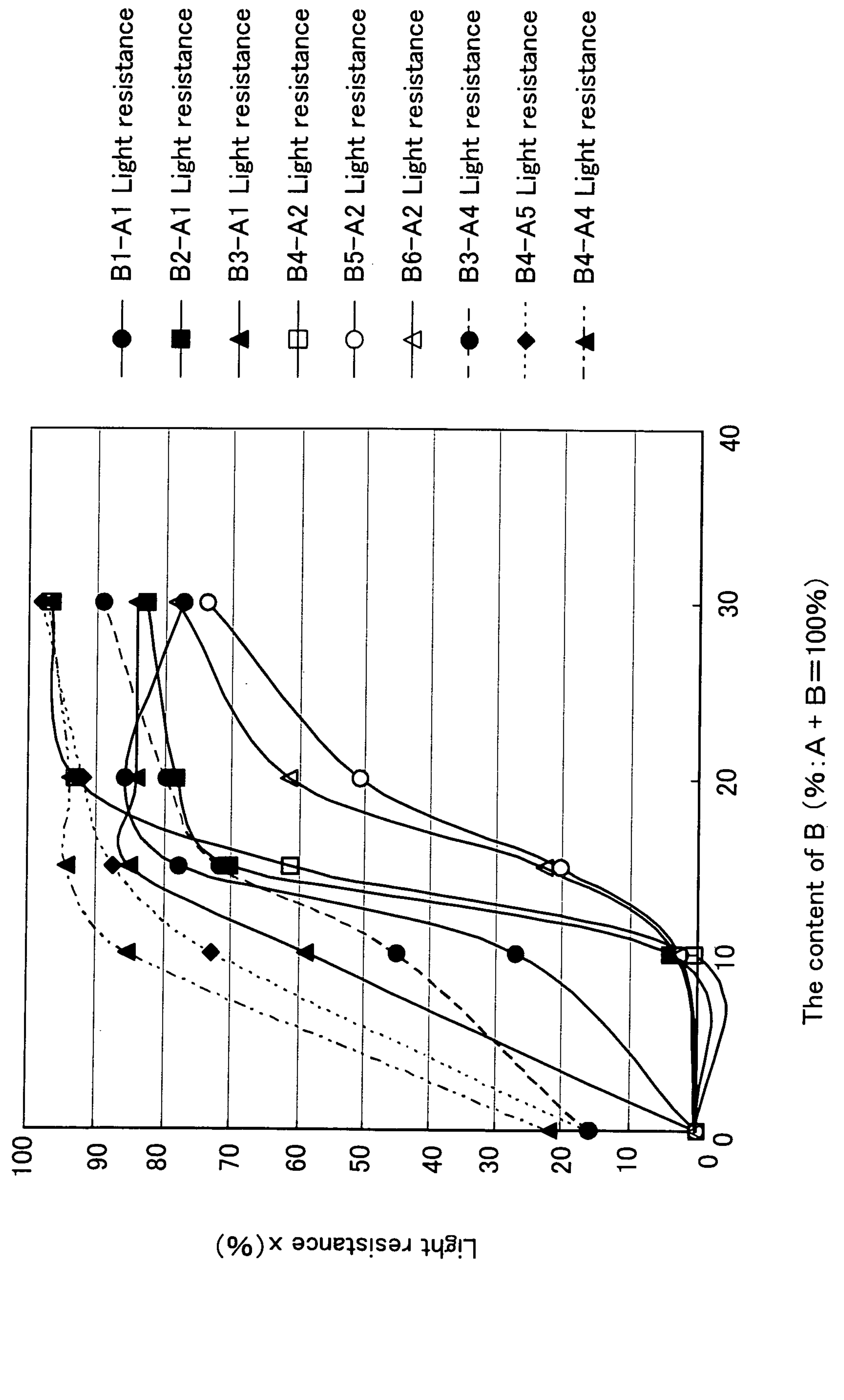
B1-A1 Light resistance
B2-A1 Light resistance
B3-A1 Light resistance
B4-A2 Light resistance
B5-A2 Light resistance
B6-A2 Light resistance
B3-A4 Light resistance
B4-A5 Light resistance
B4-A4 Light resistance
Light resistance x (%)
100
90
80
70
60
50
40
30
20
10
0
0
10
20
30
40
The content of B (%: A + B=100%)

FIG. 10

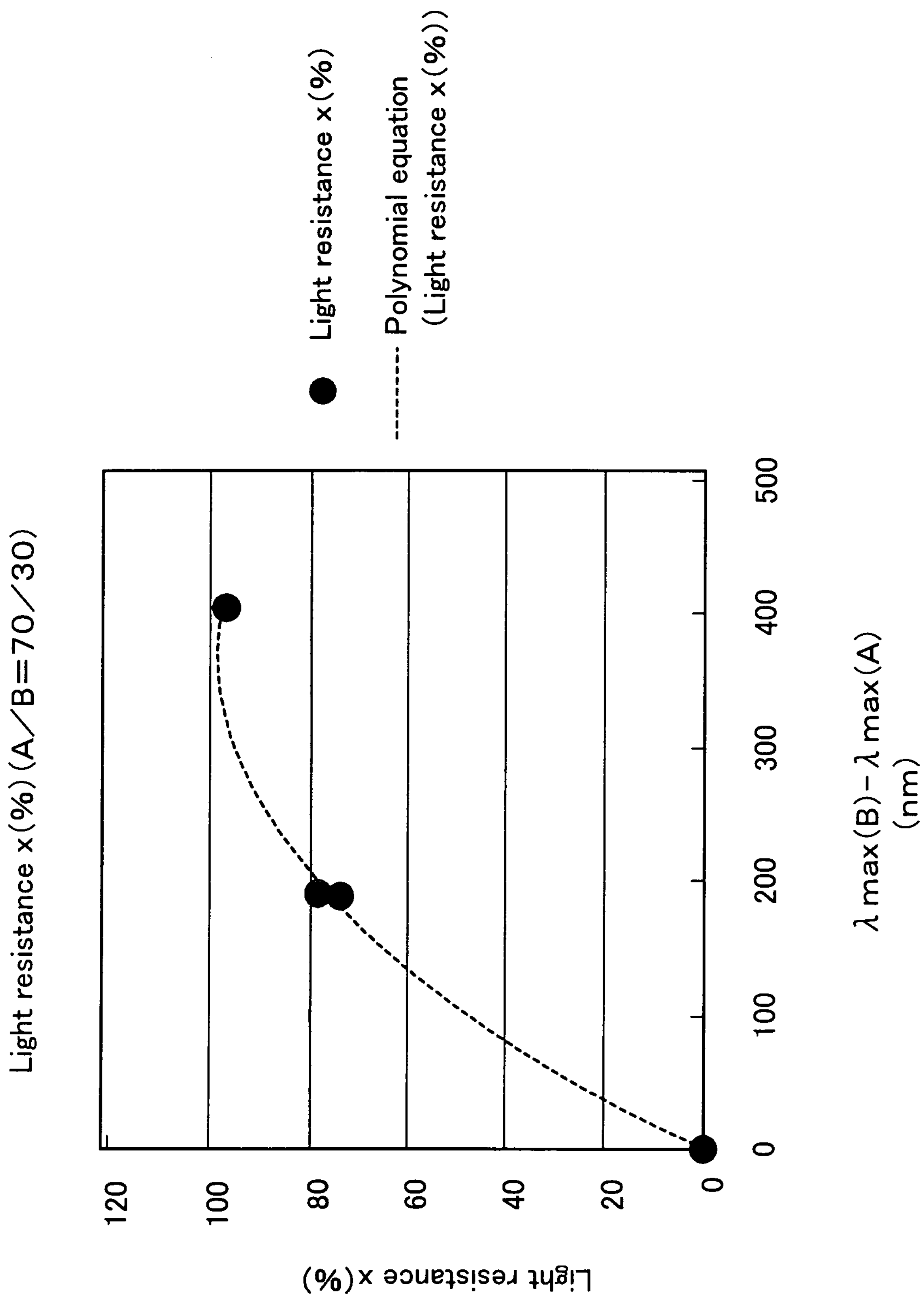
Light resistance x(%)
Polynomial equation
(Light resistance x(%))
Light resistance x(%) (A/B=70/30)
Light resistance x(%)
120
100
80
60
40
20
0
0
100
200
300
400
500
λ max(B) - λ max(A)
(nm)

**INTERNATIONAL SEARCH REPORT**

International application No. PCT/JP2005/003190

A. CLASSIFICATION OF SUBJECT MATTER
Int.Cl$^7$ B41M5/26, C09B67/22

According to International Patent Classification (IPC) or to both national classification and IPC

B. FIELDS SEARCHED

Minimum documentation searched (classification system followed by classification symbols)
Int.Cl$^7$ B41M5/26, C09B67/22, G11B7/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
CAPLUS(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | WO 2002/086878 A2 (Bayer AG.), 31 October, 2002 (31.10.02), Full text; all drawings (Family: none) | 8-22 |
| A | JP 2001-287466 A (Mitsubishi Chemical Corp.), 16 October, 2001 (16.10.01), Full text; all drawings (Family: none) | 8-22 |
| A | JP 2001-96918 A (TDK Corp.), 10 April, 2001 (10.04.01), Full text; all drawings (Family: none) | 8-22 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 March, 2005 (25.03.05) | 12 April, 2005 (12.04.05) |
| Name and mailing address of the ISA/ Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2005/003190

C (Continuation). DOCUMENTS CONSIDERED TO BE RELEVANT

| Category* | Citation of document, with indication, where appropriate, of the relevant passages | Relevant to claim No. |
|---|---|---|
| A | JP 2000-43423 A (Mitsubishi Chemical Corp.), 15 February, 2000 (15.02.00), Full text; all drawings (Family: none) | 8-22 |
| A | JP 2003-127542 A (Mitsubishi Chemical Corp.), 08 May, 2003 (08.05.03), Full text (Family: none) | 8-22 |

Form PCT/ISA/210 (continuation of second sheet) (January 2004)

## INTERNATIONAL SEARCH REPORT

International application No.
PCT/JP2005/003190

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☒ Claims Nos.: 1 to 7
because they relate to parts of the international application that do not comply with the prescribed requirements to such an extent that no meaningful international search can be carried out, specifically:
Claims 1 to 7 lack the disclosure in the meaning of PCT Article 5, and lack the support by the disclosure in the specification in the meaning of PCT Article 6.

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.
2. ☐ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest.
☐ No protest accompanied the payment of additional search fees.

Form PCT/ISA/210 (continuation of first sheet (2)) (January 2004)

**INTERNATIONAL SEARCH REPORT**

International application No.
PCT/JP2005/003190

<The subject to be searched>

Claim 1 relates to an optical recording material which comprises an organic compound (A) functioning as a coloring matter and a metal complex compound (B) exhibiting a wave length of maximum absorption (λmax) of 340 to 440 nm and a wave length of maximum absorption (λmax) of 500 to 900 nm, respectively, wherein the content of the organic coloring matter (A) is more than that of the metal complex compound (B) and thereby the material exhibits a desired characteristic of "a light resistance (x) of 30 % or more", and therefore, claim 1 includes a number of materials having many combinations of compounds (A) and compounds (B) and various contents thereof. However, only the materials having the combination of A component and B component in some contents wherein A component and B component are selected from A1 to A4 compounds and B1 to B6 compounds, respectively, described in examples (1 to 44) of the present specification are disclosed in the meaning of PCT Article 5, and accordingly, claim 1 lacks the support in the meaning of PCT Article 6.

Further, claims 2 to 22 are defined by referring to claim 1, and claims 8, and 16 to 18 and claims 9 to 15 define the skeleton structures of the organic compound (A) functioning as a coloring matter and of the metal complex compound (B). These structures are defined by the Markush form having many alternatives, and therefore, include a large number of compounds. On the other hand, only a slight part of the compounds described in the above claims 8 to 15 is disclosed in the meaning of PCT Article 5, and the above claims are not fully supported in the meaning of PCT Article 6.

As a result, the search has been carried out with respect to the scope being supported by and disclosed in the specification, that is, claims 8 to 18 and claims 19 to 22 being defined by referring to said claims (Actually, the search has been carried out with respect to the materials disclosed in examples in the specification).

Form PCT/ISA/210 (extra sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001096918 A
- JP 2001287466 A
- JP 2003127542 A
- JP 6329616 A
- JP 63057846 A
- JP 2001372199 A
- US 6815033 B
- JP 2001027599 A
- JP 2004052421 A